(19) Europäisches Patentamt
European Patent Office
Office européen des brevets

(11) Publication number: **0 116 324**
**A1**

(12) # EUROPEAN PATENT APPLICATION

(21) Application number: 84100820.4

(22) Date of filing: 26.01.84

(51) Int. Cl.³: G 10 L 1/04

(30) Priority: 28.01.83 US 461884

(43) Date of publication of application: 22.08.84 Bulletin 84/34

(84) Designated Contracting States: DE FR GB

(71) Applicant: TEXAS INSTRUMENTS INCORPORATED
13500 North Central Expressway
Dallas Texas 75265(US)

(72) Inventor: Schalk, Thomas B.
10140 Cimmaron Trail
Dallas Texas(US)

(72) Inventor: Doddington, George R.
910 St. Lukes Drive
Richardson Texas 75080(US)

(74) Representative: Leiser, Gottfried, Dipl.-Ing. et al,
Patentanwälte Prinz, Bunke & Partner Ernsberger Strasse 19
D-8000 München 60(DE)

(54) **Speaker-dependent connected speech word recognizer.**

(57) A cost-effective word recognizer. Each frame of spoken input is compared to a set of reference frames. The comparison is equivalent to embodying the reference frame as an LPC inverse filter, and is preferably done in the autocorrelation domain. To avoid the instability and computational difficulties which can be caused by a high-gain LPC inverse filter, a noise floor is introduced into each reference frame sample. Thus, for each input speech frame, a scalar measures its similarity to each of the vocabulary of reference frames.

To achieve connected word recognition based on this similarity measurement, a dynamic programming algorithm is used in which time warping to match a sample to a reference is in effect permitted, and in which matching is performed with unconstrained endpoints. Thus, the word boundary decisions are made on the basis of a local maximum in similarity, and, since no separate word division decision is required, the error which can be introduced by even the best preliminary decision as to word boundaries is avoided.

EP 0 116 324 A1

Croydon Printing Company Ltd.

BACKGROUND AND SUMMARY OF THE INVENTION

The present invention relates to an automatic method for recognizing words embedded in connected speech.

From the beginning of the development of machine speech recognition, algorithms for performing speech recognition have been paced by the relative ability to implement them. As digital computers began to be used for speech research, however, the possibility of nonreal-time processing allowed algorithm development to outpace the capabilities available for real-time implementation. The 1970's were characterized on the one hand by increasing algorithmic complexity and on the other by considerable effort dedicated toward implementing cost-effective algorithms. The consumers of speech recognition technology have been caught in an unsatisfacroty tradeoff between high performance speech recognition and low-cost implementation resulting in word recognition systems of marginal performance, excessive cost, and hence, dubious value.

In the past, microprocessors possessing sufficient computational power to process speech signals have been of special design -- "custom IC's". Examples of such processors are the "Speak & Spell" speech synthesizer chip and the various CCD and other analog speech analyzer chips. Now, however, another threshold of competency has been reached with the advent of programmable digital signal processors that are capable of performing a variety of functions including speech synthesis, word recognition, vocoding, voice verification, and even non-speech applications such as high-speed modems. The programmability of these signal processor chips is a very significant feature which overcomes two major problems with the develpment of special-purpose IC's for speech processing applications. First, the development cost for a special chip typically outweighs the market potential for such a chip (the "Speak & Spell" speech synthesizer was a notable exception), and second, lack of flexibility and "extensibility" of custom chips often minimize their useful lifetimes (especially considering the large development efforts required and the rapid development of speech processing technology). Furthermore, because of their programmability, a much broader market is created for programmable digital signal processor chips. Programmability has special importance for speech processing because of the relatively primitive stage of speech recognitiion algorithms. As the recognition technology is improved, some of these improvements may be incorporated through programming changes, rather than through system redefinition and redevelopment of integrated circuits.

It is now reasonable to plan for high-performance speech recognition systems based around these high-speed digital signal processor chips. These chips will perform all speech prcessing functions, including speech analysis and feature extraction, word recognition, pitch tracking, and speech synthesis using algorithms which have been identified as providing superior performance.

Overview

The four basic steps involved in the recognition of speech are: feature extraction, time registration, pattern similarity measurement, and decision strategy. An additional task which is required prior to speaker-dependent recognition is referred to as enrollment. This is the process by which speaker-dependent reference patterns are formed to be used during the recognition process. Current speech recognition systems use a variety of techniques to perform these basic steps. Each approach has its own performance and cost mix. The system described here is unique in that it provides robust performance in a connected word invironment with a a low-cost implementation.

The basic speech recognition strategy is to "scan" the incoming speech data continuously, perform dynamic programming, compute a similarity measure or "distance" between the utterance spoken and the stored reference patterson, and decide if the similarity measure is sufficiently small to declare that the utterance is recognized. A flow chart for this system could be made. The flow chart would show the implementation of the following major steps: autocorrelation, matched residual energy distance computation, dynamic programming time alignment, event detection, and high-level post-processing. Parameters which are used to measure the similarity between input utterances and stored templates are computed by the autocorrelation and residual energy algorithms. Dynamic programming time registration is used to determine the minimum distance between the word spoken and ech stored reference pattern. Word recognition candidates are hypothesized by locating valley points in the minimum dynamic programming distance taken across all candidates. The recognition candidates are passed to high-level decision logic which applies a threshold comparison test and next-closest error threshold test to determine if the utterance is to be declared.

Feature Extraction

A variety of signal processing techniques exist for representing a speech signal in terms of time varying parameters which are useful for speech recognition. Examples of these signal processing transformations are the direct spectral measurement (mediated either by a bank of bandpass filters or by a discrete Fourier transform), the cepstrum, and a set of suitable parameters of a linear predictive model (LPC) (Sec J. D. Markel and A. H. Gray, Jr., "Linear Prediction of Speech", Springer-Verlag, New York, (1976)).Selection of the parameters depends to a considerable degree on implementation considerations. However, it is generally agreed that the linear predictive modeling techniques have performance comparable to or better than other techniques for speaker-dependent recognition tasks. Furthermore, an LPC-based recognition algorithm is attractive because of its compatibility with LPC-based speech analysis and synthesis techniques. For these reasons, and considering implementation using a digital signal processor chip, we have developed a recognition algorithm that is LPC-based.

SIMILARITY MEASURE

After feature extractions, the next basic recognition step is the computation of a similarity measure between a stored reference and the time-normalized parameters extracted from the utterance. The basic similarity measuring technique used in this system is patterned after that of F. Itakura, "Minimum Preduction Residual Principle Applied to to Speech Recognition," IEEE Trans. Acoust., Speech, Signal Processing, ASSP-23, 67-72 (1975). In the Itakura approach, recognition is achieved by performing a frame-by-frame comparison of speech data using a normalized prediction residual. The LPC preduction residual energy is measured by passing the input speech signal (for the frame in question) through an all-zero inverse filter which represents the reference data. If the reference data matches the input data then the spectral notches in the inverse filter will match the spectral peaks in the input signal and a low-energy residual output will result. This residual energy is normalized by the residual energy which results when the inverse filter is optimally matched to the input data. The resulting normalized residual error is thus stabilized to be greater than 1. It typically takes on values of less than 1.2 for a good recognition match in speaker-dependent word recognition inironments.

The prediction residual is computed easily as the inner product of the autocorrelation function of the input with the autocorrelation function of the impulse response of the inverse filter. Normalization by the residual of the input signal is not so simple. In essence the autocorrelation matrix must be inverted and the traditional method of choice is Levinson's algorithm (N. Levinson, "The Wiener RMS (Root Mean Square) Error Criterion in Filter Design and Prediction", J. Math. Phys. 25, 261-278 (1947)). An intermediate computation to a magnitude which is less than 1 was demonstrated by LeRoux and Gueguen, see J. LeRoux and C.

Gueguan, "A Fixed Coefficient", IEEE Trans. Acoust., Speech, Signal Processing, ASSP-25, 257-259 (1977), and it is this variation of Levinson's algorithm that has been selected for implementation.

Dynamic Programming

The measurement of similarity between the incoming speech and stored vocabulary representations requires compensation for changes in the length and timing of the input utterance. Thus, it is desirable to time-ward the feature vectors obtained from the incoming data in some optimal sense prior to the comparison with stored feature vectors. The approach utilized in this system is a unique modification of the typical dynamic programming algorithm. In principle, the dynamic programming procedure is similar to that used by Itakura. Several modifications have been made to the basic Itakura approach, however. The Itakura approach assumes that the reference data is comprised of feature vector measurements obtained from frames of the speech signal whic have the same length as the frames utilized during the recognition analysis procedure. The frame period of the input analysis is usually 10 to 20 msec in order to capture dynamic speech events. The basic difference between the Itakura approach and the apprach used here is that reference data are represented only at every other input frame. This apporach has three advantages. First, it halves the amount of reference data that must be stored. Second, it halves the number of dynamic programming computations that must be performed. Third, it simplifies the dynamic programming computation by eliminating the memory element required in the basic Itakura technique.

There are two other significant modifications to the Itakura time registration technique as implemented in this recognition system. First, and most significant, the endpoints are unconstrained. That is, there is no requirement that the dynaimc optimization routine be constrained to start and end on specific input speech frames. This is a very significant simplification because it separates the high level word finding logic from the dynamic programming/recognition processing. Second, penalty errors are added, according to a nonlinear scale, when local warping occurs. Although a time warping factor of two may still be achieved, the algorithm prefers utterances with durations equal to the template duration.

Although processing time is substantially increased by not specifying the starting and ending input speech frames, there are two further reasons for having unconstrained endpoints. First, the system reliability is substantially improved by eliminating the requirement for endpoint determination. Accuracy requirements of 98% recognition or better would require the reliability of endpoint determination to be at least 98%. This is unrealistic, assuming that endpoint determination is based upon information that is not word specific. Second, the system is able to perform recognition of vocabulary words embedded in connected speech. By using the unconstrained endpoint dynamic programming algorithm, this system is able to perform recognition of vocabulary words which are not separated discretely in time. This is a distinct advantage over most other word recognition systems.

Decision Strategy

For each frame of input data, a sequence of scanning errors (similarity measures) are computed assuming that the current input frame corresponds to the last reference frame of each reference pattern. The best and next-best errors are stored along with the corresponding word indices. Before a word in the vocabulary can be hypothesized, a valley point in the scanning error minimum must be declared. The valley finding process is a key element in simplifying the decision strategy. A valley finding capability specially designed to satisfy word recognition applications is used. A local valley is defined as the minimum value in a subsequence of errors which begins and ends with values greater than or equal to this valley multiplied by a minimum peak-to-valley ratio. A word is recognized when five conditions are met:

1. A valley has been declared;

2. The dynamic programming scanning error (EVAL) is less than EMIN;

3. The next-best error is greater than EVAL+EDELT;

4. The prior hypothesis occurred at least TDELT time units ago where this time is related to the number of reference frames in the templates under consideration; and

5. The maximum energy during the utterance has exceeded EMAX;

where EMIN, EDELT, TDELT, and EMAX are specified constants. All accumulated hypotheses are output when "silence" has occurred for a specified amount of time (typically 300 msecs). A frame is considered silent when the frame energy is less than a specified fraction (typically .1) of the maximum energy in the utterance.

Enrollment

The purposes of enrollment is to create a set of feature vectors for each vocabulary word which are utilized in the similarity measurement process during recognition. The enrollment stategy is to provide energy-based definition of start/stop time for an initial reference pattern for each vocabulary word, and then to update these reference patterns through a predetermined set of word sequences that admits connected multiple word utterances.

In the initial enrollment mode, one pass is made through the vocabulary and initial reference patterns are formed based upon energy endpoints of each utterance. The actual start and stop times include some padding (typically one frame) to allow conservative, and therefore more reliable, energy endpoint detections. For every reference frame, the speech autocorrelation coefficients are stored. These sets of coefficients determine the inverse filters. The reference patterns are represented in terms of the autocorrelation function of the inverse filter coefficients. Reference frames that have weak energy levels are weighted less than those with energies above a specified percentage of the maximum energy of a given reference template. This energy weighting is necessary to maintain high performance under noisy operating conditions.

After the initial templates are formed, additional passes through the vocabulary are collected from the user and are used to update the initial templates. The averaging algorithm uses the time registration information obtained from dynamic programming to determine which input coefficients are to be averaged with those stored as reference. For each prompt, the input utterance is compared with the reference data stored for that word. If the utterance is recognized (i.e. the scanning error is less than a threshold), then the template is updated by averaging the appropriate input speech autocorrelation coefficients with those stored as reference. If the utterance is not recognized (i.e. a poor match occurs), then the utterance is reprompted. The above process may be repeated as many times as is desired. More weight in the averaging process is assigned to those templates which have been updated multiple times. For example, during the Nth update the reference template is assigned a weight of N/N+1 while the input data is assigned a weight of 1/N+1. This achieves equal weighting of all input tokens.

Experiments indicate that a significant improvement in performance is achieved by successive updating of each referene template. Substitution rate decreases substantially as the number of training tokens increases. For example, when five training tokens are used to update the initial template, the corresponding substitution error rate decreases by a factor of three over that measured with one training pass. Improved connected speech recognition performance is achieved by prompting for connected speech and updating the isolated templates as described above.

Thus, while an LPC-based system for speech recognition is preferable in many respects, prior art LPC systems have suffered from instabilities which can be caused by high-gain portions of the filter.

Thus, it is a further object of the present invention to provide a speech recognition system which is LPC-based and which is not subject to instability.

Thus, it is a further object of the present invention to provide a speech recognitin system which is LPC-based and in which the LPC inverse filter does not contain any very high gain portions.

It is a further object of the present invention to provide a system for recognizing words within connected natural speech.

It is a further object of the present invention to provide a speaker-dependent system for recognizing words within connected natural speech.

It is a further object of the present invention to provide a system which recognizes words within natural speech, at a very low rate of incorrect identification.

It is a further object of the present invention to provide a method for recognizing words within connected speech of a limited vocabulary.

BRIEF DESCRIPTION OF THE DRAWINGS

The present invention will be described with reference to the accompanying drawings, wherein:

Figures 1-4 show the speech processing board used in practicing the presently preferred embodiment of the invention.

DESCRIPTION OF THE PREFERRED EMBODIMENTS

The description of the present invention breaks fairly naturally into several parts: First, the basic raw distance measure, which is used to measure the dissimilarity between a particular frame of input speech and each frame of reference data, will be described. After that, the dynamic programming method which translates this raw frame-to-frame distance measure into a measure of the dissimalarity between frame sequences will be described. Next, the logic for word identification is described. The method by which the reference data for a particular speaker are prepared will then be described.

The basic raw distance measure is generally similar to that disclosed in such prior art as Itakura, "Minimum Prediction Residual Principle Applied to Speech Recognition," IEEE Transactions in Acoustics, Speech, and Signal Processing, volume 23, page 67 (1975), which is hereby incorporated by reference. However, the present invention contains significant modifications to prior art methods, and, in particular, contains one very fundamental innovation which permits LPC inverse filter methods to be practically workable, which they have not been previously. Briefly, the instability and sensitivity normally caused by the high-gain response portions of an LPC inverse filter are easily avoided, by introducing a noise floor into the LPC parameters corresponding to the reference frame data. This noise floor is introduced merely by multiplying the energy coefficient ($R_0$, the zero- order autocorrelation of the time series) by a small constant factor, e.g. 110%. This noise floor means that, in general, there will be no poles of the inverse filter near the unit circle, and therefore the response characteristic of the inverse filter will not contain any very high gain portions.

The dissimilarity measure itself will first be described, and then the method by which new reference data are prepared will be described.

In practicing the present invention, the audible speech is first translated into a meaningful input for the system. For example, a microphone within range of the audible speech is connected to a microphone preamplifier and to an analog-to-digital converter. In the presently preferred embodiment, the input stream is sampled 8000 times per second, to an accuracy of 13 bits. The stream of input data is then arbitrarily divided up into successive "frames", and, in the presently preferred embodiment, each frame as defined include 240 samples.

In one embodiment, the speech input frame is first transformed into a set of inverse filter coefficients $a_k$, as conventionally defined. See, e.g., Makhoul, "Linear Prediction: A Tutorial Review", proceedings of the IEEE, Volume 63, page 561 (1975), which is hereby incorporated by reference. That is, in the linear prediction model, the $a_k$'s are the predictor coefficients with which signal $S_k$ in a time series can be modeled as the sum of an input $u_k$ and a linear combination of past values $S_{k-n}$ in the series. That is:

$$s_n = -\sum_{k=1}^{p} a_k s_{n-k} + G u_n \qquad (1)$$

Since each input frame is 20 milliseconds long, each input frame contains a number of sampling points, and the sampling points within any one input frame can themselves be considered as a time series. In one embodiment, the actual derivation of the filter coefficients $a_k$ for the sample frame is as follows: First, the time-series autocorrelation values $R_i$ are computed as

$$R_i = \sum_n s_n s_{n+i} \, , \qquad (2)$$

where the summation is taken over the range of samples within the input frame. In this embodiment, 11 autocorrelation values are calculated ($R_0$-$R_{10}$). A recursive procedure is now used to derive the inverse filter coefficients as follows:

$$E_0 = R(0) \qquad (3)$$

$$k_i = -\left[R(i) + \sum_{j=1}^{i-1} a_j^{(i-1)} R(i-j)\right] \Big/ E_{i-1} \qquad (4)$$

$$\begin{cases} a_i^{(i)} = k_i \\ a_j^{(i)} = a_j^{(i-1)} + k_i a_{i-j}^{(i-1)} \, , \quad \text{for } 1 \le j \le i-1 \end{cases} \qquad (5)$$

$$E_i = (1 - k_i^2) E_{i-1} \qquad (6)$$

These equations are solved recursively for: i=1, 2,..., up to the model order p (p=1 in this case). The last iteration gives the final $a_k$ values.

The inverse filter coefficients are then transformed into a different set of autocorrelation coefficients $rho_k$, which is now derived from the inverse filter coefficients $a_k$ themselves. This set of further autocorrelation coefficients is defined as:

$$\rho_k = \sum_p a_p a_{p+k} , \qquad (7)$$

where the $a_i$ are defined to be zero for i greater than n. This formula defines a set of $rho_k$ for values of k ranging from zero to n-1. In the presently preferred embodiment, only 1 $a_k$'s are computed, and values of $rho_k$ are therefore computed for k ranging from zero to ten. However, the number of parameters computed is not at all critical. If fewer than 1 parameters are computed, accuracy is decreased, but this decrease may be completely acceptable, if, e.g., a small and carefully preselected vocabulary can be used. Conversely, a higher order linear predictive model can be used, in which case a larger number of parameters than 10 could be computed, although this would increase the computing load.

Thus, the foregoing steps have transformed the input frame into a filter-coefficient-autocorrelation vector. The basic dissimilarity measure is derived by forming the dot product of the time-series-autocorrelation vector ($R_i$) corresponding to the sample data with a filter-coefficient-autocorrelation vector ($rho_i$) corresponding to the reference data. This calculation measures the residual energy corresponding to the particular input frame and reference template being measured. In effect, the input is being filtered by an LPC inverse filter corresponding to the reference template. In addition, this dot product must be normalized by the self-residual energy of the sample frame. This self-residual energy E is defined as the dot product of the sample-time-series-autocorrelation vector with the sample-filter-coefficient-autocorrelation vector:

$$E = \sum_k \rho_k R_k \qquad (8)$$

Thus, the foregoing process produces a scalar dissimilarity measure $D_{N,j}$, comparing an input frame j with a reference frame N, which is defined as:

$$D_{N,j} = \frac{\sum_k R_k^{(j)} \rho_k^{(N)}}{\sum_i R_i^{(j)} \rho_i^{(j)}} \qquad (9)$$

where superscripts have been added to identify parameters derived from different frames.

It should be noted that the computation of filter coefficients $a_k$, which is significantly time-consuming, is performed only once for each input frame (to compute the residual energy E for normalization). The computation required of each reference frame is merely calculation of the dot product of the reference vector ($rho_k$) with the normalized sample vector ($R_k/E$).

The foregoing has described a method for calculation of the distance measure using Durbin's recursive procedure to calculate the $a_k$'s for the sample frame. However, the presently preferred embodiment uses a procedure due to Leroux-Gueguen. In this procedure, the normalized error energy E, as defined above in equation 8, (i.e. the self-residual energy of the input frame) is produced as a direct byproduct of the algorithm. The Leroux-Gueguen algorithm also produces the reflection coefficients (also referred to as partial correlation coefficients) $k_i$. In a further alternative embodiment of the invention, the

reflection coefficients $k_i$ are used instead of the filter-coefficient-autocorrelation parameters $rho_i$ to encode the reference template input. This alternative is attractive because the reflection coefficients $k_r$ are very stable parameters, and are insensitive to coding errors (quantization noise). In this alternative embodiment, the reflection coefficients stored in each reference template would be converted to inverse filter coefficients ($a_k$), and the inverse filter coefficients would be converted to filter-coefficient-autocorrelation parameters ($rho_k$'s), before each distance computation. Both the conversions of the reflection coefficients to filter coefficients, and the conversion of the filter coefficients to the $rho_k$'s, are fairly fast calculations. However, where processor time is a critical limitation, these additional calculations upon retrieval of every reference template do cause an additional burden on processor time, and therefore the preferred embodiment stores the reference templates in the autocorrelation domain, as $rho_k$ vectors.

The Leroux-Gueguen procedure is set forth, for example, in IEEE Transactions on Acoustic Speech and Signal Processing, page 257 (June 1977), which is hereby incorporated by reference. This algorithm is a recursive procedure, defined as follows:

$$k_h = -e_{h+1}^{(h)} / e_0^{(h)} \qquad (10)$$

$$e_0^{(h+1)} = e_0^{(h)} (1 - k_h^2) \qquad (11)$$

$$e_i^{(h+1)} = e_i^{(h)} + k_h e_{h+1-i}^{(h)} \quad \text{for all } i. \qquad (12)$$

This algorithm computes the reflection coefficients $k_i$ using as intermediaries impulse response estimates $e_k$ rather then the filter coefficients $a_k$.

Thus, the foregoing steps produce the scalar dissimilarity measure $D_{N,j}$ which shows the dissimilarity between an input frame j and a reference frame N. This dissimilarity measure is then transformed, through a dynamic programming procedure, into a minimal subsequence distance measure (scanning error) $E_{N,j}$, which is preferably defined as follows:

$$E_{Nj} = D_{Nj} + \min\left\{E_{N-1,j-1} + K,\ E_{N-1,j-2},\ E_{N-1,j-3} + \frac{K}{3},\ E_{N-1,j-4} + K\right\}. \qquad (13)$$

The quantity "K" is a constant which is used to impose a warping penalty. That is, the expected ratio of reference frames to sample frames is one reference frame to every two sample frames. However, if this is not in fact the actual spacing, then a penalty amount is added to the minimal subsequence distance for every reference in which the local ratio of input frames to reference frames is different from 2-1. Note that the penalty added where the ratio is locally 3-1 is much smaller than that imposed where the ratio is locally 4-1 or 1-1. Thus, only a modest penalty is added where the input speech is slightly slower than the reference speech rate (down to 1½ times as slow), but a substantially larger penalty is added if the input speech is faster than the reference speech, or is more than 1½ times as slow as the rate affected by the reference speech.

That is, where input frames are matched to reference frames at an average rate which is between 2-1 and 3-1, and where the time distribution of the input frame is the same as that of the reference frame, then the particular mappings of reference frame onto input frame within the optimal subsequence will vary between every other input frame and every third input frame, and the total speed-mismatch penalty will be a linear function of the speech rate mismatch. However, where the warping of the input sample is sufficiently nonlinear that, within the optimal subsequence, some adjacent pairs of the reference template sequence match either adjacent input frames or to input frames which are separated by three other input frames, an additional penalty will be added to the smooth penalty for linear warping. This additional penalty may be referred to as a nonlinear warping penalty, although it should be noted that nonlinear warping is penalized only if it causes some <u>local</u> portion of the reference-to-input mapping to be denser than 1-2 or sparser than 1-3. Thus, this warping penalty incorporates speech-rate information into the recognition process, but does not require large additional amounts of computation time.

The warping penalty, while preferred, is not strictly necessary for practicing the present invention. That is, the iterative statement of the dynamic programming measure can be restated as

$$E_{Nj} = D_{Nj} + \min_{k \in [1,4]} \{E_{N-1, j-k}\}, \qquad (14)$$

Alternatively, a larger than 2-to-1 warping factor can be permitted, or a sparser ratio of reference templates to input frames could be used, as desired. The warping penalties can accordingly be widely varied.

The dynamic programming algorithm itself, while discussed above with reference to the particular kind of scanning error measure used in the presently preferred embodiment, is also separately inventive, and can be used with a variety of other scanning error measures to achieve word recognition (speaker-dependent or -independent). For the reasons noted in the background of the invention section, the ability to perform connected speech word recognition without a preliminary decision as to word endpoints is highly desirable, and greatly reduces the total error using any scanning measure whatsoever.

As each utterance begins, an energy detector detects that an acoustic signal is now being input into the system. As each successive input frame j is used, a new scanning error $E_Nj$ is successively updated for each reference template sequence (word). A minimum of all the $E_Nj$'s is also tracked. That is:

$$EMIN_j = \min_N E_{Nj} \tag{14}$$

The behavior of EMIN itself is now tracked over a time period. That is, as a succession of input frames j is read in, the behavior of EMIN is observed. At various points in time, EMIN will achieve various global minima. When EMIN has achieved a global minimum and thereafter increased by a predetermined amount, the local minimum which was just reached can therefore be identified as a significant local miminum. When such a significant local minimum has been reached, if the particular value of the accumulated dynamic programming measure $E_nj$ which caused the low value of EMIN as local minimum is below a certain level, then a good word recognition match has been achieved. That is, for some $E_nj$, the sliding comparison of the input frame sequence to the reference template sequence for that word N has produced a subsequence match which is (1) good, and (2) better than the subsequence matches for subsequences which end one step earlier or one step later than the subsequence value at the input frame j. Therefore, the match between the sequence of input frames ending in frame j and the sequence of reference templates which corresponds to word N, is a good match, and a word recognition (word N at time j) can tentatively be identified.

One further post-processing step is added, to avoid inconsistent recognitions: while an utterance continues, the tentative word recognition identifications are merely stored and are not yet provided as output. When an energy measure of the acoustic signal being input into the system indicates that one utterance (e.g. one string of connected words) has ceased, the various word recognition hypotheses can be checked against each other. If any of the word recognition hypotheses are identified at points in time which are impossibly close together, the two hypotheses are mutually inconsistent, and one of them must be excluded. For example, if tentative hypotheses are provided which indicate that the word "for" has been recognized at time point j and that the word "forty" has been recognized 100 milliseconds later, the two recognitions cannot both be true, since 100 milliseconds is not time enough to speak the word "forty" in a fashion which would be recognizable. Therefore, as between these two hypotheses, the hypotheses with the better value of EMIN is accepted, and the other hypotheses is excluded. Formally, this is performed by associating with each recognition hypothesis a vocabulary code number and a time. From the vocabulary code number the length of the reference template, and therefore the minimum length of a fairly recognizable word, can be quickly looked up. Therefore, it is a trivial further step to review the accumulated hypotheses, and measure if the difference in time between any two hypotheses is less than the minimum time associated with the later one of the two hypotheses. If so, a possible collision has resulted, and a choice must be performed between the two hypotheses.

The speaker-dependency of the method described is due to the speaker-specific reference templates used. To recognize speech from another speaker, the appropriate template set is loaded in. The following code, also describes how the template set is customized for a particular speaker. In general, the vocabulary desired is displayed to the user, and the user is then asked to pronounce each item of the vocabulary. This provides the initial identification of a word (a character set) with a string of reference templates (which is equivalent to a string of phonemes). (As noted above, the energy of teh reference template is increased to provide a noise floor. This is preferably done in the autocorrelation domain ($R_0$ is multiplied by e.g., 1.1), but may be done in other equivalent ways.) Preferably the speaker is directed through the whole vocabulary several more time, so that better (averaged) values can be obtained for the reference templates. (This is referred to as the update mode.)

Enrollment

The purposes of enrollment is to create a set of feature vectors for each vocabulary word which are utilized in the similarity measurement process during recognition. The enrollment stategy is to provide energy-based definition of start/stop time for an initial reference pattern for each vocabulary word, and then to update these reference patterns through a predetermined set of word sequences that admits connected multiple word utterances.

In the initial enrollment mode, one pass is made through the vocabulary and initial reference patterns are formed based upon energy endpoints of each utterance. The actual start and stop times include some padding (typically one frame) to allow conservative, and therefore more reliable, energy endpoint detections. For every reference frame, the speech autocorrelation coefficients are stored. These sets of coefficients determine the inverse filters. The reference patterns are represented in terms of the autocorrelation function of the inverse filter coefficients. Reference frames that have weak energy levels are weighted less than those with energies above a specified percentage of the maximum energy of a given reference template. This energy weighting is necessary to maintain high performance under noisy operating conditions.

After the initial templates are formed, additional passes through the vocabulary are collected from the user and are used to update the initial templates. The averaging algorithm uses the time registration information obtained from dynamic programming to determine which input coefficients are to be averaged with those stored as reference. For each prompt, the input utterance is compared with the reference data stored for that word. If the utterance is recognized (i.e. the scanning error is less than a threshold), then the template is updated by averaging the appropriate input speech autocorrelation coefficients with those stored as reference. If the utterance is not recognized (i.e. a poor match occurs), then the utterance is reprompted. The above process may be repeated as many times as is desired. More weight in the averaging process is assigned to those templates which have been updated multiple times. For example, during the Nth update the reference template is assigned a weight of N/N+1 while the input data is assigned a weight of 1/N+1. This achieves equal weighting of all input tokens.

Experiments indicate that a significant improvement in performance is achieved by successive updating of each referene template. Substitution rate decreases substantially as the number of training tokens increases. For example, when five training tokens are used to update the initial template, the corresponding substitution error rate decreases by a factor of three over that measured with one training pass.

Improved connected speech recognition performance is achieved by prompting for connected speech and updating the isolated templates as described above.

One problem with voice recognition algorithms is that the reference data, as recorded under quiet conditions, may provide a poor match to words to be recognized, if the words to be recognized are input under noisy conditions. That is, the low-energy portions of the reference template can be swamped by the noise floor during word recognition input, so that a very poor match will be measured, in the low-energy portions of the reference template, between the reference template and the input. To avoid this problem, the presently preferred embodiment of the present invention uses energy weighting. High performance can be maintained under noisy conditions by merely weighting the reference data on a frame-by-frame basis as follows:

CONSIDER ONE REFERENCE PATTERN WITH N FRAMES IN IT:

1) Given N frames of reference data RMS energies: E(i), i=1,N.
2) Compute N weights: W(i)=min(1,E(i)/EMN, i=1,N where EMN is a specified fraction (say 12.5% is a typical value) of the maximum RMS energy of the reference data RMS energies. I.E., EMN = max(e(i),i=1,N)*(.125). The fraction can range from .0 (very quiet conditions) to 1.0 (very noisey).
3) For each input frame, multiply the computed distances $D_{nj}$ for each reference frame by the corresponding weight W(n). That is, the weak energy reference frames will tend to produce low errors after scaling.
4) Let S equal the sum of the weights W(i).
5) The output error from Dynamic Programming is computed by the ((RES - S)/S)*e**(.05*S), where RES is the sum of the SCALED normalized residuals (distances) for a given word.

That is $E_{nj}$ is preferably redefined on the dynamic programming procedure as

$$RES = E_{Nj} = D_{Nj} W(N) + \min_k \{E_{N-1, j-k}\}$$

and the global minimum $EMIN^*$ is also preferably redefined as

$$EMIN^* = \min_j (\min_N (E^*_{Nj}))$$

where

$$E^* \equiv ((RES - S)/S) * e^{(.05S)}$$

The word length weighting multiplier (.05) is purely empirical, but has been found to be advantageous.

Note that the factor e**(.05*S) tends to "favor" reference templates that are long. This improves performance and we refer to it as "word length weighting".

Where energy weighting is not used, the output error from dynamic programming would be computed as ((RES-N)/N)*e**(.05*N). That is, the scanning error $D_{Nj}$ is originally defined as always greater than one. For more convenient computation in the valley finding procedure, the scanning errors are in effect renormalized to a set of numbers greater than 0, rather than to a set of numbers greater than 1.

The speech recognition system described in this disclosure is based on a unique implementation of the previously described algorithms. The key element in this implementation consists of a single-board signal processor which provides the complete capability to perform the algorithms required for speaker-dependent recognition as well as initial vocabulary enrollment. This card, referred to as the Peripheral Speech Processor (PSP) incorporates functions which include: analog filtering, A/D and D/A conversion, signal processing/control, and data storage and buffering. A second board, which contains a general-purpose microprocessor is used for application-dependent control of the PSP and for providing interface to the user via a terminal and/or a host computer system. A companion board to the controller contains additional program memory for the general purpose microprocessor.

PSP HARDWARE DESCRIPTION

The peripheral speech processor,PSP,board is shown in detail in Figures 1-4. The major components of this card are: a signal processing chip, (SPC), which is preferably teh TMS320 from TI, an analog interface channel chip and a RAM module

The analog interface to the system is accomplished using a commercially available single-chip combination codec/filter (Advanced Microsystems, Inc. S33507). This component provides anti-alias filtering and analog-to-digital conversion for the input function and digital-to-analog conversion and reconstruction filtering for the output function. The codec chip uses serial representation of the digital data. A single shift register is used to convert the data to/from the parallel format required by the TMS320. Thus, at each sampling time, parallel data destined for the digital-to-analog converter is shifted into the codec chip as serial data from the analog-to-digital- converter is shifted from the codec. When a new sample is assembled in the shift register the TMS320 is interrupted and must read from and/or write to the register to acquire/output a sample and clear the interrupt reequest. The digital data to/from the codec is in mu-law coded form and is converted from/to a 13-bit linear representation by software in the TMS320.

The function of the SPC is to provide the high-speed arithmetic processing required to implement the recognition algorithms. It is capable of performing a basic instruction cycle in 200nsecs and can perform one multiply-accumulate operation in 400nsecs. The chip also contains 1536 words of mask-programmable program memory and 144 words of RAM which are used as a high-speed scratchpad. Communication between the SPC and other elements on the PSP card is accomplished via a 16-bit parallel data bus, 3 I/O address lines, and a single level interrupt. For example, transfer of digital data from the AIC to the SPC occurs after the AIC interrupts the SPC and the SPC executes an input data operation from the AIC. A 3-bit port address in the instruction code is used by the SPC to specify input from the AIC.

The principle function of the RAM module is to provide the storage required for the recognition templates. The size of this RAM is 16,384 17-bit words. The 17th bit is maintained to provide error detection. The RAM memory is accessed by the SPC via input and output instructions to specific PSP port addresses. A hardware address counter (external to the SPC) is used to address the RAM. This counter may be written to or read from by the SPC and will automatically increment or decrement following each RAM access depending on the state of an external mode bit preset by the SPC.

The remaining components on the PSP consist of miscellaneous SSI and MSI TTL devices which are required to implement functions that include iterface to an external controller and multi-level interrupt handling. Because the PSP is designed to be a peripheral to the external controller it must communicate with the controller in order to synchronize timing and exchange digital data. The controller interfaces with the PSP through the Contol and Input Data Registers located on the PSP card. It also receives status and data from the PSP via the Status and Output Data Registers. Communication in both directions is iterrupt-driven.

The single interrupt capability of the SPC is enhanced on the PSP card by utilizing an interrupt mask register, and interrupt return register and a priority encoder to implement a 4 level prioritized interrupt scheme. The SPC may make one or more interrupts by loading the interrupt mask register. If simultaneous interrupts occur which are not masked, only the highest priority interrupt is latched in the iterrupt return interrupt service routing. This firmware routine determines which interrupt has occured by reading the contents of the interrupt return register. The PSP interrupts listed in order of priority are: analog input buffer full, analog output buffer empty, RAM parity error, and controller command.

CONTROLLER HARDWARE DESCRIPTION

The controller, a TM990/101M-3, is a TMS9900 microcomputer board which includes up to 4K bytes of EPROM used for program and monitor permanent storage, two asynchronous serial I/O Ports used for interfacing to the system console and to the host computer, and a TMS9901 programmable systems interface device, used to interface to external interrupts and to time events. The controller board interfaces to other devices such as the PSP and the expansion memory via a parallel bus for address and data utilized to access slower non-time critical external conditions.

A companion memory card, the TM990/210 board, is used in this speech recognition system to provide increased storage space for controller program and data memory. This board contains 16K bytes of static RAM for temporary data storage and 32K bytes of EPROM for additional permanent program storage. The beginning addresses for both the RAM and EPROM are individually switch selectable in 8K byte increments.

PSP SOFTWARE DESCRIPTION

The approach to implementing this speech recognition system utilizes the PSP as a peripheral processor to the microprocessor controller. As such, the PSP is commanded by the controller to enter and exit various modes. Within each of these modes the PSP performs specific signal processing functions and transfers data and status to the controller. This section will describe each of these modes and will summarize key points about the implementation.

RECOGNITION MODE

The controller may command the PSP to enter the recognition mode after the enrollment template construction and update have been performed. The algorithms performed in this mode are: pre-emphasis, autocorrelation, LeRoux-Gueguen residual energy computation, distance computation, distance normalization, dynamic programming, and high-level post-processing.

The PSP maintains frame timing in the recognition mode by responding to interrupts from the AIC. The SPC is interrupted by the AIC every 16 samples (2ms). The 16 samples, previously converted from analog to digital by the AIC at an 8KHZ rate, are input, preemphasized and stored in a circular buffer in the PSP RAM by the SPC. The decision to store the preemphasized speech in an external buffer greatly simplified the resulting code and increased the program efficiency. An autocorrelation subroutine is executed once per frame (every 20 ms) and operates on a 240 point (30 ms) window of speech samples stored in the PSP RAM. A 20 point internal buffer is maintained to perform the autocorrelation computation. Ten points at a time are read into this buffer. The algorithm then updates 11 partial autocorrelation lags using those ten points and the previously computed partial lags. This technique minimizes the complexity of the inner loop of the autocorrelation. This code requires approximately 16% of each 20msec frame period to execute. The SPC routine which performs the inner loop of the autocorrelation is given below.

One-half frame of Hamming window coefficients are stored in a table in program memory and are used to window the buffered speech prior to extracting the 11 autocorrelation lags. These truncated to 16 bits.

The autocorrelation lags are then normalized and passed to the LeRoux-Gueguen subroutine. This subroutine performs the conversion of the autocorrelation lags to reflection coefficients and computes the energy of the resultant residual signal. The SPC subroutine code which performs the LeRoux-Gueguen algorithm is given below.

After 8 frames of autocorrelation parameters have been collected the SPC performs an inner product of the vector of autocorrelation lags for each input frame with the entire set of template data. These computations are used to derive the distance measures which are the basis of the recognition algorithm. The template data is stored in the PSP RAM in the form of feature vectors. Storage capability for a maximum of 800 40msec frames of feature vectors is provided. There are a number of feature vectors associated with each vocabulary word. Each vector corresponds to a 40 msec enterval of time and consists of 11 coefficients. These coefficients represent the autocorrelation of the impulse response of an LPC inverse filter constructed form an averaged 40msec interval of speech. The distance computation subroutine accesses the template data in the external PSP RAM by reading from a a specific port address and manipulating the address counter which points to elements within this RAM. Each set of 11 coefficients is input to the SPC, and an inner product is computed for each of the 8 input frames, normalized by the self-inverse energy, and checked for saturation. This "batch" processing technique is utilized to minimize the I/O required to shuffle template data to the SPC. Eight frames of autocorrelation coefficients are stored internally. The template data for each reference frame therefore need only be read in once for each 8 frame "batch" of input data. The SPC subroutine code which performs this distance computation is shown below. Since it must be executed for each frame of reference data, the execution time of the distance computation is thus vocabulary dependent.

The dynamic programming subroutine is executed to determine the optimal cumulative distance (cost) as a function of time between a set of autocorrelation lags assumed to end at the current frame time and a set of template vectors. An optimal distance between the input and each vocabulary word is computed assuming that the current frame time is the end of the utterance. The distance is computed by optimally mapping the stored reference data onto the appropriate input frames so that the minimum total distance is obtained. Rather than store the past sets of autocorrelation lag vectors to accomplish this optimal mapping, the SPC stores partial error arrays which are updated and contain equivalent information. These arrays are of dimension four by the number of reference frames per vocabulary word and these arrays are maintained by the SPC in PSP RAM.

The algorithm stategy is to compute the distance between eight current input frames and a specific reference frame and then to update the eight elements of the error array row which corresponds to that reference frame. The subroutine maintains an array of 11 errors computed by taking the sum of the latest input distance and the minimum of the four errors pointed to by a sliding window. At the beginning of the computation the four errors which correspond to the current frame are read in, the sum of the current computed distance is added to the minimum of these four, and the result is written over the oldest of the four stored errors. The window pointer to the four element array is shifted by one and the process continues for 8 frames. Finally the last three errors in the 11 element array and the latest computed error are saved in external ram. This approach maintains the optimum dynamic programming cost without specifically storing the optimum dynamic programming trajectory. The listing of the SPC code which performs this procedure is given below. The dynamic programming routine passes the set of errors referred to as scanning errors to the high-level post-processing subroutine.

The SPC post-processing subroutine processes the set of scanning errors computed by the dynamic programming subroutine to determine if an utterance is to be recognized and identified. It does this by tracking the minimum and next best minimum scanning errors each frame. A word hypothesis is generated whenever a local minimum in the scanning error sequence has been confirmed, the valley point error is less than a threshold EMAX, and the difference between the best and next best word errors is greater than some threshold EDELT. After an utterance has been declared (using an energy-based endpoint detector), each hypothesis is tested for to insure that enough time has elapsed between words. If the inter-word time separation is less than some threshold (function of the number of reference frames in the template), it is presumed that not enough time has elapsed between words and that only the best hypothesis should be retained. If the separation is greater than the threshold, the first word is declared to have been recognized and the second hypothesis is retained. Each stored hypothesis is tested in a similar fashion. If any hypotheses are found to be legal, the corresponding words are declared recognized by passing the number of recognized words to the controller via the Output Data Register. The controller then must access the external RAM on the PSP to determine which words have been declared.

ENROLLMENT MODE

The controller may command the PSSP to enter the enroll mode whenever a new set of templates is to be constructed. The algorithms performed in this mode include autocorrelation, endpoint detection, and autocorrelation coefficient storage. The objective of these algorithms is to mark the endpints of the initial utterance, extract the autocorrelation coefficients, and store these coefficients in the PSP RAM.

After being commanded by the controller to enter the enrollment mode, the PSP maintains frame timing and computes the autocorrelation coefficients in the same fashion as done during the recognition mode described previously. These coefficients are stored in a circular buffer in PSP RAM. The energy is also computed each frame and appended to each set of autocorrelation coefficients. When the energy exceeds a fixed threshold, the starting time is initialized. The utterance ending time is declared when the frame energy is less than the .125 times the maximum energy found in the utterance and the subsequent sixteen frames contain low energy. The beginning point of the utterance is then determined by searching backward in time from the initial starting frame until the frame energy falls below the same threshold. The search continues until the threshold exceeds the energy in each frame for all sixteen frames prior to the starting frame hypothesis. At this point in the algorithm, every other frame of autocorrelation coefficients is stored in the template. After storing the coefficients in the enrollment template, the PSP notifies the controller that the mode has terminated and the PSP returns to the idle mode. A listing of the SPC code which performs the endpoint detection is given below.

After trhe PSP returns to the idle mode, the controller may then command the PSP to return to the enrollment mode for enrollment on other vocabulary words or it may command the PSP to enter one of the other modes. Upon entering the recognition mode, the PSP will convert the entire template of autocorrelation coefficients to inverse filter autocorrelation coefficients. These coefficients may not be reconverted back to coefficients suitable for template updating.

UPDATE MODE

The controller may command the PSP to enter the update mode in order to modify the templates by multiple utternace of a vocabulary word. In this mode, the PSP actually performs processing similar to that performed during recognition. Frame timing is maintained by processing interrupts from the AIC. Autocorrelation, residual energy computation, and distance computation is performed as in the recognition mode. The distance measurement however is applied between the input and the single a priori specified vocabulary word. The dynamic programming algorithm is also similar to the algorithm performed during recognition mode. However, it is also necessary to temporarily store the input autocorrelation coefficients in a circular buffer and to retain information which describes how to progress through the set of stored coefficients along the optimum time-aligned trajectory. This information is stored in the form of back-pointers per 16-bit word in a circular buffer in PSP RAM. The dynamic programming algorithm outputs the scanning error for the single vocabulary word to the update post-processing routine. A listing of the SPC code which performs the dynamic programming including back-pointer storage is given below.

The post-processing required to support the update mode is identical to that required for recognition except that recognition is being performed on only one word. If this word is recognized, the algorithm attempts to time align the stored reference pattern with the appropriate input autocorrelation coefficients. During the time-alignment process the SPC uses the packed back-pointer information stored in the PSP RAM to update the templates. The SPC accesses the array of back-pointers to determine, at each reference frame i, whether it is necessary to progress backwards one, two, three, or four input frames to extract the set of coefficients to be averaged with the template reference frame i-1. The back-tracking continues with the SPC accessing the PSP RAM to obtain both the back-pointers and the corresponding input data for each reference frame in the template. For each reference frame, the time-aligned autocorrelation coefficients are linearly averaged with the associated set of reference frame autocorrelation coefficients and these coefficients are then restored to the PSP RAM. After all reference frames in the vocabulary have been averaged the number of updates corresponding to that word is incremented and this parameter is also stored in PSP RAM. A listing of the SPS code which performs the update time-alignment including packed back-pointer unpacking, back-tracking, and coefficient averaging is given below.

CONTROLLER SOFTWARE DESCRIPTION

The purpose of the controller in this recognition system is to provide the application-dependent control of the PSP card and to provide the interface to a user and an optional host computer.

The main controller routine consists of a command interpreter which calls various subroutines based on a single character input by the user. This command interpreter is written as a PASCAL "CASE" statement shown below:

```
CASE CHX OF
      'V' : VOCABULARY ;
      'E' : ENROLL ;
      'U' : UPDATE ;
      'S' : RESTOR_TEMPLATE ;
      'A' : ARCHIVE_TEMPLATE ;
      'R' : RECOGNIZE ;
      'M' : MODIFY_SYSTEM_PARAMETERS
      'H' : HELP ;
      OTHERWISE WRITELN(OUT1,' NOT A LEGAL COMMAND')
END;
```

It may be seen that the basic controller commands allow the user to perform all the necessary operations to build a vocabulary list, enroll on that vocabulary list, update selected vocabulary words in the list, save the enrollment template in the host computer, restore a saved template to the recognition system, and finally to enter the recognition mode using the selected vocabulary list.

In order to coordinate the words which are recognized by the PSP with the spelling of the word input by the user, the controller must maintain a list of vocabulary words which link the spelling of the word with a unique word identification code used by the PSP. This list, which also may contain a comment associated with each word, may be modified via various vocabulary list commands. This is one way that the user is able to alter the vocabulary of the recognition system - the vocabulary list is modified, and the new words are enrolled in the templates and optionally updated. The corresponding controller command to modify the vocabulary list is 'V' for vocabulary list operations. The vocabulary list operations available are listed below:

'A' : Add a word to the vocabulary list.

'D' : Delete a word from the list.

'R' : Re-spell a word or revise a comment.

'L' : List the current vocabulary words.

'H' : List vocabulary operation command description.

'Q' : Exit the vocabulary operations mode.

When a new vocabulary list is built, the controller dynamically allocates memory for each vocabulary word entered by the user. Each packet allocated contains enough memory space to hold the spelling of the vocabulary word, a comment (e.g., 'Trial 2, 7/15/81'), the number of reference frames, and the current number of updates since enrollment. The vocabulary list is constructed as a linked list with a head pointer for traversing the list from beginning to end, as in a search for a particular word, and a tail pointer for adding new words to the end.

After constructing a vocabulary list, it is necessary to build the templates which contain the specific parameters required during recognition. The enrollment mode is entered by issuing the command of 'E' (Enroll) to the controller. In enroll mode the user specifies the starting vocabulary word with which to begin the enrollment. The controller then commands the PSP to enter the enroll mode and supplies the PSP with the appropriate word identification code. The controller then prompts the user by writing the spelling of the word to the terminal. The PSP will interrupt the controller to indicate the 'operation complete' condition. It also outputs the number of frames enrolled for the current vocabulary word to the Output Data Register. The controller then prompts the user and PSP with the next sequential vocabulary word, and continues until the list is exhausted. After each word is enrolled, the user has the option to continue with the enrollment of the next word or another word, or to exit the enroll mode entirely.

The user may update the template associated with any vocabulary word previously enrolled by entering the 'U' (Update) command. After this command is entered, the controller enters the template update mode. This mode is very similar to the enroll mode in that the user specifies the word to update, the controller prompts the user and the PSP, and the controller then waits for the 'operation complete' signal upon a successful update. The processing performed by the PSP differs however as the templates are updated by first performing a recognition of the designated word. After a successful update, the user may then choose to continue with the update of the next word in the vocabulary list, or another word in the list, or to exit the update mode entirely.

A second manner in which the user may build the templates in the PSP is provided by a restore from host capability. When an 'S' (Restore) command is entered, the controller enters the restore mode. In this mode, the controller accesses the host computer amd reads a previously archived set of templates. Each template contains not only the speech-related recognition information but also contains the spelling of the word and the associated comment field. This information is read from the host computer one vocabulary word at a time and the controller constructs the vocabulary list and the PSP templates from the data. A word identification code is assigned to each vocabulary word as described previously. The user may also perform an archive command by entering 'A' which performs the inverse of this operation. The controller accesses the spelling and comment field for each vocabulary word in the current list and appends this information to the speech-related recognition data stored in the PSP RAM. This information is then written to the host computer one vocabulary word at a time for later use. Note that in each case, the controller moves data directly from/to the host computer to/from the PSP RAM and vocabulary list and only a minimal amount of controller RAM is required for buffering.

The system recognition mode is entered after the user enters the comman of 'R' (Recognize). The controller then waits for the PSP to recognize words which are spoken. Each time the PSP recognizes an utterance the controller is notified via an interrupt that a recognition has occured and the number of recognized words is passed from the PSP to the controller. The controller then access the PSP RAM to determine which words were recognized. When the recognition mode is entered, the template data created in the enroll and update modes is converted from autocorrelation coefficients to inverse filter autocorrelation coefficients. The latter set of coefficients is not suitable for updating. If further updating is anticipated, the user should archive teh autocorrelation coefficient templates to the host computer.

The user is able to modify various system parameters by entering the 'M' (modify). This allows the important parameters of the system to be altered depending on the environment. For example, it si possible to modify the noise floor utilized in constructing the vocabulary templates, or modify the peak-valley ratio used in the recognition post-processing. The controller indicates the current state of all the system parameters which may be modified after the user enters the modify mode.

The final command which the command interpreter recognizes is the 'H' (Help) command which prints a list of all the other available commands to the terminal.

In the presently preferred embodiment of the invention, the recognizable vocabulary is approximately 30 words (it may be slightly less or more, depending on the average length of words in the vocabulary.) However, this is not by any means a necessary limitation of the invention. The maximum vocabulary size is limited only by two factors: the number crunching power of the processor, and the similarity of the various reference template sequences one to another. If a very large recognition vocabulary is used (e.g. 3000 words) the greater similarity of the words will make errors more frequent. In addition, the greater number of operations which must be performed for each input frame will require greatly increased processing power, or non-real-time operation.

The energy weighting used in the presently preferred embodiment in fact effectively puts a somewhat greater weight on the voiced than on the unvoiced input frames, although this weighting depends in part on the high-frequency cut off imposed by the analog input channel.

However, among the numerous modifications and variations which can be used in practicing the present invention, one modification which can be introduced is additional attention to the voiced/unvoiced character of the speech being recognized. For example, if a voiced/unvoiced decision as to each input frame and as to each template of a reference template sequence is made, a local penalty can be imposed on the scanning error of any comparison between a voiced input frame and an unvoiced reference template, or vice versa.

As will be apparent to those skilled in the art, the present invention can also be modified and varied in a wide variety of other ways. The scope of the invention therefore includes numerous modifications and variations, and is not limited except as expressly recited in the following claims.

APPENDIX

The description of the present invention incorporates the attached appendix:

Appendix A provides a listing of computer programs relevant to the present invention as practiced by means of a VAX11/780. These programs are in FORTRAN. Of the programs listed, the following are particularly relevant to practice of the present invention: LWRDRIVER, which is the primary (driving) programming in this package of programs. The other programs relevant or referred to include LWRSETUP, ENROLL, RECOGNIZE, PVLWR, UPDATE, DPLWR, FRONTEND, REGRESS, SAVEREF, LOADREF, UTTERANCE, PROMPT, DELETE, OUTPUT, MATCH, AVERAGE, and LENGTH.

APPENDIX A

```
        Program LWR
!
!This program is intended to be a basic word recognition program to be used as
!a model for further research and for PSP code development.  The major elements
!of the program are enrollment, reference file updating, and recognition.  The
!enrollment strategy is to provide energy-based definition of start/stop times
!for an initial reference pattern for each vocabulary word, then to update
!these reference patterns through a predefined set of word sequences that
!admits connected multiple word utterances.
!
        parameter (lunvoc=8, maxwds=50, maxupd=100)
        character mode*1, UPPER_CASE*1, voc_file*40
        character wordout*80, utterance*40, new_file*80, cmd_input*80
        integer*2 error
        logical*2 ref_file_loaded
        logical*2 VTCHEK
        byte command
        data ref_file_loaded /.false./
        data lunit_base /60/
!
        logical*2 interactive
        common /VT_COMMAND_MODE/ interactive
        include 'lwrref.cmn'
        common /debug/idebug
!
        call LWR_SETUP
        call TO_ANSI
        call TINIT (1)
        call TBEL
        call TCS
        lunit = lunit_base
        go to 1
!
11      continue
        type *, 'error in attempt to read file'
!
1       continue
        if (interactive) then !get command from terminal
                call TNEWLN
                call TPUTST (' L.oad, E.nroll, U.pdate, A.dd, '//
        1               'C.hange_source, D.elete, R.ecognize or S.top: ')
                call TGETCH (mode)
                mode = UPPER_CASE(mode)
                call TNEWLN
        else !get command from file
                read (lunit, 90, end=91) cmd_input
90              format (a)
                lcmd = LENGTH (cmd_input)
                type *, 'command: ', cmd_input(:lcmd)
                mode =  UPPER_CASE (cmd_input)
                if (cmd_input(:1).eq.'@') then !go indirect to another file
                        lunit = lunit+1
                        OPEN (unit=lunit, name=cmd_input(2:), status='old',
        1                       readonly, shared)
                        mode = ' '
                else if (cmd_input.eq.' ') then !go back to previous file
91                      continue
                        type *, 'end of command file', lunit
                        CLOSE (lunit)
                        lunit = lunit-1
```

```
                        if (lunit.lt.lunit_base) STOP 'end of command file'
                        mode = ' '
                else !see if this record contains a legitimate data file
                        CLOSE (unit=17)
                        OPEN (unit=17, name=cmd_input, status='old',
        1                       recordtype='fixed', iostat=iostat, err=89)
                        CLOSE (unit=17) !ok, this is a data file
                        call AS_SINPUT_NEW (cmd_input, error)
                        if (error.eq.1) then
                                type *, 'new file: '//cmd_input(:lcmd)
        1                               //', mode = '//mode
                        else
                                type *, 'AS_SINPUT_NEW error', error, cmd_input
                        end if
89                      continue
                end if
        end if
!
        if (mode.eq.'O') then
                idebug = 2
                type *, 'debug mode is on'
        else if (mode.eq.'P') then
                idebug = 1
                type *, 'debug mode is on'
        else if (mode.eq.'N') then
                idebug = 0
                type *, 'debug mode is off'
!
        else if (mode.eq.'C') then !change input source
                if (interactive) then
                        call LIB$GET_INPUT (new_file, ' Input new source:  ')
                else
                        read (lunit, 90) new_file
                        lcmd = LENGTH (new_file)
                        type *, 'new file: ', new_file(:lcmd)
                end if
                call AS_SINPUT_NEW (new_file, error)
                if (error.ne.1) type *, 'AS_SINPUT_NEW error', error, new_file
!
        else if (mode.eq.'S') then !stop
                if (ref_file_loaded) then
                        if (interactive) then
                            call LIB$GET_INPUT (mode, ' Save reference data? ')
                        else
                            read (lunit, 90) mode
                            type *, 'save ref data? ', mode
                        end if
                        if (UPPER_CASE(mode).eq.'Y') then
                                do j=1,nwrds
                                        call SAVE_REF (j, error)
                                end do
                                ref_file_loaded = .false.
                        end if
                end if
                call AS_SIO_RLSE (error)
                if (error.ne.1) type *, 'AS_SIO_RLSE error', error
                call TBEL
                call TCS
                call TO80
                stop 'end of Limited Word Recognition simulation -- good bye'
```

```
!
      else if (mode.eq.'L') then !load reference data
            if (ref_file_loaded) then
                  if (interactive) then
                        call LIB$GET_INPUT
     1                        (mode, ' Save previous reference data? ')
                  else
                        read (lunit, 90) mode
                        type *, 'save prev ref data? ', mode
                  end if
                  if (UPPER_CASE(mode).eq.'Y') then
                        do j=1,nwrds
                              call SAVE_REF (j, error)
                        end do
                        ref_file_loaded = .false.
                  end if
            end if
            if (interactive) then
                  call LIB$GET_INPUT
     1                  (voc_file, ' vocabulary spec file: ', nchr)
            else
                  read (lunit, 90) voc_file
                  type *, 'load spec file: ', voc_file
            end if
            OPEN (unit=lunvoc, name=voc_file, type='old', err=11,
     1            readonly, shared)
            do j=1,maxwds !read enrollment data
                  read (lunvoc, *, err=11, end=50) words(j), wname(j)
                  call LOAD_REF (j, error)
                  if (error.ne.1) type *, 'LOAD_REF error', error
            end do
50          continue
            CLOSE (unit=lunvoc)
            ref_file_loaded = .true.
!
      else if (mode.eq.'E') then !perform initial enrollment
            if (ref_file_loaded) then
                  if (interactive) then
                        call LIB$GET_INPUT
     1                        (mode, ' Save previous reference data? ')
                  else
                        read (lunit, 90) mode
                        type *, 'save prev ref data? ', mode
                  end if
                  if (UPPER_CASE(mode).eq.'Y') then
                        do j=1,nwrds
                              call SAVE_REF (j, error)
                        end do
                        ref_file_loaded = .false.
                  end if
            end if
            if (interactive) then
               call LIB$GET_INPUT (voc_file, ' enrollment file: ', nchr)
            else
               read (lunit, 90) voc_file
               type *, 'enroll file: ', voc_file
            end if
            OPEN (unit=lunvoc, name=voc_file, type='old', err=11,
     1            readonly, shared)
            do j=1,maxwds !read enrollment data
```

```
                        read (lunvoc, *, err=11, end=10) words(j), wname(j)
                        jenr = j
                end do
10              continue
                CLOSE (unit=lunvoc)
                j = 1
                do while (j.le.jenr)
12                      continue
                        if (.not.interactive) then
                                read (lunit, 90) new_file
                                if (new_file(:1).eq.'@') then !go indirect
                                        type *, 'new cmd file: ', new_file
                                        lunit = lunit+1
                                        OPEN (unit=lunit, name=new_file(2:),
     1                                          status='old', readonly, shared)
                                        read (lunit, 90) new_file
                                end if
                                lcmd = LENGTH (new_file)
                                type *, 'new enroll file: ', new_file
                                call AS_SINPUT_NEW (new_file, error)
                                if (error.ne.1) then
                                        type *, 'AS_SINPUT_NEW error', error
                                        type *, 'enrollment aborted'
                                        go to 1
                                end if
                        end if
                        call ENROLL (j, error)
                        if (error.eq.-2) then !abort enrollment
                                type *, 'enrollment aborted'
                                go to 1
                        else if (error.eq.-1) then !retry enrollment
                                j = MAX(j-1,1)
                        else
                                if (error.ne.1) type *, 'ENROLL error', error
                                if (j.eq.jenr) then !allow retry on last word
                                        call VTON (command)
                                        type *, 'end of enrollment'
                                        call TIMED_WAIT (2.0)
                                        if (VTCHEK(dummy)) go to 12
                                        call VTOFF
                                end if
                                j = j+1
                        end if
                end do
                ref_file_loaded = .true.
                call TCS
!
        else if (mode.eq.'R') then !recognize
                if (.not.ref_file_loaded) then
                        if (interactive) then
                                call LIB$GET_INPUT
     1                                  (voc_file, ' vocabulary spec file: ')
                        else
                                read (lunit, 90) voc_file
                                type *, 'voc spec file: ', voc_file
                        end if
                        OPEN (unit=lunvoc, name=voc_file, type='old', err=11,
     1                          readonly, shared)
                        do j=1,maxwds !read enrollment data
                                read (lunvoc, *, err=11, end=20)
```

```
     1                              words(j), wname(j)
                            call LOAD_REF (j, error)
                            if (error.ne.1) type *, 'LOAD_REF error', error
                    end do
20                  continue
                    CLOSE (unit=lunvoc)
                    ref_file_loaded = .true.
            end if
129         continue
            if (.not.interactive) then
                    read (lunit, 90, end=91) new_file
                    if (new_file(:1).eq.'@') then !go indirect
                            type *, 'new cmd file: ', new_file
                            lunit = lunit+1
                            OPEN (unit=lunit, name=new_file(2:),
     1                              status='old', readonly, shared)
                            read (lunit, 90) new_file
                    end if
                    lcmd = LENGTH (new_file)
                    type *, 'new recognition file: ', new_file
                    call AS_SINPUT_NEW (new_file, error)
                    if (error.ne.1) then
                            type *, 'AS_SINPUT_NEW error', error
                            type *, 'recognition aborted'
                            go to 1
                    end if
            end if
            call RECOGNIZE (error)
            if (error.eq.29) then !EOF - read another file
                    go to 129
            else if (error.eq.-2) then !abort recognition
                    type *, 'recognition aborted'
                    go to 1
            else if (error.ne.1) then
                    type *, 'RECOGNIZE error', error
                    call TIMED_WAIT (2.0)
            end if
            call TCS
!
    else if (mode.eq.'A') then !add a word
            if (nwrds.eq.maxwds) then
                    type *, 'too many words', maxwds
                    go to 1
            end if
            istat=LIB$GET_INPUT (words(nwrds+1), ' spell the word: ', nchr)
            type *, istat
            if (nchr.eq.0) go to 1
            do j=1,nwrds !make sure that word is unique
                    if (words(nwrds+1).eq.words(j)) then
                            type *, 'word not unique', j
                            go to 1
                    end if
            end do
            call LIB$GET_INPUT (wname(nwrds+1), ' file name: ', nchr)
            do j=1,nwrds !make sure that word is unique
                    if (wname(nwrds+1).eq.wname(j)) then
                            type *, 'name not unique', j
                            go to 1
                    end if
            end do
```

```
              jenr = nwrds+1
13            continue
              call ENROLL (jenr, error)
              if (error.eq.-2) then !abort enrollment
                      type *, 'enrollment aborted'
                      go to 1
              end if
              if (error.ne.1) type *, 'ENROLL error', error
              call VTON (command) !allow retry
              type *, 'end of enrollment'
              call TIMED_WAIT (2.0)
              if (VTCHEK(dummy)) go to 13
              call VTOFF
              ref_file_loaded = .true.
              call TCS
!
        else if (mode.eq.'D') then !delete a word
              call LIB$GET_INPUT (wordout, ' spell word to delete: ', nchr)
              do j=1,nwrds
                      if (words(j).eq.wordout) then !delete word
                              call DELETE (j)
                              type *, words(j)(:LENGTH(words(j))), ' deleted'
                              go to 1
                      end if
              end do
              type *, 'word not in vocabulary'
!
        else if (mode.eq.'U') then !update
              if (.not.ref_file_loaded) then
                      if (interactive) then
                              call LIB$GET_INPUT
     1                                (voc_file, ' vocabulary spec file: ')
                      else
                              read (lunit, 90) voc_file
                              type *, 'update spec file: ', voc_file
                      end if
                      OPEN (unit=lunvoc, name=voc_file, type='old', err=11,
     1                        readonly, shared)
                      do j=1,maxwds !read enrollment data
                              read (lunvoc, *, err=11, end=30)
     1                                words(j), wname(j)
                              call LOAD_REF (j, error)
                              if (error.ne.1) type *, 'LOAD_REF error', error
                      end do
30                    continue
                      CLOSE (unit=lunvoc)
                      ref_file_loaded = .true.
              end if
              if (interactive) then
                      call LIB$GET_INPUT (voc_file, ' update file: ', nchr)
              else
                      read (lunit, 90) voc_file
                      type *, 'update file: ', voc_file
              end if
              OPEN (unit=lunvoc, name=voc_file, type='old', err=11,
     1                readonly, shared)
              read (lunvoc, *, err=11, end=40) utterance
              do j=1,maxupd !read update data
                      if (.not.interactive) then
                              read (lunit, 90) new_file
```

```
                        if (new_file(:1).eq.'@') then !go indirect
                                type *, 'new cmd file: ', new_file
                                lunit = lunit+1
                                OPEN (unit=lunit, name=new_file(2:),
1                                       status='old', readonly, shared)
                                read (lunit, 90) new_file
                        end if
                        lcmd = LENGTH (new_file)
                        type *, 'new update file: ', new_file
                        call AS_SINPUT_NEW (new_file, error)
                        if (error.ne.1) then
                                type *, 'AS_SINPUT_NEW error', error
                                type *, 'update aborted'
                                go to 40
                        end if
                end if
                call UPDATE (utterance, error)
                if (error.eq.-2) then
                        type *, 'UPDATE error', error, 'update aborted'
                        go to 40
                else if (error.ne.1) then
                        type *, 'UPDATE error', error
                        call TIMED_WAIT (2.0)
                        read (lunvoc, *, err=11, end=40) utterance
                else
                        read (lunvoc, *, err=11, end=40) utterance
                end if
        end do
40      continue
        CLOSE (unit=lunvoc)
        call TCS
else if (mode.eq.'W') then !display the current vocab
        do j=1,nwrds
                type *, words(j)
        end do
end if
go to 1
end
```

```
        subroutine LWR_SETUP
!
        integer*2 error
!
!Analysis and I/O parameters:
!
        logical*2 interactive, UTTERANCE
        common /VT_COMMAND_MODE/ interactive
        include 'lwrprm.cmn'
!
!       data adchnl, adsmpd, adordr, adprem, adfmpd, adwdln
!       1       /0, 100, 12, 1.0, 15.0, 30.0/
        data dachnl, dasmpd, daordr, dademp, dafmpd
        1       /0, 100, 12, 0.9375, 10.0/
!       data regr_ordr /1/ !order of self-inverse filter used in preprocessing
!       data noise_floor /0.1/ !the proportion by which rho(0) is increased
!       data tpadstart /30.0/ !msec of pre-word speech included in ref data
!       data tpadstop /30.0/ !msec of post-word speech included in ref data
!       tmask_for !forward-masking time constant
!       tmask_bck !backward-masking time constant
!       data eword_min /20.0/ !minimum RMS energy required to signal a word
!       data end_level /0.125/ !proportional end-word threshold rel. to max egy
!       data estop_min !minimum RMS energy required to signal word boundaries
!       data tgapmin /300.0/ !minimum time required between utterances (msec)
!       data dpdtwt /0.2/ !DP additive error weighting for time deviations
!       data pvr /1.5/ !minimum peak/valley ratio for scanning error
!       data rec_wt_factor /0.03/ !weighting factor to favor longer words
        data rec_wt0 /1E3/ !scale factor for expanding (error-1)
!       data errmax /1.250/ !maximum allowable recognition error
!       data derrmin /0.025/ !minimum difference between best and next-best err
!       data alpha_min /0.03125/ !minimum weight to use in updating
!       data compmax /0.4/ !maximum time compression for between-word separatior
!       maxwdputt !maximum words per utterance
!       maxseflush !maximum scanning error to flush as valley point at end_word
!
        data lunit /60/
        character input_file*80, input_source*8
!
        call TRNLOG ('SYS$COMMAND', input_source, lensrc, error)
        if (INDEX(input_source,'T').gt.0) then
                interactive = .true.
        else
                interactive = .false.
        end if
        OPEN (unit=5, status='old', readonly, shared)
        READ (5,99) input_file
99      format (a)
        READ (5,*) adsmpd, adprem, adordr, adfmpd, adwdln, noise_floor,
        1       regr_ordr, tmask_for, tmask_bck, eword_min, end_level,
        1       estop_min, tgapmin, tpadstart, tpadstop, alpha_min, pvr,
        1       errmax, derrmin, rec_wt_factor, egywt, dpdtwt, maxseflush,
        1       compmax, maxwdputt
        CLOSE (unit=5)
        erordr = adordr !adordr-regr_ordr -- old regression method
        erecmax = (errmax-1.0)*rec_wt0
        drecmin = derrmin*rec_wt0
!
        if (input_file(:1).eq.'@') input_file = input_file(2:)
        len = LENGTH (input_file)
        DECODE (len, 100, input_file, err=90) line_in
```

```
100     format (i<len>)
90      continue
        if (line_in.lt.1 .or. line_in.gt.24) then !see if input_file exists
                OPEN (unit=lunit, status='old', name=input_file)
                CLOSE (unit=lunit) !yes, file exists if we're still alive
                OPEN (unit=lunit, status='old', name=input_file, readonly,
        1               shared, recordtype='variable', err=91) !command file?
                interactive = .false.
                type 200, input_file,
        1           adsmpd, adprem, adordr, adfmpd, adwdln, noise_floor,
        1           regr_ordr, tmask_for, tmask_bck, eword_min, end_level,
        1           estop_min, tgapmin, tpadstart, tpadstop, alpha_min, pvr,
        1           errmax, derrmin, rec_wt_factor, egywt, dpdtwt, maxseflush,
        1           compmax, maxwdputt
                write (6,200) input_file,
        1           adsmpd, adprem, adordr, adfmpd, adwdln, noise_floor,
        1           regr_ordr, tmask_for, tmask_bck, eword_min, end_level,
        1           estop_min, tgapmin, tpadstart, tpadstop, alpha_min, pvr,
        1           errmax, derrmin, rec_wt_factor, egywt, dpdtwt, maxseflush,
        1           compmax, maxwdputt
                input_file = '*'
        else if (.not.interactive) then
                STOP 'ERROR -- Real-time audio input disallowed in batch'
        end if
91      continue
!
        call UTTERANCE (0, xxx, xxx, xxx) !initialize utterance detector
        call AS_SIO_INIT (input_file, .true., adsmpd, adordr, adprem, adfmpd,
        1       adwdln, erordr, .false., dasmpd, daordr, dademp, dafmpd, error)
        if (error.ne.1) then
                type *, 'AS_SIO_INIT error', error
                call AS_SIO_RLSE (error)
                stop
        end if
        return
!
200     format ('                 LIMITED WORD RECOGNITION PARAMETER MENU'//
        1       '                      INPUT AND ANALYSIS PARAMETERS'//
        1       ' input source:  ', a60//
        1       ' A/D ... sample period (in usec):', i5/
        1       '        preemphasis constant:     ', f6.4//
        1       ' Analysis ... model order:                    ', i2/
        1       ' frame period (in msec):                      ', f5.1/
        1       ' window length (in msec):                     ', f5.1/
        1       ' noise floor:                                 ', f5.3/
        1       ' regression order:                            ', i2/
        1       ' forward-masking time constant (in msec):     ', f5.1/
        1       ' backward-masking time constant (in msec):    ', f5.1//
        1       '                     CONTROL AND DECISION PARAMETERS'//
        1' Utterance detection--word detection threshold (RMS energy):', f6.1/
        1'      energy ratio, peak to beginning/end:         ', f6.4/
        1'      minimum energy threshold for word ends:      ', f6.1/
        1'      minimum time between utterances (in msec):   ', f6.1//
        1' Enrollment--time included before beg of word (in msec):',  f5.1/
        1'      time included after end of word (in msec):         ', f5.1/
        1'      minimum weight to use in updating:                 ', f6.4//
        1' Recognition--minimum peak/valley ratio for scanning error: ', f6.3/
        1'      maximum allowable recognition error:                  ', f6.4/
        1'      minimum difference between best and next-best error:  ', f6.4/
        1'      weighting factor used to favor longer words:          ', f6.4/
```

```
1'      energy weighting factor:                                  ', f6.4/
1'      DP additive error weighting for time deviations:          ', f6.4/
1'      maximum scanning error to flush                           ', f6.4/
1'      maximum time compression scale between words:             ', f6.4/
1'      maximum number of words per utterance:                    ', i3)
end
```

```
        subroutine ENROLL (jwrd, error)
!
        integer*2 jwd, error
!
        include 'lwrref.cmn'
        include 'lwrprm.cmn'
        include 'lwrdat.cmn'
D       common /debug/idebug
!
        logical*2 interactive
        common /VT_COMMAND_MODE/ interactive
        real*4 rhow(0:maxorder)
        logical*2 UTTERANCE, VTCHEK
        byte command
!
!start data input
        call TCS
        call VTON (command)
        call AS_SINPUT_ON (error)
        if (error.ne.1) then
                type *, 'AS_SINPUT_ON error', error
                call AS_SINPUT_OFF (ierror)
                return
        end if
!
!prompt the utterance to be spoken
        call PROMPT (words(jwrd))
!
!capture the utterance and determine start/stop times
        j = 1
        do while (.not.UTTERANCE(j, Senergy(j), jstart, jstop))
                j = 1+MOD(j, maxbuf)
                jrhopp = 1+(1+erordr)*(j-1)
                jrho = 1+(1+adordr)*(j-1)
                call AS_FRONT_END (Senergy(j), rhopp(jrhopp), rho(jrho), error)
                if (error.ne.1) then
                        type *, 'AS_FRONT_END error', error
                        call AS_SINPUT_OFF (ierror)
                        return
                end if
                if (VTCHEK(dummy)) then
                        if (command.eq.'q' .or. command.eq.'Q') then
                                call AS_SINPUT_OFF (ierror)
                                error = -2
                                return
                        else if (command.eq.'x' .or. command.eq.'X') then
                                call AS_SINPUT_OFF (ierror)
                                error = -1
                                return
                        end if
                        call VTON (command)
                end if
        end do
        call VTOFF
        call AS_SINPUT_OFF (ierror)
D               if (idebug.eq.1) then
D                               jdo = jstop-jstart+41
D                               if (jdo.le.0) jdo = jdo+maxbuf
D                               jtyp = jstart-20
D                               if (jtyp.le.0) jtyp = jtyp+maxbuf
```

```
D                               do j=1,jdo
D                                       jtyp = 1+MOD(jtyp, maxbuf)
D                                       jrho = 1+(1+adordr)*(jtyp-1)
D                                       if (jtyp.eq.jstart) then
D                                               type 98, Senergy(jtyp),
D       1                                               rho(jrho)
D98                                             format (' >>START>>',2f12.1)
D                                       else if (jtyp.eq.jstop) then
D                                               type 97, Senergy(jtyp),
D       1                                               rho(jrho)
D97                                             format (' >>STOP>>>',2f12.1)
D                                       else
D                                               type 99, jtyp, Senergy(jtyp),
D       1                                               rho(jrho)
D99                                             format (i10,2f12.1)
D                                       end if
D                               end do
D               end if
!
!define reference pattern
        nwrds = jwrd
        nframes(jwrd) = 0
        navg(jwrd) = 1
        iframes(jwrd) = 1
        if (jwrd.gt.1) iframes(jwrd) = iframes(jwrd-1)+nframes(jwrd-1)
        iref = iframes(jwrd)
        jref = 1+(1+adordr)*(iframes(jwrd)-1)
        jra = 1+(1+erordr)*(iframes(jwrd)-1)
        if (jstop.lt.jstart) jstop = jstop+maxbuf
        egymax = 0.0
        do time = adfmpd*jstart-tpadstart, adfmpd*jstop+tpadstop, 2.0*adfmpd
                nframes(jwrd) = nframes(jwrd)+1
                j = MOD(NINT(time/adfmpd),maxbuf)
                if (j.eq.0) j=maxbuf
                jrho = 1+(1+adordr)*(j-1)
                call COPY (4*(1+adordr), rho(jrho), ref_rho(jref))
                if (regr_ordr.gt.0) then !do regression
                        rho0 = ref_rho(jref) !back out noise floor
                        ref_rho(jref) = 1.0
                        call REGRESS (ref_rho(jref), adordr, regr_ordr, rhow)
                        ref_rho(jref) = rho0 !reinsert noise floor
                        fnorm = 1.0/rho0/rhow(0)
                        rhow(0) = 1.0
                        do k=1,erordr
                                rhow(k) = fnorm*rhow(k)
                        end do
                        call RHO_to_RA (rhow, erordr, ref_ra(jra))
                else
                        call RHO_to_RA (ref_rho(jref), erordr, ref_ra(jra))
                end if
                ref_egy(iref) = Senergy(j)
                if (Senergy(j).gt.egymax) egymax = Senergy(j)
                iref = iref+1
                jref = jref+1+adordr
                jra = jra+1+erordr
        end do
!
!provide reduced weighting of low-energy reference frames by adjusting ref_ra
        efscl = 1.0/max(egymax*egywt,1E-29)
        iref = iframes(jwrd)
```

```
        jra = 1+(1+erordr)*(iframes(jwrd)-1)
        do n=1,nframes(jwrd)
                do j=0,erordr
                        ref_ra(jra) = min(1.0,efscl*ref_egy(iref))*ref_ra(jra)
                        jra = jra+1
                end do
                iref = iref+1
        end do
!
        if (.not.interactive) then
                lwrd = LENGTH (words(jwrd))
                write (6,90) words(jwrd), NINT(egymax), nframes(jwrd)
90              format (' ENROLL: ', a<lwrd>, ', maxegy =', i4, ', nfrms =',i3)
        end if
        return
        end
```

```
        subroutine RECOGNIZE (error)
!
!This subroutine performs limited connected word recognition.
!
!The basic recognition strategy is to scan the incoming data continuously
!(performing DP time registration against all reference words), and to find
!word recognition candidates by locating valley points in the minimum DP error
!taken across all candidates.  Recognition output is enabled by an energy-based
!utterance finder:  upon detecting a discrete utterance all the recognition
!candidates are fed to a high-level decision subroutine which applies optimum
!decision heuristics and application constraints.
!
        include 'lwrprm.cmn'
        include 'lwrref.cmn'
        include 'lwrdat.cmn'
D       common /debug/idebug
!
        parameter (maxhyp=100) !maximum number of hypotheses allowed
        real*4 werr(maxhyp), wnxt(maxhyp), rec_wt(maxwrds)
        integer*2 error, jval(maxhyp), ixwd(maxhyp), inxt(maxhyp)
        real*4 dperrs(maxwrds*nbatch), dpnorm(maxwrds), dpmx(maxwrds)
        logical*2 VTCHEK, UTTERANCE, VALLEY
        byte command
        integer*2 jstart, jb, frterr(maxbuf)
D       INTEGER*2 ERRSAV(0:MAXWRDS,MAXBUF), HYPSAV(MAXBUF)
D       CHARACTER*1 VPH(MAXBUF)
D       integer*2 j1, jx, j2
D       logical*2 CONGRUENT !=.true. if j1 < jx <= j2 in circular time buffer
D       CONGRUENT(j1,jx,j2) = jx.ne.0 .and.
D       1 ((j2.ge.jx.and.jx.gt.j1) .or. (j2.lt.j1.and.(j2.ge.jx.or.jx.gt.j1)))
!
!initialize
        rec_wt(1) = rec_wt0
        dpadd = (pvr-1.0)*(maxseflush-1.0)*rec_wt0 !add to dperr to flush vp
        do jwrd=1,nwrds !compute dpnorm to compensate for energy weighting
                egymax = 0.0
                iref = iframes(jwrd)
                do nf=1,nframes(jwrd)
                        if (ref_egy(iref).gt.egymax) egymax = ref_egy(iref)
                        iref = iref+1
                end do
                efscl = 1.0/max(egymax*egywt,1E-29)
                iref = iframes(jwrd)
                egynorm = 0.0
                do n=1,nframes(jwrd)
                        egynorm = egynorm+min(1.0,efscl*ref_egy(iref))
                        iref = iref+1
                end do
                dpnorm(jwrd) = 1.0/egynorm
                rec_wt(jwrd) = rec_wt0*EXP(-rec_wt_factor*egynorm)
        end do
!
        nfrmstot = iframes(nwrds)+nframes(nwrds)-1
        do nf=1,nfrmstot !adjust ref_ra for AP computations
                istart = 1+(1+erordr)*(nf-1)
                do i=istart+1,istart+erordr
                        ref_ra(i) = 2.0*ref_ra(i)
                end do
        end do
        call AS_SERROR_RESET (error)
```

```
        if (error.ne.1) then
                type *, 'AS_SERROR_RESET error', error
                STOP
        end if
        call AS_SERROR_LOAD (nfrmstot, ref_ra, error) !load ref data into AP
        if (error.ne.1) then
                type *, 'AS_SERROR_LOAD error', error
                STOP
        end if
        call AS_SERROR_DPSET (nwrds, nframes, error) !setup for DP computations
        if (error.ne.1) then
                type *, 'AS_SERROR_DPSET error', error
                STOP
        end if
        call AS_SERROR_WTSET (dpdtwt, error) !load dt weight for DP computations
        if (error.ne.1) then
                type *, 'AS_SERROR_WTSET error', error
                STOP
        end if
        do nf=1,nfrmstot !readjust ref_ra
                istart = 1+(1+erordr)*(nf-1)
                do i=istart+1,istart+erordr
                        ref_ra(i) = ref_ra(i)/2.0
                end do
        end do
        call VAL_INIT
!
!start data input
        call TCS
        type *, '*****ready for input*****'
        call AS_SINPUT_ON (error)
        if (error.ne.1) then
                call AS_SINPUT_OFF (ierror)
                return
        end if
        j = 0
        jbatch = nbatch !increase efficiency by batching AP error computations
        call UTTERANCE_RESET
        call VTON (command) !allow keyboard control/escape
        jhyp = 1 !initialize current hypothesis index
        jval(jhyp) = 0 !signal out-of-buffer hypothesis
!
!do recognition
        do while (.not.VTCHEK(dummy))
            j = 1+MOD(j,maxbuf)
            jrho = 1+(1+adordr)*(j-1)
            jrhopp = 1+(1+erordr)*(j-1)
            call AS_FRONT_END (Senergy(j), rhopp(jrhopp), rho(jrho), frterr(j))
            if (j.eq.jbatch) then !process the last nbatch frames
                jb0 = jbatch-nbatch
                jrhopp = 1+(1+erordr)*jb0
                call AS_SERROR (nbatch, rhopp(jrhopp), dperrs, error)
                if (error.ne.1) then
                    type *, 'AS_SERROR error', error, nbatch
                    STOP
                end if
                do nb=1,nbatch !do recognition for this batch of frames
                    jb = nb+jb0
                    if (frterr(jb).ne.1) then
                        call AS_SINPUT_OFF (ierror)
```

```
                    call VTOFF
                    error = frterr(jb)
                    return
                end if
                idp = nwrds*(nb-1)
                do nw=1,nwrds !normalize DP errors
                    ix = idp+nw
                    dperrs(ix) = (dpnorm(nw)*dperrs(ix)-1.0)*rec_wt(nw)
D                   if (idebug.eq.1) ERRSAV(NW,JB) = MIN(DPERRS(IX),9999.9)
                end do
                if (jb.eq.jval(jhyp)) jval(jhyp) = 0 !kill old hypotheses
                jhx = 1+MOD(jhyp,maxhyp)
                if (VALLEY (dperrs(1+idp), jb, werr(jhx), jval(jhx),
     1              ixwd(jhx), wnxt(jhx), inxt(jhx))) jhyp = jhx !accum hyp
                if (UTTERANCE (jb, Senergy(jb), jstart, jstop)) then
                    do nw=1,nwrds
                            dpmx(nw) = dperrs(nw+idp)+dpadd
                    end do
                    if (VALLEY (dpmx, jb, werr(jhx), jval(jhx), ixwd(jhx),
     1                      wnxt(jhx), inxt(jhx))) jhyp = jhx !flush hyp
                    call OUTPUT (jstart, jb, jhyp, maxhyp, werr, jval,
     1                          ixwd, wnxt, inxt)
D                   IF (IDEBUG.EQ.1) THEN
D                       CALL AS_SINPUT_OFF (ERROR)
D                       ISTOP = JB
D                       IF (ISTOP.LT.JSTART) ISTOP=ISTOP+MAXBUF
D                       DO I=JSTART,ISTOP
D                           JI = 1+MOD(I-1,MAXBUF)
D                           ERRSAV(0,JI) = 9999
D                           DO NW=1,NWRDS
D                                   IF (ERRSAV(NW,JI).LT.ERRSAV(0,JI)) THEN
D                                           ERRSAV(0,JI) = ERRSAV(NW,JI)
D                                           HYPSAV(JI) = NW
D                                   END IF
D                           END DO
D                           VPH(JI) = ' '
D                       END DO
D                       IHX = JHYP
D                       DO WHILE (CONGRUENT(JSTART, JVAL(IHX), JB))
D                           VPH(JVAL(IHX)) = '<'
D                           IHX = IHX-1
D                           IF (IHX.EQ.0) IHX = MAXHYP
D                       END DO
D                       DO I=JSTART,ISTOP
D                           JI = 1+MOD(I-1,MAXBUF)
D                           TYPE 99, JI, SENERGY(JI), HYPSAV(JI), VPH(JI),
D    1                          (ERRSAV(NW,JI), NW=0,NWRDS)
D99                         FORMAT(I4, F6.1, I3, A1, I5, 2X, <NWRDS>I5)
D                       END DO
D                       CALL AS_SINPUT_ON (ERROR)
D                   END IF
                    jval(jhyp) = 0 !kill used hypotheses
                end if
            end do
            jbatch = nbatch+MOD(jbatch,maxbuf)
        end if
    end do
    call AS_SINPUT_OFF (error)
    call VTOFF
    return
```

```
        end
c This subroutine provides a valley finding capability specially designed
! to satisfy word recognition applications in which the minimum error over
! a number of vocabulary words is to be tracked, and in addition the "next
! best" error and word identification is to be supplied along with the best
! word id.
c
c The algorithm finds local >>MINIMA<< of the elements of a vector input to
c this subroutine sequentially one vector at a time.
c The input vector is typically assumed to be a function of time
c and values MUST BE FED TO THIS SUBROUTINE >>SEQUENTIALLY<<!!!
c
c A local valley is defined as the minimum value in a subsequence which
c begins and ends with values greater than or equal to this valley multiplied
c by pvR, the minimum peak-to-valley ratio.
c
c input:        v:  real*4 array, the error values for each word at the
!                       current time
c               t:  integer*2 scalar, the value of the current time index
!
!OUTPUT:
!       VALLEY: logical*2 scalar, = true on frame when VP is confirmed,
!                               false otherwise
!       VAL:    real*4 scalar; the valley point error
!       TVL:    integer*2 scalar, the time index of the valley point
!       IVL:    integer*2 scalar, the word index of the best (valley point) err
!       vnext:  real*4 scalar, the error of the next best word
!       inext:  integer*2 scalar, the word index of the next best word
c
c working variables:    pFlag:  indicates whether current search is for
c                               peak (true) or valley (false)
c                       xExt:   current local extreme value of function
c                       tExt:   time index of current local extreme
c parameter:    pvR:     minimum peak/valley ratio
!
        logical*2 function VALLEY (v, t, VAL, TVL, IVL, vnext, inext)
        logical*2 pFlag_in, pFlag
        integer*2 tExt_in, inext, IVL
        real*4 v(*)
        parameter (xmax=9E37)
        integer*2 t, tExt, TVL  !>>NOTE THAT ALL TIME INDICES ARE INTEGER<<
!
        include 'lwrprm.cmn'
        include 'lwrref.cmn'
!
        real*4 vmin(maxwrds)
c
        VALLEY = .false.
        x = xmax
        do i=1,nwrds !find minimum error and keep track of word index
                if (v(i).lt.x) then
                        x = v(i)
                        imin = i
                end if
                if (v(i).lt.vmin(i)) vmin(i) = v(i) !keep track of "next-best"
        end do
!
!peak/valley logic:
        if (pFlag) then !looking for a peak
                if (x.ge.xExt) go to 1   !update peak candidate
```

```
                if (x.le.xExt/pvR) go to 2   !peak confirmed, output extreme
        else !looking for a valley
                if (x.le.xExt) go to 1   !update valley candidate
                if (x.ge.xExt*pvR) go to 2   !valley confirmed, output extreme
        end if
        return
!
2       continue !output extreme and set up for next
        if (.not.pFlag) then !output on valley only
                VAL = xExt
                TVL = tExt
                IVL = iext
                VALLEY = .true.
                vnext = xmax
                inext = 0
                do i=1,nwrds !find next best candidate
                        if (i.ne.iext .and. vmin(i).lt.vnext) then
                                vnext = vmin(i)
                                inext = i
                        end if
                end do
        end if
        pFlag = .not.pFlag !switch from peak to valley or valley to peak, and
!
1       continue !update extreme candidate
        if (pFlag) then !reset individual word minima on every peak update
                do i=1,nwrds
                        vmin(i) = v(i)
                end do
        end if
        xExt = x
        tExt = t
        iext = imin
        return
c-----------------------------------------------------------------------------
        entry VAL_INIT
        pFlag = .true. !initially looking for a peak
        xExt = 0.0 !this forces the first frame to set the initial peak
        tExt = 0
        return
        end
```

```
        subroutine UPDATE (update_prompt, error)
!
!This subroutine performs reference pattern updating based upon constrained
!recognition -- i.e., recognition given knowledge and help from knowing what
!it is that the speaker is supposed to have said.
!
!The basic recognition strategy is to scan the incoming data continuously
!(performing DP time registration against all reference words), and to find
!word recognition candidates by locating valley points in the minimum DP error
!taken across all candidates.  Recognition output is enabled by an energy-based
!utterance finder:  upon detecting a discrete utterance all the recognition
!candidates are fed to a high-level decision subroutine which applies optimum
!decision heuristics and application constraints.
!
        include 'lwrprm.cmn'
        include 'lwrref.cmn'
        include 'lwrdat.cmn'
D       common /debug/idebug
!
        parameter (maxhyp=100) !maximum number of hypotheses allowed
        real*4 werr(maxhyp), wnxt(maxhyp), rec_wt(maxwrds)
        integer*2 error, jval(maxhyp), ixwd(maxhyp), inxt(maxhyp)
        real*4 dperrs(maxwrds), dpnorm(maxwrds), dpmx(maxwrds)
        real*4 reserr(maxframes*nbatch)
        logical*2 word_active(maxwrds)
        logical*2 VTCHEK, UTTERANCE, VALLEY
        byte command
        character update_prompt*(*), prev_prompt*40
        parameter (maxupd=10)
        integer*2 iwup(maxupd), ihup(maxupd), jfup(maxfrmspwd), frterr(maxbuf)
D       INTEGER*2 ERRSAV(0:MAXWRDS,MAXBUF), HYPSAV
D       CHARACTER*1 VPH
!
!extract words to update
        nwup = 0 !number of vocabulary words found
        inext = 1 !next available (unextracted) character index in prompt
1       continue !try to find another vocabulary word
        nnext = 0
        iposx = 9999
        do n=1,nwrds !find next available vocabulary word
                lwrd = LENGTH(words(n))
                ipos = INDEX (update_prompt(inext:), words(n)(:lwrd))
                if (ipos.gt.0 .and. (ipos.lt.iposx
        1               .or. (ipos.eq.iposx .and. lwrd.gt.lwrdsav))) then
                        iposx = ipos
                        nnext = n
                        lwrdsav = lwrd
                end if
        end do
        if (nnext.ne.0 .and. nwup.lt.maxupd) then !add another word
                nwup = nwup+1
                iwup(nwup) = nnext
                inext = inext+iposx+lwrdsav-1
                go to 1
        end if
!
!initialize
        rec_wt(1) = rec_wt0
        dpadd = (pvr-1.0)*(maxseflush-1.0)*rec_wt0 !add to dperr to flush vp
        do jwrd=1,nwrds !compute dpnorm to compensate for energy weighting
```

```
                egymax = 0.0
                iref = iframes(jwrd)
                do nf=1,nframes(jwrd)
                        if (ref_egy(iref).gt.egymax) egymax = ref_egy(iref)
                        iref = iref+1
                end do
                efscl = 1.0/max(egymax*egywt,1E-29)
                iref = iframes(jwrd)
                egynorm = 0.0
                do n=1,nframes(jwrd)
                        egynorm = egynorm+min(1.0,efscl*ref_egy(iref))
                        iref = iref+1
                end do
                dpnorm(jwrd) = 1.0/egynorm
                rec_vt(jwrd) = rec_wt0*EXP(-rec_vt_factor*egynorm)
                word_active(jwrd) = .false.
        end do
        do n=1,nwup
                word_active(iwup(n)) = .true.
        end do
        nfrmstot = iframes(nwrds)+nframes(nwrds)-1
        do nf=1,nfrmstot !adjust ref_ra for AP computations
                istart = 1+(1+erordr)*(nf-1)
                do i=istart+1,istart+erordr
                        ref_ra(i) = 2.0*ref_ra(i)
                end do
        end do
        call AS_SERROR_RESET (error)
        if (error.ne.1) then
                type *, 'AS_SERROR_RESET error', error
                STOP
        end if
        call AS_SERROR_LOAD (nfrmstot, ref_ra, error) !load ref data into AP
        if (error.ne.1) then
                type *, 'AS_SERROR_LOAD error', error
                STOP
        end if
        do nf=1,nfrmstot !readjust ref_ra
                istart = 1+(1+erordr)*(nf-1)
                do i=istart+1,istart+erordr
                        ref_ra(i) = ref_ra(i)/2.0
                end do
        end do
        call VAL_INIT
        call DP_INIT
        do nw=1,nwrds
                if (word_active(nw).eq..true.) call DP_SET (nw)
        end do
!
!start data input
        call TCS
        if (update_prompt.eq.prev_prompt) call TIMED_WAIT(0.5) !allay confusion
        prev_prompt = update_prompt
        call AS_SINPUT_ON (error)
        if (error.ne.1) then
                call AS_SINPUT_OFF (ierror)
                return
        end if
        call PROMPT (update_prompt)
        j = 0
```

```
        jbatch = nbatch !increase efficiency by batching AP error computations
        call UTTERANCE_RESET
        call VTON (command) !allow keyboard control/escape
        jhyp = 1 !initialize current hypothesis index
        jval(jhyp) = 0 !signal out-of-buffer hypothesis
!
!do recognition
2       continue
        if (VTCHEK(dummy)) then
                if (command.eq.'q' .or. command.eq.'Q') then
                        call AS_SINPUT_OFF (ierror)
                        error = -2
                        return
                else if (command.eq.'x' .or. command.eq.'X') then
                        call AS_SINPUT_OFF (ierror)
                        error = -1
                        return
                end if
                call VTON (command)
        else
            j = 1+MOD(j,maxbuf)
            jrho = 1+(1+adordr)*(j-1)
            jrhopp = 1+(1+erordr)*(j-1)
            call AS_FRONT_END (Senergy(j), rhopp(jrhopp), rho(jrho), frterr(j))
            if (j.eq.jbatch) then !process the last nbatch frames
                jb0 = jbatch-nbatch
                jrhopp = 1+(1+erordr)*jb0
                call AS_SERROR (nbatch, rhopp(jrhopp), reserr, error)
                if (error.ne.1) then
                    type *, 'AS_SERROR error', error, nbatch
                    STOP
                end if
                do nb=1,nbatch !do recognition for this batch of frames
                    jb = nb+jb0
                    if (frterr(jb).ne.1) then
                        call AS_SINPUT_OFF (error)
                        call VTOFF
                        error = frterr(jb)
                        return
                    end if
                    do nw=1,nwrds
                        if (word_active(nw)) then !do only for update words
                            ire = iframes(nw)+nfrmstot*(nb-1)
                            call DP_SCAN (nw, jb, reserr(ire), dperrs(nw))
                            dperrs(nw) = (dpnorm(nw)*dperrs(nw)-1.0)*rec_wt(nw)
                        else
                            dperrs(nw) = 9E9
                        end if
D                       if (idebug.eq.1) ERRSAV(NW,JB)=MIN(dperrs(nw),999.9)
                    end do
                    if (jb.eq.jval(jhyp)) jval(jhyp) = 0 !kill old hypotheses
                    jhx = 1+MOD(jhyp,maxhyp)
                    if (VALLEY (dperrs, jb, verr(jhx), jval(jhx), ixwd(jhx),
     1                  wnxt(jhx), inxt(jhx))) jhyp = jhx !accum hypotheses
                    if (UTTERANCE (jb, Senergy(jb), jstart, jstop)) then
                        do nw=1,nwrds
                                dpmx(nw) = dperrs(nw)+dpadd
                        end do
                        if (VALLEY (dpmx, jb, verr(jhx), jval(jhx), ixwd(jhx),
     1                      wnxt(jhx), inxt(jhx))) jhyp = jhx !flush last hyp
```

```
                        if (MATCH(jstart, jb, jhyp, maxhyp, werr, jval,
     1                       ixwd, wnxt, inxt, nwup, iwup, jval)) then
                            call AS_SINPUT_OFF (error)
                            call VTOFF
                            call TCS
                            do n=1,nwup !update each word
                                call DP_GET_TIMES (iwup(n), jval(n), jfup)
                                call AVERAGE (iwup(n), jfup)
                            end do
                            return
                        else !reprompt
                                call PROMPT (update_prompt)
                        end if
                        jval(jhyp) = 0 !kill used hypotheses
D                       IF (IDEBUG.EQ.1) THEN
D                           CALL AS_SINPUT_OFF (ERROR)
D                           ISTOP = JB
D                           IF (ISTOP.LT.JSTART) ISTOP=ISTOP+MAXBUF
D                           DO I=JSTART,ISTOP
D                               JI = 1+MOD(I-1,MAXBUF)
D                               ERRSAV(0,JI) = 9999
D                               DO NW=1,NWRDS
D                                       IF (ERRSAV(NW,JI).LT.ERRSAV(0,JI)) THEN
D                                               ERRSAV(0,JI) = ERRSAV(NW,JI)
D                                               HYPSAV = NW
D                                       END IF
D                               END DO
D                               VPH = ' '
D                               DO NH=1,MAXHYP
D                                       IF (JI.EQ.JVAL(NH)) VPH = '<'
D                               END DO
D                               TYPE 99, JI, SENERGY(JI), HYPSAV, VPH,
D    1                                  (ERRSAV(NW,JI), NW=0,NWRDS)
D99                             FORMAT(I4, F6.1, I3, A1, I5, 2X, <NWRDS>I5)
D                           END DO
D                           CALL AS_SINPUT_ON (ERROR)
D                       END IF
                    end if
                end do
                jbatch = nbatch+MOD(jbatch,maxbuf)
            end if
        end if
        go to 2
        end
```

```
      subroutine DP_LWR  !dynamic programming time registration specifically
!                         for updating word recognition reference data.
!
! This subroutine performs a dynamic programming time normalization
! which finds the time path through the input data which minimizes a
! weighted sum of errors.  The only time constraint is that the step-wise
! time warp not exceed a factor of 2.  The function output value is the
! best-path WEIGHTED error, assuming that the current input frame corresponds
! to the last frame in the reference pattern.
!
! It is assumed that this subroutine will be called sequentially, once for
! each input frame.  It is also assumed that the reference pattern is formed
! by taking every OTHER frame, thus the necessity for buffering four frames of
! error data.  This also makes it convenient to achieve a factor of 2
! constraint on time warp without special memory of the previous step.
!
! call DP_INIT !must be called to initialize/zero error track memory
!
! call DP_SET (NW) !must be called once for each reference word
                              prior to beginning scanning
!
!      NW:     integer*2 input scalar, the index of the reference word to
!                      be scanned.
!
! call DP_SCAN (NW, TINDEX, ERRORS, OPTERR) !must be called every input frame
!
!      NW:     integer*2 scalar, the index number of the reference word
!                      for which the ERRORS were computed
!      TINDEX: integer*2 scalar, the time index of the input errors, from
!                      1 to maxbuf
!      ERRORS: real*4 input array (by nref(NW)), the input error array
!                      errors(1) = error between input frame and ref frame 1
!                               of word NW
!                      errors(n) = error between input frame and ref frame n
!                               of word NW
!      OPTERR: real*4 output scalar, the optimum sequence error for the
!                      reference data time registration which terminates on
!                      the current input frame (the sequence error is defined
!                      as the WEIGHTED error between input and reference)
!
! call DP_GET_TIMES (NW, TLAST, TIMES) !to fetch optimum time warp
!
!      NW:     integer*2 scalar, the index number of the reference word
!                      under consideration
!      TLAST:  integer*2 input scalar, the input frame index corresponding
!                      to the last reference frame
!      TIMES:  integer*2 output array (by nref(NW)), the input frame indices
!                      corresponding to word NW's reference frames for the
!                      optimum sequence terminating on input frame TLAST.
!                      (e.g., TIMES(nref(NW)) = TLAST)
!
!*******
       integer*2 NW, TINDEX, TLAST, TIMES(*)
       real*4 ERRORS(*), OPTERR
!
       include 'lwrprm.cmn'
       include 'lwrref.cmn'
       include 'lwrdat.cmn'
!
       parameter (nse=4, dpemax=9E34)
```

```
        integer*2 ixerr(maxwrds), isave(maxwrds)
        real*4 seqerr(nse,maxframes-1)
        byte time_incr(maxbuf*maxframes)
        real*4 weight(1-nse:nse)
!
!*******
        entry DP_INIT
!
        iw = 0 !initialize word counter
        ixtot = 0 !initialize seqerr offset address
        do k=1,nse
                weight(k) = dpdtwt*log(0.5*k)**2 !set up time weighting factor
                weight(k-nse) = weight(k)
        end do
        return
!
!*******
        entry DP_SET (NW)
!
        iw = iw+1
        if (iw.gt.maxwrds .or. NW.gt.maxwrds .or. NW.lt.1) then
                type *, 'word index error in DP_SET', iw, maxwrds, NW
                STOP
        end if
        ixerr(NW) = ixtot !keep track of the starting address for this word
        ixtot = ixtot+nframes(NW)-1
        if (ixtot.gt.maxframes) then
                type *, 'too many reference frames in DP_SET', iw, ixtot, NW
                STOP
        end if
        isave(NW) = 0 !initialize the index of the nse-long buffer
        do ix=ixerr(NW)+1,ixtot !initialize the subsequence error array
                do k=1,nse
                        seqerr(k, ix) = dpemax
                end do
        end do
        return
!
!*******
        entry DP_SCAN (NW, TINDEX, ERRORS, OPTERR)
!
        ixerror = ixerr(NW) !addr to save seqerr data
        ixtime = ixerror+(TINDEX-1)*ixtot !compute addr to save time_incr
        isave(NW) = 1+MOD(isave(NW),nse) !compute next save index
        ise = isave(NW)
!
        do nr=nframes(NW),1,-1 !find best path up through last reference frame
                ieo = nr+ixerror-1 !seqerr address
                ito = nr-1+ixtime !time_incr address
                if (nr.eq.1) then !initialize previous error for first point
                        cum_error = 0.0
                else !find best previous error within time-warp factor of 2
                        cum_error = seqerr(1,ieo)+weight(ise-1)
                        time_incr(ito) = ise-1
                        do k=2,nse
                                cand_err = seqerr(k,ieo)+weight(ise-k)
                                if (cand_err.lt.cum_error) then
                                        cum_error = cand_err
                                        time_incr(ito) = ise-k
                                end if
```

```
                        end do
                end if
                cum_error = cum_error+ERRORS(nr)
                if (nr.eq.nframes(NW)) then !output total sequence error
                        OPTERR = cum_error
                else !save subsequence error
                        seqerr(ise,ieo+1) = cum_error
                end if
        end do
        return
!
!*******
        entry DP_GET_TIMES (NW, TLAST, TIMES)
!
        TIMES(nframes(NW)) = TLAST
        do nr=nframes(NW),2,-1
                ixtime = nr-1+ixerr(NW)+((TIMES(nr)-1)*ixtot) !time_incr addr
                idelta = time_incr(ixtime)
                if (idelta.le.0) idelta = idelta+nse
                TIMES(nr-1) = TIMES(nr)-idelta
                if (TIMES(nr-1).le.0) TIMES(nr-1) = TIMES(nr-1)+maxbuf
        end do
        return
!
        end
```

```
        subroutine AS_FRONT_END (shaped_energy, rho_pp, rho, error)
!
!This subroutine is a real-time "front-end" subroutine that works with the
!AS_SIO software and provides the calling subroutine with a single frame of
!regressed and noise-floored autocorrelation coefficients per call.
!
        real*4 shaped_energy, rho_pp(0:*), rho(0:*)
        logical*2 initialized
        data initialized /.false./
        parameter (mxord=32, maxt=32, beta_stop=0.1)
        integer*2 error, errsav(0:maxt-1)
        real*4 beta(0:maxt), rhobuf(0:mxord,0:maxt-1)
!
        include 'lwrprm.cmn'
!
        if (.not.initialized) then
                ibuf = 0
                pts = adwdln*1E3/adsmpd
                gamma_for = EXP(-adfmpd/MAX(tmask_for,1E-29))
                gamma_bck = EXP(-adfmpd/MAX(tmask_bck,1E-29))
                drho_for = 0.0
                beta(0) = noise_floor
                betamin = beta_stop*beta(0)
                maxt2 = 0
                do j=1,maxt
                        beta(j) = gamma_bck*beta(j-1)
                        if (beta(j).gt.betamin) maxt2 = j
                        rhobuf(0,j-1) = 1.0
                        do k=1,adordr
                                rhobuf(k,j-1) = 0.0
                        end do
                end do
                initialized = .true.
        end if
!
!read in rho and buffer for future output
        ibuf = MOD(1+ibuf, maxt)
        ibufread = MOD(ibuf+maxt2,maxt)
        call AS_SINPUT (1, rhobuf(0,ibufread), errsav(ibufread))
        rhobuf(0,ibufread) = max(rhobuf(0,ibufread),1.0)
        error = errsav(ibuf)
        if (error.ne.1) return
!
!process and output buffered rho
!    energy
        shaped_energy = SQRT (rhobuf(0,ibuf)/pts)
!    masking
        drho_for = MAX(gamma_for*drho_for, beta(0)*rhobuf(0,ibuf))
        drho = drho_for !do forward time masking
        do k=1,maxt2 !do backward time masking
                drho = MAX(drho, beta(k)*rhobuf(0,MOD(ibuf+k, maxt)))
        end do
!    noise_floored but unregressed rho's
        rho(0) = 1.0+drho/rhobuf(0,ibuf) !rho(0) carries noise floor info
        do j=1,adordr
                rho(j) = rhobuf(j,ibuf)/rhobuf(0,ibuf)
        end do
!    fully preprocessed rho's
        if (regr_ordr.gt.0) call REGRESS
        1       (rhobuf(0,ibuf), adordr, regr_ordr, rhobuf(0,ibuf))
```

```
fnorm = 1.0/rho(0)/rhobuf(0,ibuf)
rho_pp(0) = 1.0 !rho_pp(0) must = 1 for correct AP error computation
do j=1,erordr
        rho_pp(j) = fnorm*rhobuf(j,ibuf)
end do
return
end
```

```
subroutine REGRESS (RHO_IN, NORDER, NREGR, RHO_OUT)
integer*2 NORDER, NREGR
real*4 RHO_IN(0:NORDER), RHO_OUT(0:NORDER)
parameter (nordmax=32, nrgrmax=32)
real*4 rho_n(0:nordmax+nrgrmax), RHO_INV(0:NORDMAX), RCOEF(NORDMAX)
if (NORDER.gt.nordmax .or. NORDER.LE.NREGR .or. NREGR.le.0) then
        type *, 'argument error in call to REGRESS', NORDER, NREGR
        RETURN
END IF
call RHO_to_K (RHO_IN, NORDER, rcoef)
call K_to_RA (rcoef, NREGR, rho_inv)
call K_to_RHO (rcoef, NORDER, rho_n, NORDER+NREGR)
do n=0,NORDER
    RHO_OUT(n) = rho_inv(0)*rho_n(n)
    do j=1,NREGR
        RHO_OUT(n)=RHO_OUT(n)+rho_inv(j)*(rho_n(n+j)+rho_n(ABS(n-j)))
    end do
end do
return
end
```

```
        subroutine SAVE_REF (jwrd, error)
!
!This subroutine saves word recognition reference data into .LPC files
!
        include 'lwrprm.cmn'
        include 'lwrref.cmn'
!
        integer*2 jwrd, error
        real*4 rcoef(maxorder)
        character sname*8, descr*80
!
        jref = 1+(1+adordr)*(iframes(jwrd)-1)
        iref = 1
        do i=iframes(jwrd),iframes(jwrd)+nframes(jwrd)-1
                ref_rho(jref) = 1.0 !back out noise floor
                call RHO_to_K (ref_rho(jref), adordr, rcoef)
                call K_to_LPC
        1               (lpc_data(iref), adordr, ref_egy(i), ref_pch(i), rcoef)
                jref = jref+1+adordr
                iref = iref+2+adordr
        end do
        encode (8, 90, sname) navg(jwrd)
90      format (5x,i3)
        sname = '#avg='//sname(6:8)
        descr = '**LWR** name = '//wname(jwrd)//' ** display = '//words(jwrd)
        namsiz = INDEX(wname(jwrd), ' ')-1
        if (namsiz.le.0) namsiz = 9
        i4frames = nframes(jwrd)
        call LPC_STORE_PARMS (lpc_data, i4frames, adordr, adsmpd, 2.0*adfmpd,
        1       1, 1, adprem, adwdln, wname(jwrd)(1:namsiz)//'.REF',
        1       sname, descr, error)
        if (error.ne.1) type *, 'LPC_STORE_PARMS error', error
        return
        end
```

```
        subroutine LOAD_REF (jwrd, error)
!
!This subroutine loads word recognition reference data from .LPC files
!
!INPUT:
!       jwrd:           integer*2 scalar, the index number of the vocabulary
!                                word to load
!  CMN  wname:          character*9 array, the jwrd-th entry is the name of the
!                                reference file
!OUTPUT:
!       error:          integer*2 scalar, = 1 if successful,
!                                otherwise unsuccessful
!  CMN  nwrds:          integer*2 scalar, the number of words in the vocab,
!                                set equal to jwrd if no errors occur
!  CMN  words:          character*40 array, the display form of the loaded
!                                reference word
!  CMN  navg:           integer*2 array, the jwrd-th entry is the number of
!                                utterances averaged into the jwrd-th reference
!  CMN  nframes:        integer*2 array, the jwrd-th entry is the number of
                                 frames in the loaded reference word
!  CMN  iframes:        integer*2 array, the jwrd_th entry is the starting
!                                frame index of the loaded reference word
!  CMN  ref_rho:        real*4 array, the autocorrelation coefficients for the
!                                loaded reference word
!  CMN  ref_ra:         real*4 array, the autocorrelation coefficients of the
!                                inverse filter for the loaded reference word
!  CMN  ref_egy:        real*4 array, the energy profile for the loaded
!                                reference word
!  CMN  ref_pch:        real*4 array, the pitch profile for the loaded
!                                reference word
!
        include 'lwrprm.cmn'
        include 'lwrref.cmn'
!
        parameter (lunit=2)
        integer*2 jwrd, error, header(256)
        equivalence (nfrms,header(170))
        equivalence (wleng,header(168))
        equivalence (fmprd,header(166))
        equivalence (alpha,header(164))
        equivalence (sname,header(117))
        equivalence (descr,header(67))
        byte sname(8), descr(80)
        character file_name*13, CHARS*40
        real*4 rcoef(maxorder), rhow(0:maxorder)
        logical*2 initialized
        data initialized /.false./
        parameter (maxt=16, beta_stop=0.1)
        real*4 beta(0:maxt), rhobuf(0:maxorder,0:maxt-1)
!
        if (.not.initialized) then
                gamma_for = EXP(-2.0*adfmpd/MAX(tmask_for,1E-29))
                gamma_bck = EXP(-2.0*adfmpd/MAX(tmask_bck,1E-29))
                beta(0) = noise_floor
                betamin = beta_stop*beta(0)
                maxt2 = 0
                do j=1,maxt
                        beta(j) = gamma_bck*beta(j-1)
                        if (beta(j).gt.betamin) maxt2 = j
                end do
```

```
            initialized = .true.
        end if
!
        namsiz = INDEX(wname(jwrd),' ')-1
        if (namsiz.le.0) namsiz = 9
        file_name = wname(jwrd)(1:namsiz)//'.REF'
        call SP_OPEN_OLD (lunit, '#'//file_name, error)
        call SP_RETCODE (error)
        if (error.ne.1) return
        call SP_GET_HEADER (lunit, header, error)
        if (error.ne.1) then
                call TBEL
                call SP_RETCODE (error)
                call SP_CLOSE (lunit, error)
                return
        end if
        if (header(65).ne.28) then
                call TBEL
                type *, 'LOAD_REF error, not .LPC file', header(65), file_name
                error = 0
                call SP_CLOSE (lunit, error)
                return
        end if
        if (header(66).ne.adsmpd) then
                call TBEL
                type *, 'LOAD_REF error, inconsistent smpprd',
        1               header(66), adsmpd, file_name
                error = 0
                call SP_CLOSE (lunit, error)
                return
        end if
        if (header(131).ne.adordr) then
                call TBEL
                type *, 'LOAD_REF error, inconsistent LPC order',
        1               header(131), adordr, file_name
                error = 0
                call SP_CLOSE (lunit, error)
                return
        end if
        if (fmprd.ne.2.0*adfmpd) then
                call TBEL
                type *, 'LOAD_REF error, inconsistent frmprd',
        1               fmprd, 2.0*adfmpd, file_name
                        type *, '    warning only'
        end if
        if (wleng.ne.adwdln) then
                call TBEL
                type *, 'LOAD_REF error, inconsistent wleng',
        1               wleng, adwdln, file_name
                type *, '    warning only'
        end if
        if (alpha.ne.adprem) then
                call TBEL
                type *, 'LOAD_REF error, inconsistent preemp',
        1               alpha, adprem, file_name
                type *, '    warning only'
        end if
!
!read in reference data
        call SP_READ (lunit, 1, 1, (2+adordr)*nfrms, nwnrd, lpc_data, error)
```

```
        if (error.ne.1) then
                call SP_RETCODE (error)
                call TBEL
                type *, 'LOAD_REF read error, ref not loaded', file_name
                call SP_CLOSE (lunit, error)
                return
        end if
        call SP_CLOSE (lunit, error)
        if (jwrd.eq.1) then
                iframes(jwrd) = 1
        else
                iframes(jwrd) = iframes(jwrd-1)+nframes(jwrd-1)
        end if
        nframes(jwrd) = nfrms
        iref = 1
!
!compute reference rhos
        egymax = 0.0
        do n=1,nfrms
                j = n+iframes(jwrd)-1
                jref = 1+(1+adordr)*(j-1)
                jra = 1+(1+erordr)*(j-1)
                call LPC_to_K
        1               (lpc_data(iref), adordr, ref_egy(j), ref_pch(j), rcoef)
                call K_to_RHO (rcoef, adordr, ref_rho(jref), adordr)
                egymax = max(egymax,ref_egy(j))
                iref = iref+2+adordr
        end do
!
!"preprocess" rhos
        drho_for = 0.0
        iref = 1
        do n=1,nfrms
                j = n+iframes(jwrd)-1
                jref = 1+(1+adordr)*(j-1)
                jra = 1+(1+erordr)*(j-1)
!       compute noise floor
                drho_for = MAX(gamma_for*drho_for, beta(0)*ref_egy(j)**2)
                drho = drho_for !do forward time masking
                do k=1,MIN(maxt2,nfrms-n) !do backward time masking
                        drho = MAX(drho, beta(k)*ref_egy(j+k)**2)
                end do
                floor = 1.0+drho/ref_egy(j)**2
!       regress, then apply noise floor, and convert to inverse filter rhos
                if (regr_ordr.gt.0) then !do regression
                        call REGRESS (ref_rho(jref), adordr, regr_ordr, rhow)
                        fnorm = 1.0/rhow(0)/ref_rho(jref)
                        rhow(0) = 1.0
                        do k=1,erordr
                                rhow(k) = fnorm*rhow(k)
                        end do
                        rhow(0) = floor*rhow(0)
                        call RHO_to_RA (rhow, erordr, ref_ra(jra))
                else
                        ref_rho(jref) = floor*ref_rho(jref)
                        call RHO_to_RA (ref_rho(jref), erordr, ref_ra(jra))
                end if
                iref = iref+2+adordr
        end do
!
```

```
!provide reduced weighting of low-energy reference frames by adjusting ref_ra
        efscl = 1.0/max(egymax*egywt,1E-29)
        iref = iframes(jwrd)
        jra = 1+(1+erordr)*(iframes(jwrd)-1)
        do n=1,nframes(jwrd)
                do j=0,erordr
                        ref_ra(jra) = min(1.0,efscl*ref_egy(iref))*ref_ra(jra)
                        jra = jra+1
                end do
                iref = iref+1
        end do
!
        nwrds = jwrd
        words(jwrd) = CHARS (descr(39), 40)
        decode (3, 90, sname(6)) navg(jwrd)
90      format (i3)
        return
        end
        logical*2 function UTTERANCE (J, ENERGY, JSTART, JSTOP)
!
! This subroutine implements a simple energy-based word finder.
! It is assumed that UTTERANCE is called sequentially, frame-by-frame.
! UTTERANCE is set when ENERGY exceeds a high threshold, and UTTERANCE is
! reset when ENERGY remains less than a low threshold for a number of
! successive frames.  UTTERANCE is also reset when called with J = 0.
!
!input:
!       J:      integer*2 scalar, a frame/time counter
!       ENERGY: real*4 scalar, the RMS energy of the current frame
!
!output:
!       UTTERANCE:  logical*2 scalar, = "true" when an utterance has been
!                       captured.
!       JSTART: integer*2 scalar, starting frame index for the captured
!                       utterance
!       JSTOP:  integer*2 scalar, stopping frame index for the captured
!                       utterance
!
        integer*2 J, JSTART, JSTOP
        logical*2 word_is_ongoing
        integer*2 end_lag, error
        data word_is_ongoing/.false./
        parameter (maxbuf=999)
        real*4 egybuf(maxbuf)
!
        include 'lwrprm.cmn'
!
        if (J.eq.0) then !initialize
                min_silence = NINT(tgapmin/adfmpd)
                jmax = 0
                word_is_ongoing = .false.
                UTTERANCE = .false.
                return
        else if (J.gt.maxbuf) then
                type *, 'argument error in call to UTTERANCE', J, maxbuf
                stop
        else if (J.gt.jmax) then
                jmax = J
        end if
        egybuf(J) = ENERGY
```

```
!
        if (word_is_ongoing) then !look for end of utterance
                if (ENERGY.gt.egymax) then
                        egymax = ENERGY
                        end_thresh = MAX(end_level*egymax, estop_min)
                        jpeak = J
                        jend = J
                        end_lag = 0
                else if (ENERGY.ge.end_thresh) then !reset lag counter
                        jend = J
                        end_lag = 0
                else !increment silence counter
                        end_lag = end_lag+1
                        if (end_lag.ge.min_silence) then !word is done
                                word_is_ongoing = .false.
                                JSTOP = jend
                                JSTART = jpeak !find JSTART
                                jend = jpeak
                                end_lag = 0
                                do while (end_lag.lt.min_silence)
                                        jend = jend-1
                                        if (jend.eq.0) jend = jmax
                                        if (egybuf(jend).ge.end_thresh) then
                                                end_lag = 0
                                                JSTART = jend
                                        else
                                                end_lag = end_lag+1
                                        end if
                                end do
                                UTTERANCE = .true.
                                return
                        end if
                end if
        else !look for word
                if (ENERGY.ge.eword_min) then !word found
                        egymax = ENERGY
                        end_thresh = MAX(end_level*egymax, estop_min)
                        word_is_ongoing = .true.
                        jpeak = J
                        jend = J
                        end_lag = 0
                end if
        end if
!
        UTTERANCE = .false.
        return
!
        entry UTTERANCE_RESET
        min_silence = NINT(tgapmin/adfmpd)
        word_is_ongoing = .false.
        jmax = 0
        return
        end
```

```
      subroutine PROMPT (word)
!
!This subroutine provides prompting of the enrollment words for limited word
!recognition.
!
      logical*2 interactive
      common /VT_COMMAND_MODE/ interactive
      character*(*) word
      character*1 double1(5),double2(3)
      data double1/27,60,27,35,51/
      data double2/27,35,52/
!
      if (.not.interactive) return
      lword = LENGTH(word)
      write (6,*) 'say:'
      write (6,98) double1, word(:lword)
      write (6,99) double2, word(:lword)
98    format (' "', 5a1, a<lword>, '"')
99    format (' "', 3a1, a<lword>, '"')
      return
      end
```

```
        subroutine DELETE (jwrd)
!
!This subroutine deletes a word from the reference data
!
        include 'lwrprm.cmn'
        include 'lwrref.cmn'
!
        if (jwrd.lt.1 .or. jwrd.gt.nwrds) then
                type *, 'bad argument in call to DELETE', jwrd, nwrds
                return
        end if
        nwrds = nwrds-1
        nfdel = nframes(jwrd)
        do j=jwrd,nwrds !shift all the reference data down
                words(j) = words(j+1)
                wname(j) = wname(j+1)
                navg(j) = navg(j+1)
                nframes(j) = nframes(j+1)
                iframes(j) = iframes(j+1)-nfdel
                do if=iframes(j),iframes(j)+nframes(j)-1
                        ref_egy(if) = ref_egy(if+nfdel)
                        ref_pch(if) = ref_pch(if+nfdel)
                        ixstart = 1+(1+erordr)*(if-1)
                        do ix=ixstart,ixstart+erordr
                                ref_rho(ix) = ref_rho(ix+nfdel*(1+erordr))
                                ref_ra(ix) = ref_ra(ix+nfdel*(1+erordr))
                        end do
                end do
        end do
        return
        end
```

```
        subroutine OUTPUT
        1       (jstart, jstop, jhyp, mhyp, werri, jendi, ixwdi, wenxt, ixnxt)
!
!This subroutine provides high level decision processing of recognition
!hypotheses for each discrete utterance detected.
!
!INPUT:
!       JSTART: integer*2 scalar, the starting time index of the utterance
!       JSTOP:  integer*2 scalar, the stopping time index of the utterance
!       JHYP:   integer*2 scalar, the index of the most recent rec hypothesis
!       MHYP:   integer*2 scalar, the size of the hypothesis buffer arrays
!       WERR:   real*4 array, the DP errors of the recognition hypotheses
!       JEND:   integer*2 array, the ending frames of the rec hypotheses
!       IXWD:   integer*2 array, the word indices of the rec hypotheses
!       WENXT:  real*4 array, the DP errors of the next-best hypotheses
!       IXNXT:  integer*2 array, the word indices of the next-best hypotheses
!
!OUTPUT:
!       visual display of the recognized utterance
!
        include 'lwrprm.cmn'
        include 'lwrref.cmn'
        include 'lwrdat.cmn'
!
        logical*2 interactive
        common /VT_COMMAND_MODE/ interactive
        common /DEBUG/ idebug
        integer*2 jstart, jstop, jhyp, mhyp, jendi(*), ixwdi(*), ixnxt(*)
        real*4 werri(*), wenxt(*)
        parameter (maxhyp=32, lenmax=25)
        integer*2 nhyp, jend(0:maxhyp), ixwd(maxhyp), ixnx(maxhyp)
        integer*2 isort(maxhyp)
        real*4 werr(0:maxhyp), wenx(maxhyp), wsort(maxhyp)
        character charout*40, xword*40, yword*40, zword*40
        character*1 double1(5),double2(3)
        data double1/27,60,27,35,51/
        data double2/27,35,52/
        integer*2 j1, jx, j2
        logical*2 CONGRUENT !=.true. if j1 < jx <= j2 in circular time buffer
        CONGRUENT(j1,jx,j2) = jx.ne.0 .and.
        1  ((j2.ge.jx.and.jx.gt.j1) .or. (j2.lt.j1.and.(j2.ge.jx.or.jx.gt.j1)))
!
        ihyp = jhyp
        do while (CONGRUENT(jstart, jendi(ihyp), jstop)) !count the valid hyps
                ihyp = ihyp-1
                if (ihyp.eq.0) ihyp = mhyp
        end do
        nhyp = jhyp-ihyp
        if (nhyp.lt.0) nhyp = nhyp+mhyp
        if (nhyp.gt.maxhyp) then
                type *, 'too many recognition hypotheses', nhyp, maxhyp
                ihyp = ihyp+nhyp-maxhyp
                nhyp = maxhyp
        end if
        jend(0) = jstart
        werr(0) = 0.0
        do nh=1,nhyp
                ihyp = 1+MOD(ihyp,mhyp)
                werr(nh) = werri(ihyp)
                jend(nh) = jendi(ihyp)
```

```
                ixwd(nh) = ixwdi(ihyp)
                wenx(nh) = wenxt(ihyp)
                ixnx(nh) = ixnxt(ihyp)
        end do
!
        do nh=nhyp,1,-1 !make sure that recognition hypotheses are good enough
                if (werr(nh).gt.erecmax .or. werr(nh)+drecmin.gt.wenx(nh)) then
                        nhyp = nhyp-1 !discard hypothesis
                        if (idebug.ge.1) then !describe discard
                                xword = words(ixwd(nh))
                                lenx = LENGTH(xword)
                                if (werr(nh).gt.erecmax) then
                                        type 990, xword, werr(nh)
990                                     format(' error for "',a<lenx>,
        1                                       '" too high:',f6.1)
                                else if (werr(nh)+drecmin.gt.wenx(nh)) then
                                        yword = words(ixnx(nh))
                                        leny = LENGTH(yword)
                                        type 991, xword, werr(nh), yword,
        1                                       wenx(nh)
991                                     format(' error for "',a<lenx>,'" is',
        1                                       f6.1,', too close to error ',
        1                                       'for "',a<leny>,'",'f6.1)
                                end if
                        end if
                        do i=nh,nhyp
                                werr(i) = werr(i+1)
                                jend(i) = jend(i+1)
                                ixwd(i) = ixwd(i+1)
                                wenx(i) = wenx(i+1)
                        end do
                end if
        end do
!
        do nh=nhyp,1,-1 !make sure that adjacent words don't overlap too much
                nfsep = jend(nh)-jend(nh-1)
                if (nfsep.le.0) nfsep = nfsep+maxbuf
                if (nfsep.lt.NINT(2.0*compmax*nframes(ixwd(nh)))) then
                        ih = nh !discard the poorer of the two hypotheses
                        if (werr(nh).lt.werr(nh-1)) ih = nh-1
                        if (idebug.ge.1) then !describe discard
                                xword = '(word onset)'
                                if (nh.gt.1) xword = words(ixwd(nh-1))
                                lenx = LENGTH(xword)
                                yword = words(ixwd(nh))
                                leny = LENGTH(yword)
                                zword = words(ixwd(ih))
                                lenz = LENGTH(zword)
                                type 992, xword, yword, nfsep,
        1                               NINT(2.0*compmax*nframes(ixwd(nh))),
        1                               zword
992                             format (' "',a<min(lenx,lenmax)>,
        1                               '" too close to "',a<min(leny,lenmax)>,
        1                               '" dt =',i3,', min dt =',i3,', "',
        1                               a<min(lenz,lenmax)>,'" discarded')
                        end if
                        nhyp = nhyp-1
                        do i=ih,nhyp
                                werr(i) = werr(i+1)
                                jend(i) = jend(i+1)
```

```
                        ixwd(i) = ixwd(i+1)
                        wenx(i) = wenx(i+1)
                end do
        end if
end do
!
if (nhyp.gt.maxwdputt) then !limit number of words per utterance
        nreject = nhyp-maxwdputt
        do nh=1,nhyp
                wsort(nh) = werr(nh)
                isort(nh) = nh
        end do
        call BFRS (wsort, 1, nhyp, -1, isort) !keep best hypotheses
        if (idebug.ge.1)
1               type 995, (words(ixwd(isort(nh)))
1                       (1:LENGTH(words(ixwd(isort(nh))))),
1                               NINT(werr(isort(nh))), nh=1,nreject)
995     format(' too many hypotheses, worst rejected:',(1x,3(1x,a,i4)))
        do nh=1,nreject
                nhyp = nhyp-1
                ih = isort(nh)
                do i=ih,nhyp
                        werr(i) = werr(i+1)
                        jend(i) = jend(i+1)
                        ixwd(i) = ixwd(i+1)
                        wenx(i) = wenx(i+1)
                end do
                do i=nh,nreject
                        if (isort(i).gt.ih) isort(i) = isort(i)-1
                end do
        end do
end if
!
if (nhyp.eq.0) then
        if (interactive) then
                write (6,99) '***REJECTED***', double1
                write (6,99) '***REJECTED***', double2
        else
                write (6,99) '***REJECTED***'
        end if
else
        if (idebug.ge.1) then
                type 993, (NINT(werr(i)), i=1,nhyp)
993             format(' recognition error(s):',<nhyp>i4)
                if (nhyp.gt.1) type 994,
1                   (MOD(maxbuf+jend(i)-jend(i-1),maxbuf), i=2,nhyp)
994             format(' between-word time(s):',2x,<nhyp>i4)
        end if
        nchar = LENGTH(words(ixwd(1)))
        charout = words(ixwd(1))
        nl = 1
        do nh=2,nhyp
            nch = 2+LENGTH(words(ixwd(nh)))
            if (nchar+nch.le.40) then
                charout(nchar+1:) = '__'//words(ixwd(nh))
                nchar = nchar+nch
                nl = nh
            else
                if (interactive) then
                        write (6,99) charout, double1
```

```
                              write (6,99) charout, double2
                    else
                              write (6,996) charout, (NINT(werr(i)),
      1                              NINT(wenx(i)), i=nl,nh-1)
996                           format (1x, a<nchar>, ', errs (best/next):',
      1                              <nh-nl+1>(i4,i4, ','))
                    end if
                    charout = '__'//words(ixwd(nh))
                    nchar = nch
                    nl = 1
               end if
          end do
          if (interactive) then
                    write (6,99) charout, double1
                    write (6,99) charout, double2
          else
                    write (6,996) charout, (NINT(werr(i)),
      1                              NINT(wenx(i)), i=nl,nhyp)
          end if
      end if
99    format (1x,a, 5a1)
      type * !insert a space after utterance
      return
      end
      logical*2 function MATCH (jstart, jstop, jhyp, mhyp, werri, jendi,
      1         ixwdi, wenxt, ixnxt, nexp, exwd, jout)
!
!This subroutine provides high level decision processing of recognition
!hypotheses for each discrete utterance detected.
!
!INPUT:
!       JSTART: integer*2 scalar, the starting time index of the utterance
!       JSTOP:  integer*2 scalar, the stopping time index of the utterance
!       JHYP:   integer*2 scalar, the index of the most recent rec hypothesis
!       MHYP:   integer*2 scalar, the size of the hypothesis buffer arrays
!       WERRI:  real*4 array, the DP errors of the recognition hypotheses
!       JENDI:  integer*2 array, the ending frames of the rec hypotheses
        IXWDI:  integer*2 array, the word indices of the rec hypotheses
!       WENXT:  real*4 array, the DP errors of the next-best hypotheses
!       IXNXT:  integer*2 array, the word indices of the next-best hypotheses
!       NEXP:   integer*2 scalar, the number of words in the expected sequence
!       EXWD:   integer*2 array, the expected sequence of word indices
!       JOUT:   integer*2 array, the hypothesis indices which best map onto the
!                       the expected word sequence
!
!OUTPUT:
!       MATCH:  logical*2 scalar, = .true. if a reasonable mapping of the
!                       expected word sequence onto the input hypotheses
!                       can be achieved
!
        include 'lwrprm.cmn'
        include 'lwrref.cmn'
        include 'lwrdat.cmn'
!
        logical*2 interactive
        common /VT_COMMAND_MODE/ interactive
        common /DEBUG/ idebug
        integer*2 jstart, jstop, jhyp, mhyp, jendi(*), ixwdi(*), ixnxt(*)
        integer*2 nexp, exwd(*), jout(*)
        real*4 werri(*), wenxt(*)
```

```
        parameter (maxhyp=32, lenmax=25)
        integer*2 nhyp, jend(0:maxhyp), ixwd(maxhyp), ixnx(maxhyp)
        real*4 werr(0:maxhyp), wenx(maxhyp)
        character.charout*40, xword*40, yword*40, zword*40
        character*1 double1(5),double2(3)
        data double1/27,60,27,35,51/
        data double2/27,35,52/
        integer*2 j1, jx, j2
        logical*2 CONGRUENT !=.true. if j1 < jx <= j2 in circular time buffer
        CONGRUENT(j1,jx,j2) = jx.ne.0 .and.
        1  ((j2.ge.jx.and.jx.gt.j1) .or. (j2.lt.j1.and.(j2.ge.jx.or.jx.gt.j1)))
!
        ihyp = jhyp
        do while (CONGRUENT(jstart, jendi(ihyp), jstop)) !count the valid hyps
                ihyp = ihyp-1
                if (ihyp.eq.0) ihyp = mhyp
        end do
        nhyp = jhyp-ihyp
        if (nhyp.lt.0) nhyp = nhyp+mhyp
        if (nhyp.gt.maxhyp) then
                type *, 'too many recognition hypotheses', nhyp, maxhyp
                ihyp = ihyp+nhyp-maxhyp
                nhyp = maxhyp
        end if
        jend(0) = jstart
        werr(0) = 0.0
        do nh=1,nhyp
                ihyp = 1+MOD(ihyp,mhyp)
                werr(nh) = werri(ihyp)
                jend(nh) = jendi(ihyp)
                ixwd(nh) = ixwdi(ihyp)
                wenx(nh) = wenxt(ihyp)
                ixnx(nh) = ixnxt(ihyp)
        end do
!
        do nh=nhyp,1,-1 !make sure that recognition hypotheses are good enough
                if (werr(nh).gt.erecmax .or. werr(nh)+drecmin.gt.wenx(nh)) then
                        nhyp = nhyp-1 !discard hypothesis
                        if (idebug.ge.1) then !describe discard
                                xword = words(ixwd(nh))
                                lenx = LENGTH(xword)
                                if (werr(nh).gt.erecmax) then
                                        type 990, xword, werr(nh)
990                                     format(' error for "',a<lenx>,
        1                                       '" too high:',f6.1)
                                else if (werr(nh)+drecmin.gt.wenx(nh)) then
                                        yword = words(ixnx(nh))
                                        leny = LENGTH(yword)
                                        type 991, xword, werr(nh), yword,
        1                                       wenx(nh)
991                                     format(' error for "',a<lenx>,'" is',
        1                                       f6.1,', too close to error ',
        1                                       'for "',a<leny>,'",'f6.1)
                                end if
                        end if
                        do i=nh,nhyp
                                werr(i) = werr(i+1)
                                jend(i) = jend(i+1)
                                ixwd(i) = ixwd(i+1)
                        end do
```

```
                end if
        end do
!
        do nh=nhyp,1,-1 !make sure that adjacent words don't overlap too much
                nfsep = jend(nh)-jend(nh-1)
                if (nfsep.le.0) nfsep = nfsep+maxbuf
                if (nfsep.lt.NINT(2.0*compmax*nframes(ixwd(nh)))) then
                        ih = nh !discard the poorer of the two hypotheses
                        if (werr(nh).lt.werr(nh-1)) ih = nh-1
                        if (idebug.ge.1) then !describe discard
                                xword = words(ixwd(nh-1))
                                if (nh.eq.1) xword = '(word onset)'
                                lenx = LENGTH(xword)
                                yword = words(ixwd(nh))
                                leny = LENGTH(yword)
                                zword = words(ixwd(ih))
                                lenz = LENGTH(zword)
                                type 992, xword, yword, nfsep,
        1                               NINT(2.0*compmax*nframes(ixwd(nh))),
        1                               zword
992                             format (' "',a<min(lenx,lenmax)>,
        1                               '" too close to "',a<min(leny,lenmax)>,
        1                               '" dt =',i3,', min dt =',i3,', "',
        1                               a<min(lenz,lenmax)>,'" discarded')
                        end if
                        nhyp = nhyp-1
                        do i=ih,nhyp
                                werr(i) = werr(i+1)
                                jend(i) = jend(i+1)
                                ixwd(i) = ixwd(i+1)
                        end do
                end if
        end do
!
        if (nhyp.eq.nexp) then !see if input sequence matches expected seq
                do nh=1,nhyp
                        if (ixwd(nh).ne.exwd(nh)) go to 1
                        jout(nh) = jend(nh)
                end do
                MATCH = .true.
                if (.not.interactive)
        1               write (6,995) (ixwd(i), NINT(werr(i)), i=1,nhyp)
995             format (' UPDATE (id/err):', <nhyp>(i4, i5, ','))
                return
        end if
1       continue
        MATCH = .false.
        if (interactive) write (6,*) 'recognized:'
        charout = ' '
!
        if (nhyp.gt.0) then
                if (idebug.ge.1) then
                        type 993, (NINT(werr(i)), i=1,nhyp)
993                     format(' recognition error(s):',<nhyp>i4)
                        if (nhyp.gt.1) type 994,
        1                   (MOD(maxbuf+jend(i)-jend(i-1),maxbuf), i=2,nhyp)
994                     format(' between-word time(s):',2x,<nhyp>i4)
                end if
                nchar = LENGTH(words(ixwd(1)))
                charout = words(ixwd(1))
```

```
      do nh=2,nhyp
              nch = 2+LENGTH(words(ixwd(nh)))
              if (nchar+nch.le.40) then
                      charout(nchar+1:) = '__'//words(ixwd(nh))
                      nchar = nchar+nch
              else
                      if (interactive) then
                              write (6,99) charout, double1
                              write (6,99) charout, double2
                      else
                              write (6,99) 'NO UPDATE: '//charout
                      end if
                      charout = '__'//words(ixwd(nh))
                      nchar = nch
              end if
      end do
end if
if (interactive) then
      write (6,99) charout, double1
      write (6,99) charout, double2
else
      write (6,99) 'NO UPDATE: '//charout
end if
99    format (1x,a, 5a1)
type * !insert a space after utterance
return
end
```

```
        subroutine AVERAGE (jwrd, jframes)
!
!This subroutine averages data for a recognized and time-warped input
!input word into the reference pattern for that word.  The update is a
!straight average, with the current token having the same weight as all
!previous tokens.  (This is accomplished by keeping track of how many
!tokens have been averaged and by making the contribution of the current
!token = 1/navg.)  However, a weight of at least alpha_min is used.
!
        include 'lwrprm.cmn'
        include 'lwrref.cmn'
        include 'lwrdat.cmn'
!
        integer*2 jwrd, jframes(*)
        real*4 rhow(0:maxorder)
!
        REAL*4 RCOEF(100)
        navg(jwrd) = navg(jwrd)+1
        alpha = MAX (alpha_min, 1.0/navg(jwrd))
        egymax = 0.0
        do nf=1,nframes(jwrd)
                jref = 1+(adordr+1)*(iframes(jwrd)+nf-2)
                jra = 1+(erordr+1)*(iframes(jwrd)+nf-2)
                iegy = nf+iframes(jwrd)-1
                ref_egy(iegy) = EXP((1.0-alpha)*LOG(ref_egy(iegy))
        1                               +alpha*LOG(Senergy(jframes(nf))))
                egymax = max(egymax,ref_egy(iegy))
                jin = 1+(adordr+1)*(jframes(nf)-1)
                do k=0,adordr
                    ref_rho(jref+k) = (1.0-alpha)*ref_rho(jref+k)
        1                                       +alpha*rho(jin+k)
                end do
                if (regr_ordr.gt.0) then !do regression
                        rho0 = ref_rho(jref) !back out noise floor
                        ref_rho(jref) = 1.0
                        call REGRESS (ref_rho(jref), adordr, regr_ordr, rhow)
                        ref_rho(jref) = rho0 !reinsert noise floor
                        fnorm = 1.0/rho0/rhow(0)
                        rhow(0) = 1.0
                        do k=1,erordr
                                rhow(k) = fnorm*rhow(k)
                        end do
                        call RHO_to_RA (rhow, erordr, ref_ra(jra))
                else
                        call RHO_to_RA (ref_rho(jref), erordr, ref_ra(jra))
                end if
        end do
!
!provide reduced weighting of low-energy reference frames by adjusting ref_ra
        efscl = 1.0/max(egymax*egywt,1E-29)
        iref = iframes(jwrd)
        jra = 1+(1+erordr)*(iframes(jwrd)-1)
        do n=1,nframes(jwrd)
                do j=0,erordr
                        ref_ra(jra) = min(1.0,efscl*ref_egy(iref))*ref_ra(jra)
                        jra = jra+1
                end do
                iref = iref+1
        end do
        return
```

```
        subroutine AS_SIO
!changed 18 May 1981 to increase tbuf from 0.1 to 0.125 seconds
!changed 29 May 1981 to provide entry point for loading DP dtime penalty table
!changed 5 August 1981 to switch over from the LPA to the AS speech I/O
!
        entry AS_SIO_INIT (INSRC, ADUSE, ADSMPI, ADORDI, ADPREM, ADFMPI,
        1       ADWNLN, ERORDI, DAUSE, DASMPD, DAORDI, DADEMP, DAFMPD, RETCOD)
!
!INSRC:     character*(*) scalar, the input source.  If INSRC is a number
!               from 1 to 24 then real-time input is implied and INSRC is taken
!               as the audio line number to take data from.  Any other value of
!               INSRC is taken to be the file name of a file containing
!               the sampled speech data in SP_SOFT format.
!
        integer*2 ADSMPD,ADORDR,ERORDI,DASMPD,DAORDR,RETCOD
        integer*2 ADORDI, DAORDI, ADSMPI
        logical*2 ADUSE, DAUSE
        character*(*) INSRC
        integer*2 adchnl, dachnl, console
        integer*2 NFRAMES
        integer*2 DA_LPCDATA (*)
        real*4 AD_LPCDATA(*)
        real*4 REF_DATA(*),IN_DATA(*),ERRORS(*)
        integer*2 NWORDS, NFRMS_WORD(*)
        parameter (monitor=0, lunin=78, lunout=79)
        parameter (maxAPmem=32768) !AP memory size for CSL VAX
        parameter (maxorder=32)
        integer*2 lpcdata(maxorder+2), rcoef(maxorder)
        real*4 dascratch(2*maxorder+60) !D/A AP synthesizer control array
        integer*2 idascratch(5), header(256)
        integer*2 ap_status, as_status
        logical*2 input_on, output_on, preloaded, flushed, buf_empty
        logical*2 sio_init, sio_init_ad, sio_init_da, da_is_ok
        parameter (napfp=16,napip=64) !number of AP parameters
        real*4 ap_params(napfp)
        integer*2 iap_params(napip)
        parameter (nbufs=8) !number of buffers in ring of buffers
        parameter (nbufmax=2048) !maximum sampled data buffer size
        parameter (lpcbufmax=512) !maximum lpc data buffer size
        real*4 ad_lpcbuf(lpcbufmax), da_lpcbuf(lpcbufmax)
        parameter (tbuf=0.125) !length of time to buffer data in and out of AP
        integer*2 ftype,itype
        parameter (ftype=2,itype=1) !AP data transfer formats
        parameter (twopi=2*3.1415927)
        integer*2 full,empty,stop,flush,ereset,refload,dpset,wtset
        parameter (full=-1,empty=0,stop=1,flush=2) !AP data buffer status flags
        parameter (ereset=3,refload=4,dpset=5,wtset=6) !AP error comp control
        parameter (iappadr=0) !initial AP parameter address
        parameter (maxreffrms=2000) !maximum number of reference frames
        real*4 errsav(4,maxreffrms) !AP buffer for DP scratch computations
        integer*2 AD_sdata(nbufmax), DA_sdata((1+nbufs)*nbufmax)
        parameter (maxwleng=1024)
        real*4 w(maxwleng), weight(7)
        integer*2 adistat,adostat,daistat,daostat,eristat,erostat
        integer*2 nsda, nfda, nbufleft
        character input_mode*3, NEWSRC*80
        data tpad /300.0/ !amount of time (in msec) to pad ends of files
        data weight /7*0.0/
        data sio_init, sio_init_ad, sio_init_da, input_on, output_on/5*.false./
!
```

```
        sio_init_ad = .false.
        sio_init_da = .false.
        if (sio_init) then !AS_SIO has already been initialized
                type *,'AS_SIO_INIT called, but AS_SIO is already initialized'
                RETCOD = 2
                return
        end if
        ADORDR = ADORDI
        DAORDR = DAORDI
        ERORDR = ERORDI
        ADFMPD = ADFMPI
        ADSMPD = ADSMPI
        da_demph = dademp
!compute buffer parameters
        if (ADSMPD.lt.60 .or. DASMPD.lt.60) then !I/O data rate is excessive
                type *,'AS_SIO_INIT parameter error',ADSMPD,DASMPD
                RETCOD = 14
                return
        end if
        nbuf_ad = MIN(nbufmax,NINT(tbuf*1E6/ADSMPD))
        nbuf_da = MIN(nbufmax,NINT(tbuf*1E6/DASMPD))
        nwleng = NINT(1E3*ADWNLN/ADSMPD) !window length of A/D window
        if (nwleng.gt.maxwleng) then !window length is too long
                type *,'AS_SIO_INIT called with excessive window length',
        1               ADWNLN,ADSMPD
                RETCOD = 12
                return
        end if
        do j=1,nwleng
                w(j) = 1.5863*(0.54-0.46*cos(twopi*(j-1)/(nwleng-1)))
        end do
        maxfrmad = MIN(lpcbufmax,1+NINT(1E3*tbuf/ADFMPD)*(1+ADORDR))/(1+ADORDR)
        lpcblnad = maxfrmad*(1+ADORDR)
        maxfrmda = MIN(lpcbufmax,1+NINT(1E3*tbuf/DAFMPD)*(2+DAORDR))/(2+DAORDR)
        lpcblnda = maxfrmda*(2+DAORDR)
        nadscratch = nwleng
        ndascratch = 2*DAORDR+60
!llocate the AP
        call APINIT (0, 0, ap_status)
        if (ap_status.lt.0) then !severe problem allocating AP
                type *,'AS_SIO_INIT couldn''t allocate AP',ap_status
                RETCOD = 4
                return
        end if
        type *,'AS_SIO_INIT has allocated the AP'
        ap_params(1) = ADPREM !preemphasis constant for analysis
        ap_params(2) = 1E3*ADFMPD/ADSMPD !A/D frame period in samples
        ap_params(3) = DADEMP
        ap_params(4) = NINT(1E3*DAFMPD/DASMPD) !D/A frame period in samples
        iap_params(1) = ADORDR !LPC model order for analysis
        iap_wind = iappadr+napfp+napip
        iap_params(2) = iap_wind !AP address of A/D window
        iap_params(3) = nwleng !window length for analysis
        iadistat = iap_wind+nwleng
        iap_params(4) = iadistat !AP address of A/D input buffer status
        iadostat = iadistat+1
        iap_params(5) = iadostat !AP address of LPC output buffer status
        iadiadr = iadostat+1
        iap_params(6) = iadiadr !AP address of A/D input buffer
        iap_params(7) = nbuf_ad
```

```
iap_params(8) = iadiadr+nbuf_ad !AP address of scratch A/D input buffer
iap_params(9) = nbuf_ad+nwleng !length of scratch A/D input buffer
iadoadr = iap_params(8)+iap_params(9)
iap_params(10) = iadoadr !AP address of LPC output buffer
iap_params(11) = lpcblnad !length of LPC output buffer
iadnf = iadoadr+lpcblnad !AP address of number of A/D frames output
iap_params(12) = iadnf
iap_params(13) = iadnf+1 !AP address of scratch LPC output buffer
iap_params(14) = lpcblnad !length of scratch LPC output buffer
iap_params(15) = iap_params(13)+lpcblnad !AP address of scratch array
iap_params(16) = DAORDR
idaistat = iap_params(15)+nadscratch
iap_params(17) = idaistat !AP address of LPC input buffer status
idaostat = idaistat+1
iap_params(18) = idaostat !AP address of D/A output  buffer status
idaiadr = idaostat+1
iap_params(19) = idaiadr !AP address of LPC input buffer
iap_params(20) = lpcblnda !length of LPC input buffer
idanf = idaiadr+lpcblnda !AP address of number of D/A frames input
iap_params(21) = idanf
iap_params(22) = idanf+1 !AP address of scratch LPC input buf
iap_params(23) = lpcblnda !length of scratch LPC input buffer
idaoadr = iap_params(22)+iap_params(23)
iap_params(24) = idaoadr !AP address of D/A output buffer
iap_params(25) = nbuf_da !length of D/A output buffer
idans = idaoadr+nbuf_da !AP address of the number of D/A output samples
iap_params(26) = idans
iap_params(27) = idans+1 !AP address of scratch D/A output buffer
iap_params(28) = nbuf_da !length of scratch D/A output buffer
iap_dascr = iap_params(27)+nbuf_da
iap_params(29) = iap_dascr !AP address of D/A scratch area
iap_params(30) = ERORDR !LPC model order for residual error computation
ieristat = iap_params(29)+ndascratch
iap_params(31) = ieristat !AP address of A/C input buffer status
ierostat = ieristat+1
iap_params(32) = ierostat !AP address of residual output buffer status
ieriadr = ierostat+1
iap_params(33) = ieriadr !AP address of reference A/C functions
!
do j=1,ndascratch
        dascratch(j) = 0.0
end do
idascratch(1) = DAORDR
idascratch(2) = 1
idascratch(3) = 0
idascratch(4) = 7+2*DAORDR+iap_dascr
idascratch(5) = 0
dascratch(2*DAORDR+8) = 1.0
dascratch(2*DAORDR+9) = 1.0
dascratch(2*DAORDR+59) = -3E4
dascratch(2*DAORDR+60) = 3E4
!
call APPUT (ap_params, iappadr, napfp, ftype)
call APPUT (iap_params, iappadr+napfp, napip, itype)
call APPUT (w, iap_wind, nwleng, ftype)
call APPUT (dascratch, iap_dascr, ndascratch, ftype)
call APPUT (idascratch, iap_dascr, 5, itype)
call APPUT (empty, iadistat, 1, itype)
call APPUT (empty, iadostat, 1, itype)
call APPUT (empty, idaistat, 1, itype)
```

```
        call APPUT (empty, idaostat, 1, itype)
        call APPUT (empty, ieristat, 1, itype)
        call APPUT (empty, ierostat, 1, itype)
        call APWD
        call APSIO (iappadr)
!allocate the AS
        if (ADUSE) then
                len = LENGTH(INSRC) !convert input source to console number
                DECODE (len, 100, INSRC(:len), err=101) console
100             format (i<len>)
                if (console.gt.0 .and. console.le.24) then !real time input
                        input_mode = 'RT'
                        call REAL_TIME_ON
                        type *,'AS_SIO is now running real time'
                        ifreq = NINT(5E5/ADSMPD)
                        if (ifreq.lt.4700) lpfilter = 1
                        if (ifreq.ge.4700 .and. ifreq.lt.5800) lpfilter = 2
                        if (ifreq.ge.5800 .and. ifreq.lt.7400) lpfilter = 3
                        if (ifreq.ge.7400) lpfilter = 4
                        call AS_INIT_AD (-1, adchnl, console, lpfilter, ADSMPD,
        1                       monitor, nbufs, nbuf_ad, as_status, )
                        if (as_status.eq.5012 .or. as_status.eq.5014) then
                                type *,'AS_SIO_INIT waiting for A/D channel'
                                call AS_INIT_AD (0, adchnl, console, lpfilter,
        1                          ADSMPD, monitor, nbufs, nbuf_ad, as_status,)
                        end if
                        if (as_status.ne.1) then !severe problem with AS
                                type *,'AS_SIO_INIT couldn''t initialize A/D',
        1                               as_status, console, lpfilter, ADSMPD,
        1                               monitor, nbufs, nbuf_ad
                                RETCOD = 8
                                return
                        end if
                else !disk input
101                     continue
                        if (INSRC(:1).eq.'*') go to 99
                        call SP_OPEN_OLD (lunin, INSRC, as_status)
                        if (as_status.ne.1) go to 99
                        call SP_GET_HEADER (lunin, header, as_status)
                        if (as_status.ne.1) then
                                call SP_RETCODE (as_status)
                                stop
                        end if
                        if (header(65).eq.1) then
                                input_mode = 'DS'
                                if (header(66).ne.ADSMPD) STOP 'bad smpprd'
                                maxfrms = 2000000000
                        else if (header(65).eq.28) then
                                input_mode = 'LPC'
                                if (header(131).ne.ADORDR) STOP 'bad LPC order'
                                call COPY (4, HEADER(166), frmprd)
                                if (frmprd.ne.ADFMPD) type *,
        1                               'inconsistent frm prd', frmprd, ADFMPD
                                call COPY (4, header(170), maxfrms)
                        else
                                STOP 'incorrect file type'
                        end if
                        irecin = 0
                        nfpad = NINT(tpad/ADFMPD) !number of frames to pad EOF
                end if
```

```
            sio_init_ad = .true.
99          continue
        end if
        if (DAUSE) then
            ifreq = NINT(5E5/DASMPD)
            if (ifreq.lt.4700) lpfilter = 1
            if (ifreq.ge.4700 .and. ifreq.lt.5800) lpfilter = 2
            if (ifreq.ge.5800 .and. ifreq.lt.7400) lpfilter = 3
            if (ifreq.ge.7400) lpfilter = 4
          call AS_INIT_DA (-1, dachnl, console, lpfilter, DASMPD, monitor,
        1   nbufs, nbuf_da, as_status, )
          if (as_status.eq.5012 .or. as_status.eq.5014) then
            type *,'AS_SIO_INIT waiting for D/A channel'
            call AS_INIT_AD (0, adchnl, console, lpfilter, ADSMPD, monitor,
        1           nbufs, nbuf_ad, as_status, )
          end if
          if (as_status.ne.1) then !argument error or severe problem with AS
            type *,'AS_SIO_INIT couldn''t initialize D/A', as_status,
        1           console, lpfilter, DASMPD, monitor, nbufs, nbuf_da
            RETCOD = 10
            return
          end if
          sio_init_da = .true.
        end if
        type *,'AS_SIO_INIT has allocated the AS'
        sio_init = .true.
        retcod = 1
        return
!
        entry AS_SIO_RLSE (RETCOD)
!
        if (.not.sio_init) type *,'AS_SIO_RLSE called, but SIO isn''t running'
        call APRLSE
        if (input_on) then
            if (input_mode.eq.'RT') then
                    call AS_FREE_AD (adchnl, as_status)
            else
                    call SP_CLOSE (lunin, as_status)
            end if
        end if
        if (output_on) call AS_FREE_DA (dachnl, as_status)
        call REAL_TIME_OFF
        retcod = 1
        input_on = .false.
        output_on = .false.
        sio_init = .false.
        sio_init_ad = .false.
        sio_init_da = .false.
        return
!
!speech analysis section
!
        entry AS_SINPUT_ON (retcod)
!
        if (input_on) then !input has already been turned on
            type *,'AS_SINPUT_ON called, but input is already enabled'
            retcod = 21
            return
        end if
        if (.not.sio_init_ad) then
```

```
                type *,'AS_SINPUT_ON called, but A/D channel not initialized'
                retcod = 25
                return
        end if
        if (input_mode.eq.'RT') then
                call AS_START_AD (adchnl, as_status)
                if (as_status.ne.1) then !severe problem starting A/D
                        type *, 'AS_SINPUT_ON problem starting A/D', as_status
                        retcod = 22
                        return
                end if
        end if
        lfrmad = 0 !pointer to last frame used in internal LPC buffer
        buf_empty = .true. !signal that internal LPC buffer is empty
        input_on = .true.
        retcod = 1
        return
!
        entry AS_SINPUT_OFF (retcod)
!
        if (.not.input_on) then !input hasn't been turned on
                type *,'AS_SINPUT_OFF called, but input is already disabled'
                retcod = 23
                return
        end if
        input_on = .false.
        adistat = full
        flushed = .false. !flush and dump remaining data in AP
        do while (adistat.ne.empty)
                call APGET (adistat, iadistat, 1, itype)
                if (.not.flushed .and. adistat.eq.empty) then
                        adistat = flush
                        call APPUT (adistat, iadistat, 1, itype)
                        flushed = .true.
                end if
                call APPUT (empty, iadostat, 1, itype)
        end do
        if (input_mode.eq.'RT') then
                call AS_STOP_AD (adchnl, as_status)
                if (as_status.ne.1) then !severe problem
                        type *, 'AS_SINPUT_OFF problem stopping A/D', as_status
                        retcod = 24
                        return
                end if
        end if
        retcod = 1
        return
!
        entry AS_SINPUT_NEW (NEWSRC, RETCOD)
!
        if (input_on) then !input has already been turned on
                type *, 'AS_SINPUT_NEW called while input enabled'
                retcod = 21
                return
        end if
        if (sio_init_ad) then
                if (input_mode.eq.'RT') then
                        call AS_FREE_AD (adchnl, as_status)
                        call REAL_TIME_OFF
                else
```

```
                call SP_CLOSE (lunin, as_status)
        end if
end if
len = LENGTH(NEWSRC) !convert input source to console number
DECODE (len, 100, NEWSRC(:len), err=102) console
if (console.gt.0 .and. console.le.24) then !real time input
        input_mode = 'RT'
        call REAL_TIME_ON
        type *,'AS_SIO is now running real time'
        ifreq = NINT(5E5/ADSMPD)
        if (ifreq.lt.4700) lpfilter = 1
        if (ifreq.ge.4700 .and. ifreq.lt.5800) lpfilter = 2
        if (ifreq.ge.5800 .and. ifreq.lt.7400) lpfilter = 3
        if (ifreq.ge.7400) lpfilter = 4
        call AS_INIT_AD (-1, adchnl, console, lpfilter, ADSMPD,
1               monitor, nbufs, nbuf_ad, as_status, )
        if (as_status.eq.5012 .or. as_status.eq.5014) then
                type *, 'AS_SINPUT_NEW waiting for A/D channel'
                call AS_INIT_AD (0, adchnl, console, lpfilter,
1                       ADSMPD, monitor, nbufs, nbuf_ad, as_status,)
        end if
        if (as_status.ne.1) then !severe problem with AS
                type *, 'AS_SINPUT_NEW couldn''t initialize A/D',
1                       as_status, console, lpfilter, ADSMPD,
1                       monitor, nbufs, nbuf_ad
                RETCOD = 8
                return
        end if
else !disk input
102     continue
        call SP_OPEN_OLD (lunin, NEWSRC, as_status)
        if (as_status.ne.1) then
                RETCOD = 29
                return
        end if
        call SP_GET_HEADER (lunin, header, as_status)
        if (as_status.ne.1) then
                call SP_RETCODE (as_status)
                stop
        end if
        if (header(65).eq.1) then
                input_mode = 'DS'
                if (header(66).ne.ADSMPD) STOP 'bad smpprd'
                maxfrms = 2000000000
        else if (header(65).eq.28) then
                input_mode = 'LPC'
                if (header(131).ne.ADORDR) STOP 'bad LPC order'
                call COPY (4, HEADER(166), frmprd)
                if (frmprd.ne.ADFMPD) type *,
1                       'inconsistent frm prd', frmprd, ADFMPD
                call COPY (4, header(170), maxfrms)
        else
                STOP 'incorrect file type'
        end if
        irecin = 0
        nfpad = NINT(tpad/ADFMPD) !number of frames to pad EOF
end if
sio_init_ad = .true.
RETCOD = 1
return
```

```
!
        entry AS_SINPUT (NFRAMES, AD_LPCDATA, RETCOD)
!
        if (.not.input_on) then !input hasn't been turned on
                type *,'AS_SINPUT called, but input is not enabled'
                retcod = 26
                return
        end if
        nframe = 0
        do while (nframe.lt.nframes) !process data until request satisfied
            iout = 1+(1+ADORDR)*nframe
            if (input_mode.eq.'LPC') then !take data from file
                irecin = irecin+1
                lbuf = 2+ADORDR
                nframe = nframe+1
                if (irecin.le.maxfrms) then !take data from file
                        call SP_READ (lunin, lbuf, irecin, lbuf, nwnrd,
1                               lpcdata, as_status)
                        if (as_status.ne.1) then
                                call SP_RETCODE (as_status)
                                STOP 'LPC data error in AS_SINPUT'
                        end if
                        call LPC_to_K (lpcdata, ADORDR, energy, pitch, rcoef)
                        call K_to_RHO (rcoef, ADORDR, AD_LPCDATA(iout), ADORDR)
                        do k=0,ADORDR
                                AD_LPCDATA(iout+k) = nwleng*energy**2
1                                       *AD_LPCDATA(iout+k)
                        end do
                else if (irecin-maxfrms.lt.nfpad) then !output silence
                        do k=0,ADORDR
                                AD_LPCDATA(iout+k) = 0.0
                        end do
                else !stop output
                        call SP_CLOSE (lunin, as_status)
                        retcod = 29 !signal EOF
                        return
                end if
            else if (.not.buf_empty) then !take data from buffer
                ntake = MIN(nframes-nframe, maxfrmad-lfrmad)
                call COPY (4*(1+ADORDR)*ntake,ad_lpcbuf(1+(1+ADORDR)*(lfrmad)),
1                       AD_LPCDATA(1+(1+adordr)*nframe))
                nframe = nframe+ntake
                lfrmad = lfrmad+ntake
                if (lfrmad.eq.maxfrmad) buf_empty = .true.
            else !find out what needs to be done
                call APGET (adistat, iadistat, 1, itype)
                call APGET (adostat, iadostat, 1, itype)
                if (adistat.eq.empty) then !fill AP input buffer
                        irecin = irecin+1
                        if (input_mode.eq.'RT') then !AS data
                                call AS_READ(adchnl,nbuf_ad,ad_sdata,as_status)
                                if (as_status.ne.1) then !problems
                                   type*,'AS_READ error in AS_SINPUT',as_status
                                   if (as_status.eq.5206) type *, 'lost RT'
                                   retcod = 28
                                   return
                                end if
                        else if (irecin.le.maxfrms) then !file data
                                call SP_READ (lunin, nbuf_ad, irecin,
1                                       nbuf_ad, nwnrd, ad_sdata, as_status)
```

```
                    if (as_status.eq.701) then !EOF
                            maxfrms = irecin-1
                    else if (as_status.ne.1) then
                            call SP_RETCODE (as_status)
                            STOP 'DS error in AS_SINPUT'
                    end if
            else if (irecin-maxfrms.lt.nfpad) then !no data
                    do k=1,nbuf_ad
                            ad_sdata(k) = 0
                    end do
            else !stop output
                    call SP_CLOSE (lunin, as_status)
                    retcod = 29 !signal EOF
                    return
            end if
            call APPUT (ad_sdata, iadiadr, nbuf_ad, itype)
            call APPUT (full, iadistat, 1, itype)
        else if (adostat.eq.full) then !fetch LPC output buffer
            call APGET (ad_lpcbuf, iadoadr, lpcblnad,ftype)
            call APPUT (empty, iadostat, 1, itype)
            lfrmad = 0
            buf_empty = .false.
        end if
    end if
end do
retcod = 1
return
!
!speech synthesis section
!
        entry AS_SOUTPUT_ON (RETCOD)
!
        if (output_on) then !output has already been turned on
                type *,'AS_SOUTPUT_ON called, but output is already enabled'
                retcod = 41
                return
        end if
        if (.not.sio_init_da) then
                type *,'AS_SINPUT_OFF called, but D/A channel not initialized'
                retcod = 45
                return
        end if
        da_bufx = 0.0 !initialize deemphasis filter
        preloaded = .false. !preload a full ring of buffers before starting
        numsamp = 0 !sample counter (to provide for accumulating for preload)
        output_on = .true.
        retcod = 1
        return
!
        entry AS_SOUTPUT_OFF (RETCOD)
!
        if (.not.output_on) then !output hasn't been turned on
                type *,'AS_SOUTPUT_OFF called, but output is already disabled'
                retcod = 43
                return
        end if
        output_on = .false.
        daistat = full
        flushed = .false. !flush and output remainder of synthesized data in AP
        as_status = 1
```

```
      da_is_ok = .true.
      do while (daistat.ne.empty)
              call APGET (daistat, idaistat, 1, itype)
              call APGET (daostat, idaostat, 1, itype)
              if (daistat.eq.empty .and. .not.flushed) then
                      daistat = flush
                      call APPUT (daistat, idaistat, 1, itype)
                      flushed = .true.
              else if (daostat.eq.full) then !fetch data and output to D/A
                      call APGET (da_sdata(1+numsamp),
     1                        idaoadr, nbuf_da, itype)
                      call APGET (nsda, idans, 1, itype)
                      call APPUT (empty, idaostat, 1, itype)
                      if (da_is_ok) then !process and output data
                      do j=1+numsamp,numsamp+nsda !deemphasize
                              da_bufx = da_sdata(j)+da_demph*da_bufx
                              da_sdata(j) = max(min(da_bufx,3E4),-3E4)
                      end do
                      if (preloaded) then
                              call AS_WRITE (dachnl,nsda,da_sdata,as_status)
                      else !accumulate data and then preload
                              numsamp = numsamp+nsda
                              if (numsamp.ge.nbufs*nbuf_da) then !load and go
                                      call AS_PRELOAD_DA (dachnl,
     1                                    nbufs*nbuf_da,da_sdata,as_status)
                                      call AS_START_DA (dachnl, as_status)
                                      numsamp = numsamp-nbufs*nbuf_da
                                      if (numsamp.gt.0) call AS_WRITE(dachnl,
     1                                    numsamp,da_sdata(1+nbufs**nbuf_da),
     2                                    as_status)
                                      numsamp = 0
                                      preloaded = .true.
                              end if
                      end if
                      if (as_status.ne.1) then !AS problem
                          type *, 'AS problem in AS_SOUTPUT_OFF',as_status
                          if (as_status.eq.5806) type *,'not real time'
                          da_is_ok = .false.
                          retcod = 48
                      end if
                      end if
              end if
      end do
      if (numsamp.gt.0) then !less than one ring of buffers was to be output
              call AS_PRELOAD_DA (dachnl, numsamp, da_sdata, as_status)
              call AS_START_DA (dachnl, as_status)
      end if
      if (da_is_ok) then !perform a normal stop
              call AS_STOP_DA (dachnl, as_status)
              if (as_status.ne.1) then !problem stopping D/A
                      type *,'AS_STOP_DA error in AS_SOUTPUT_OFF',as_status
                      if (as_status.eq.5904) type *,'not real time'
                      retcod = 44
                      return
              end if
              retcod = 1
      end if
      return

      entry AS_SOUTPUT (NFRAMES, DA_LPCDATA, RETCOD)
```

```
!
        if (.not.output_on) then !input hasn't been turned on
                type *,'AS_SOUTPUT called, but output is not enabled'
                retcod = 46
                return
        end if
        nframe = 0 !number of frames transferred
        as_status = 1
        do while (nframe.lt.nframes) !process data until DA input buffer empty
                call APGET (daistat, idaistat, 1, itype)
                call APGET (daostat, idaostat, 1, itype)
                if (daistat.eq.empty) then !fill AP with LPC parameters
                        nxfr = MIN(maxfrmda,nframes-nframe)
                        do jc = 1,nxfr
                                jin = (2+daordr)*(jc+nframe-1)
                                jbuf = (2+daordr)*(jc-1)
                                excite = FLOAT(DA_LPCDATA(1+jin))**2
                                pitch = DA_LPCDATA(2+jin)
                                do j=1,DAORDR
                                        rc = -DA_LPCDATA(2+j+jin)/32768.0
                                        da_lpcbuf(2+j+jbuf) = rc
                                        excite = excite*(1.0-rc**2)
                                end do
                                if (pitch.gt.0.0) excite = excite*pitch
                                da_lpcbuf(1+jbuf) = SQRT(excite)
                                da_lpcbuf(2+jbuf) = pitch
                        end do
                        nframe = nframe+nxfr
                        if (nxfr.gt.0) then !fill AP buffer
                                call APPUT (da_lpcbuf,idaiadr,lpcblnda,ftype)
                                call APPUT (nxfr, idanf, 1, itype)
                                call APPUT (full, idaistat, 1, itype)
                        end if
                else if (daostat.eq.full) then !fetch data and output to D/A
                        call APGET (da_sdata(1+numsamp),
     1                          idaoadr, nbuf_da, itype)
                        call APGET (nsda, idans, 1, itype)
                        call APPUT (empty, idaostat, 1, itype)
                        do j=1+numsamp,numsamp+nsda !deemphasize
                                da_bufx = da_sdata(j)+da_demph*da_bufx
                                da_sdata(j) = max(min(da_bufx,3E4),-3E4)
                        end do
                        if (preloaded) then
                                call AS_WRITE (dachnl,nsda,da_sdata,as_status)
                        else !accumulate data and then preload
                                numsamp = numsamp+nsda
                                if (numsamp.ge.nbufs*nbuf_da) then !load and go
                                        call AS_PRELOAD_DA (dachnl,
     1                                      nbufs*nbuf_da, da_sdata, as_status)
                                        call AS_START_DA (dachnl, as_status)
                                        numsamp = numsamp-nbufs*nbuf_da
                                        if (numsamp.gt.0) call AS_WRITE(dachnl,
     1                                      numsamp, da_sdata(1+nbufs*nbuf_da),
     2                                      as_status)
                                        numsamp = 0
                                        preloaded = .true.
                                end if
                        end if
                        if (as_status.ne.1) then !AS problem
                                type *,'AS problem in AS_SOUTPUT',as_status
```

```
                        if (as_status.eq.5806) type *,'not real time'
                        retcod = 48
                        return
                end if
            else !wait around, AP hasn't digested previous data yet
                call TIMED_WAIT (0.1) !wait 100 msec
            end if
        end do
        retcod = 1
        return
!
!error computing section
!
        entry AS_SERROR_RESET (RETCOD)
!
        neref = 0
        ienfrms = ieriadr
        ieref = ienfrms+1
        ieinv = ieref
        nedim = ERORDR+1
        eristat = ereset
        call APPUT (eristat, ieristat, 1, itype)
        do while (eristat.eq.ereset)
            call TIMED_WAIT (0.01) !don't burn the CPU
            call APGET (eristat, ieristat, 1, itype)
        end do
        retcod = 1
        return
!
        entry AS_SERROR_LOAD (NFRAMES, REF_DATA, RETCOD)
!
        call APPUT (REF_DATA, ieinv, nframes*nedim, ftype)
        call APPUT (nframes, ienfrms, 1, itype)
        neref = neref+nframes
        ieinv = ieref+neref*nedim
        ncompare = neref
        eristat = refload
        call APPUT (refload, ieristat, 1, itype)
        do while (eristat.eq.refload)
            call TIMED_WAIT (0.03) !don't burn the CPU
            call APGET (eristat, ieristat, 1, itype)
        end do
        retcod = 1
        return
!
        entry AS_SERROR_DPSET (NWORDS, NFRMS_WORD, RETCOD)
!
        nfrtot = 0
        nwrds = NWORDS
        ncompare = nwrds
        do nw=1,nwrds
            nfrtot = nfrtot+NFRMS_WORD(nw)
        end do
        if (nfrtot.ne.neref) then
            type*,'bad # of ref frames in call to AS_SERROR_DPSET'
            type*,neref,'frames preloaded, but',nfrtot,'passed in DPSET'
            RETCOD = 82
            return
        end if
        call APPUT (nwrds, ienfrms, 1, itype)
```

```
        call APPUT (NFRMS_WORD, ieinv, nwrds, itype)
        ieinv = ieinv+nwrds
        do nf=1,nfrtot
                do j=1,4
                        errsav(j,nf)=9E29
                end do
        end do
        call APPUT (errsav, ieinv, 4*(nfrtot-nwrds), ftype)
        ieinv = ieinv+4*(nfrtot-nwrds)
        eristat = dpset
        call APPUT (eristat, ieristat, 1, itype)
        do while (eristat.eq.dpset)
                call TIMED_WAIT (0.03) !don't burn the CPU
                call APGET (eristat, ieristat, 1, itype)
        end do
1       continue !initialize the dtime penalty table
        call APPUT (weight, ieinv, 7, ftype)
        eristat = wtset
        call APPUT (eristat, ieristat, 1, itype)
        do while (eristat.eq.wtset)
                call TIMED_WAIT (0.03) !don't burn the CPU
                call APGET (eristat, ieristat, 1, itype)
        end do
        retcod = 1
        return
!
        entry AS_SERROR_WTSET (WTNOM, RETCOD)
!
        do k=1,4
                weight(k) = WTNOM*log(0.5*k)**2
        end do
        do k=5,7
                weight(k) = weight(k-4)
        end do
        go to 1 !initialize the dtime penalty table
!
        entry AS_SERROR (NFRAMES, IN_DATA, ERRORS, RETCOD)

        maxAPused = ieinv+nframes*(nedim+ncompare)
        if (maxAPused.gt.maxAPmem) then
                type*,'inadequate AP memory in call to AS_SERROR',
1                       maxAPused,maxAPmem,nframes,ieinv,nedim,ncompare
                retcod = 84
                return
        end if
        call APPUT (IN_DATA, ieinv, nframes*nedim, ftype)
        call APPUT (NFRAMES, ienfrms, 1, itype)
        call APPUT (full, ieristat, 1, itype)
        ieradr = ieinv+nframes*nedim
        erostat = empty
        do while (erostat.eq.empty) !wait for results
!               call TIMED_WAIT (0.01) !don't burn the CPU
                call APGET (erostat, ierostat, 1, itype)
        end do
        call APGET (ERRORS, ieradr, ncompare*nframes, ftype)
        call APPUT (empty, ierostat, 1, itype)
        retcod = 1
        return
        end
```

```
!LWRDAT.CMN -- word recognition input data common block
        parameter (maxbuf=400) !number of frames in the input buffer
        parameter (nbatch=20) !number of frames batched in AP error computation
!       NB:  maxbuf must be an integer multiple of nbatch so that split buffers
!                   may be avoided in transferring rhopp to the AP for error comp.
        real*4 rhopp((1+maxorder)*(maxbuf+nbatch))
        real*4 rho((1+maxorder)*(maxbuf+nbatch))
        real*4 Senergy(maxbuf)
        common /LWR_INPUT_DATA/ Senergy, rhopp, rho
```

```
!LWRREF.CMN -- word recognition reference data common block
        parameter (maxorder=16, maxwrds=50, maxframes=2000, maxfrmspwd=100)
        integer*2 nwrds, navg(maxwrds), nframes(maxwrds), iframes(maxwrds)
        real*4 ref_rho((1+maxorder)*maxframes), ref_ra((1+maxorder)*maxframes)
        real*4 ref_egy(maxframes), ref_pch(maxframes)
        integer*2 lpc_data((2+maxorder)*maxfrmspwd)
        common /LWR_REF_DATA/ nwrds, nframes, iframes, navg,
        1       ref_rho, ref_ra, ref_egy, ref_pch, lpc_data
        character words(maxwrds)*40, wname(maxwrds)*9
        common /LWR_REF_CHAR/ words, wname
```

```
!LWRPRM.CMN -- word recognition parameter common block
        integer*2 adchnl, adsmpd, adordr, regr_ordr
        integer*2 dachnl, dasmpd, daordr, erordr
        real*4 noise_floor, maxseflush
        integer*2 maxwdputt
        common /LWR_PARAMETERS/ adchnl, adsmpd, adordr, adprem, adfmpd, adwdln,
        1       dachnl, dasmpd, daordr, dademp, dafmpd, regr_ordr, noise_floor,
        1       erordr, tpadstart, tpadstop, eword_min, end_level, tgapmin,
        1       dpdtwt, pvr, rec_wt_factor, rec_wt0, erecmax, drecmin,
        1       alpha_min, compmax, estop_min, tmask_for, tmask_bck, maxwdputt,
        1       egywt, maxseflush
```

CLAIMS

WHAT IS CLAIMED IS:

1. A method for speech recognition according to a predefined vocabulary, comprising the steps of:

storing reference templates containing LPC (linear predictive coding) parameters corresponding to a plurality of portions of words in said predefined vocabulary;

receiving speech inputs, and sampling said speech inputs at a plurality of frame intervals, and transforming said speech input samples into a plurality of frames of LPC parameters;

finding the residual energy corresponding to said LPC parameters of a particular frame of said speech input and said respective LPC parameters of each frame of said reference template;

selectively identifying said input frame with some or none of said reference frames in accordance with respective values of said residual energies; and

providing said respective identifications of said input frames as an output;

wherein each said reference frame incorporates a noise floor in said LPC parameters thereof.

2. The method of Claim 1, wherein sequences of said reference templates correspond to words to be recognized, and wherein said residual energy between a particular one of said input speech frames and a particular one of said reference template is divided by the self-residual energy of said particular input frame to provide a distance measure of dissimilarity for each of said input frames, with respect to each of said sequences of reference templates.

3. The method of Claim 2, further comprising a sequence-identification step, wherein the most recent input frame is identified with the last-in-time reference template in each sequence of reference templates, and then, repeatedly for each sequence of reference templates until each of said sequences has been identified in spaced templates thereof, with respectively coresponding input frames, each nearest preceding unidentified frame of input speech is identified with some one of a predetermined number of reference templates immediately preceding the last template identified, said sequence-identification step providing a subsequence distance measure output corresponding to the sum of said distance measures for said respectively input-frame to reference template identification.

4. The method of Claim 2, wherein a warping penalty is added to said subsequence distance measure corresponding to input-frame to reference-template identification string wherein the local ratio of input frames to reference frames is not a predetermined ratio.

5. The method of Claim 3, further comprising the step of, after each successive input frame is received, storing on optimal subsequence distance measure for each said template sequence, said optimal subsequence distance measure representing the minimal sum of the distance measures for any identification sequence which could legally be performed by said sequence-idendtification step.

6. The method of Claim 4, wherein said warping penalty increases nonlinearly as said actual ratio of input frames to reference frames departs from said predetermined ratio.

7. The method of Claim 4, wherein said predetermined ratio is greater than 1.

8. The method of Claim 5, wherein, when the global minimum, over all of said reference frame sequences, of all said respective Optimal subsequence distance measures has reached a valley (local minimum in time) and then increased thereafter by a predetermined amount, a word recognition hypothesis is identified and stored as of the time when said global minimum reached said valley, corresponding to the reference frame sequence with respect to which said valley was measured.

9. The method of Claim 3, wherein each said reference template sequence includes weighting values in said respective templates thereof,

wherein said weighting values increase monotonically with the energy of the respective templates of said sequence,

wherein said distance measure between a particular frame of input speech and each of said reference templates is weighted by said weighting factors.

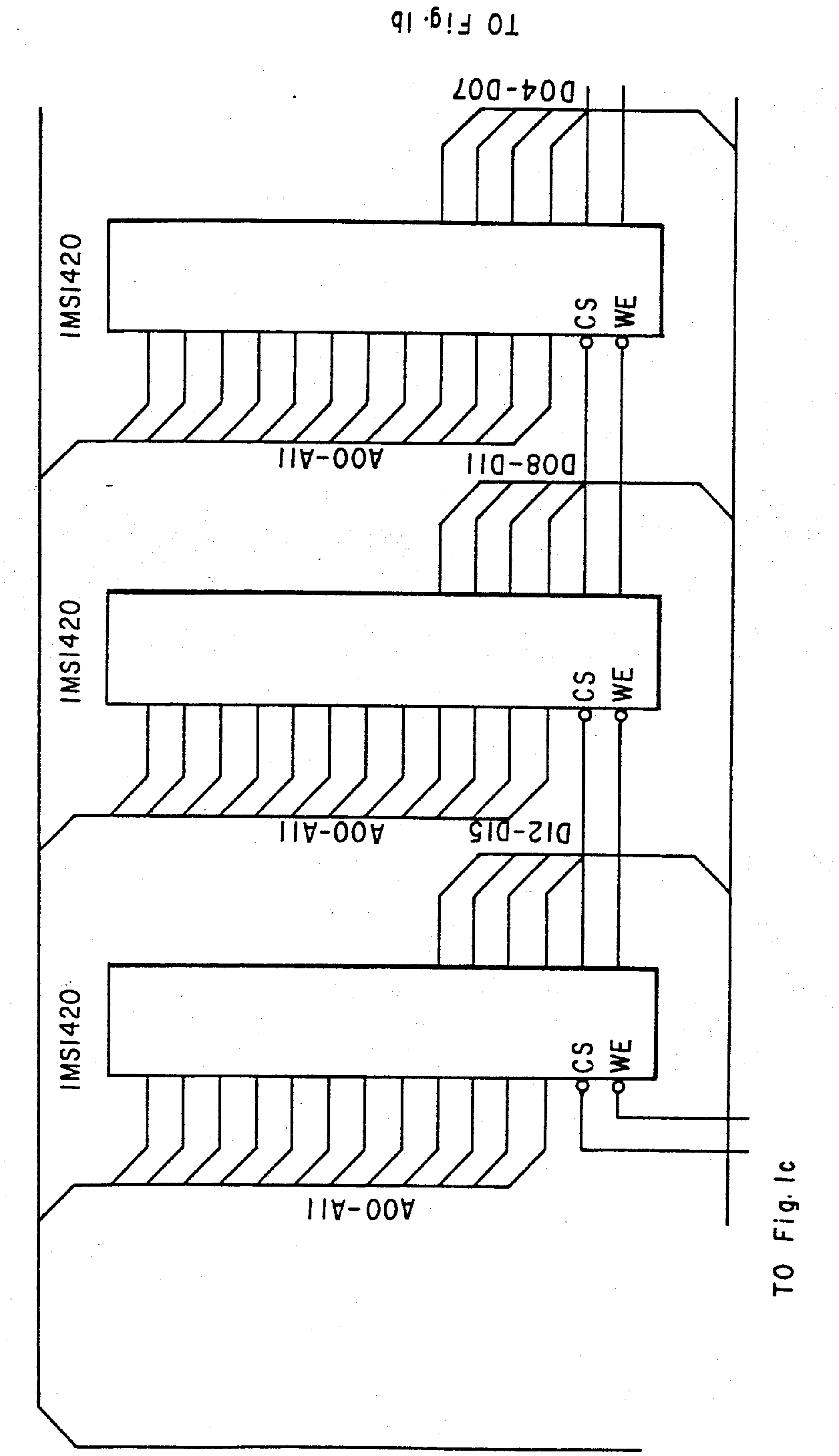
TO Fig. 1b
D04-D07
IMS1420
CS
WE
A00-A11
D08-D11
IMS1420
CS
WE
A00-A11
D12-D15
IMS1420
CS
WE
A00-A11
TO Fig. 1c

Fig. 1a

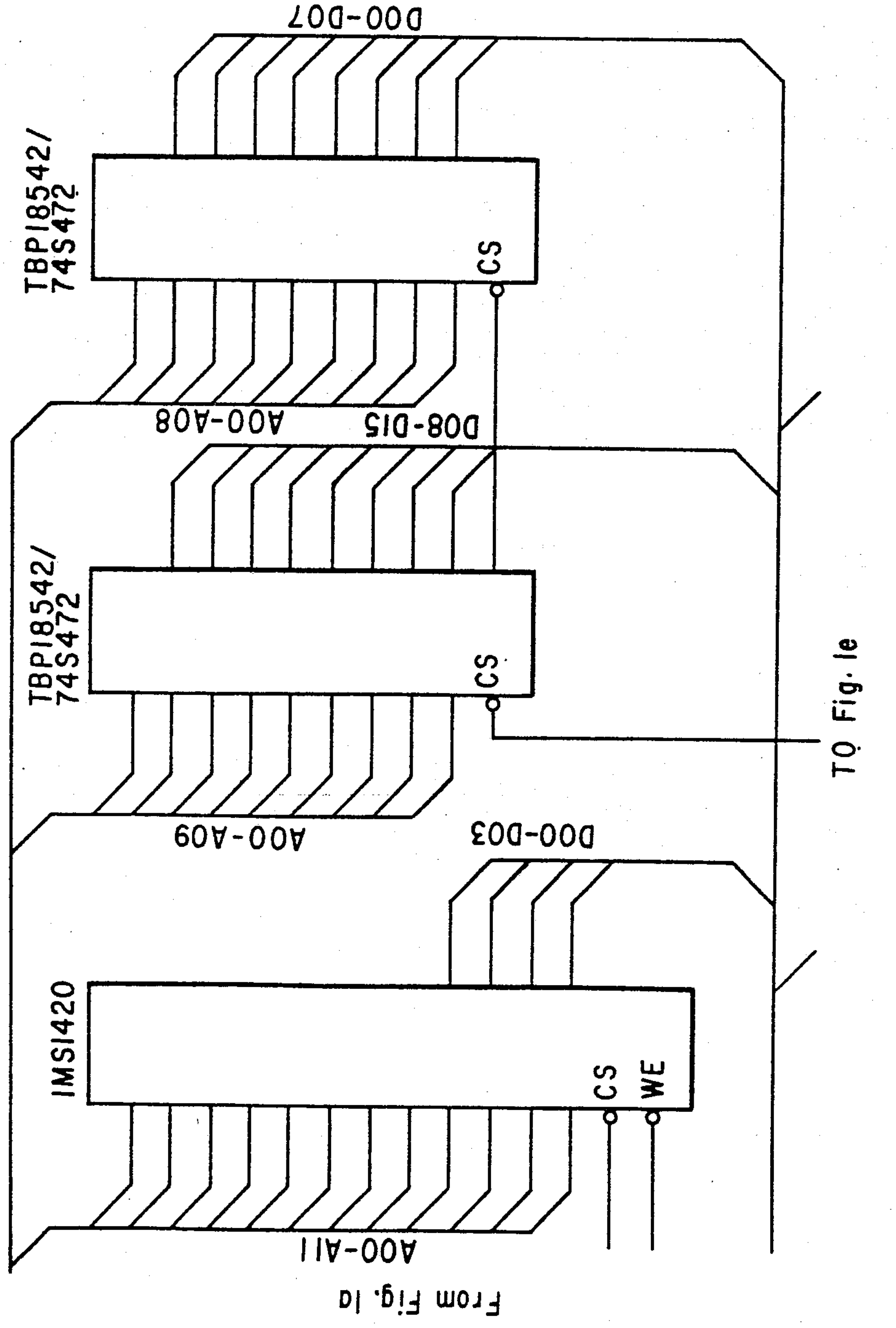
TBP18542/
74S472
CS
D00-D07
A00-A08
D08-D15
TBP18542/
74S472
CS
TO Fig. 1e
A00-A09
D00-D03
IMS1420
CS
WE
A00-A11
From Fig. 1a

Fig. 1b

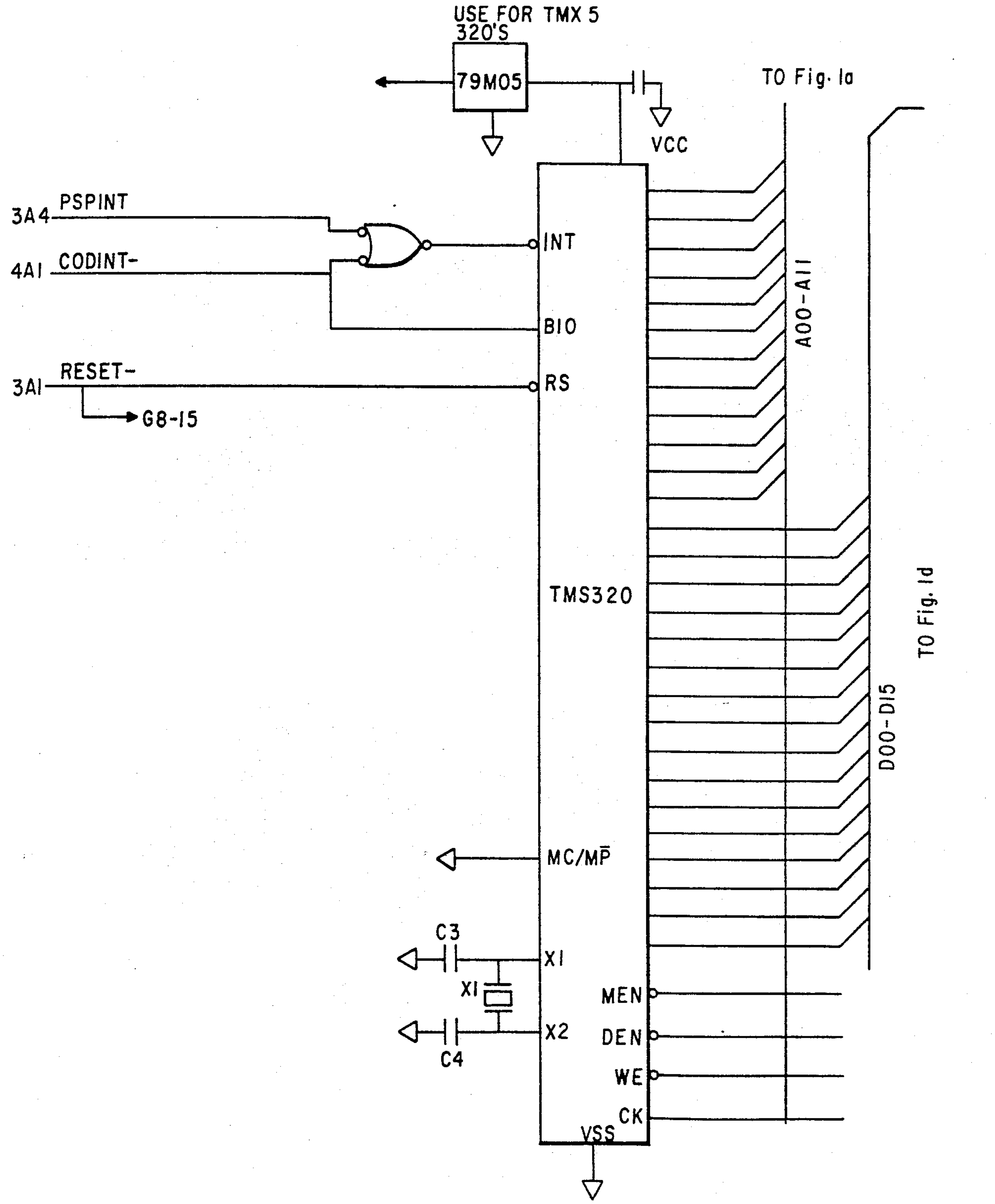
USE FOR TMX 5 320'S
79M05
VCC
TO Fig. Ia
3A4 PSPINT
4AI CODINT-
INT
BIO
3AI RESET-
RS
G8-15
A00-A11
TMS320
TO Fig. Id
D00-D15
MC/MP̄
C3
X1
XI
X2
C4
MEN
DEN
WE
CK
VSS

Fig. Ic

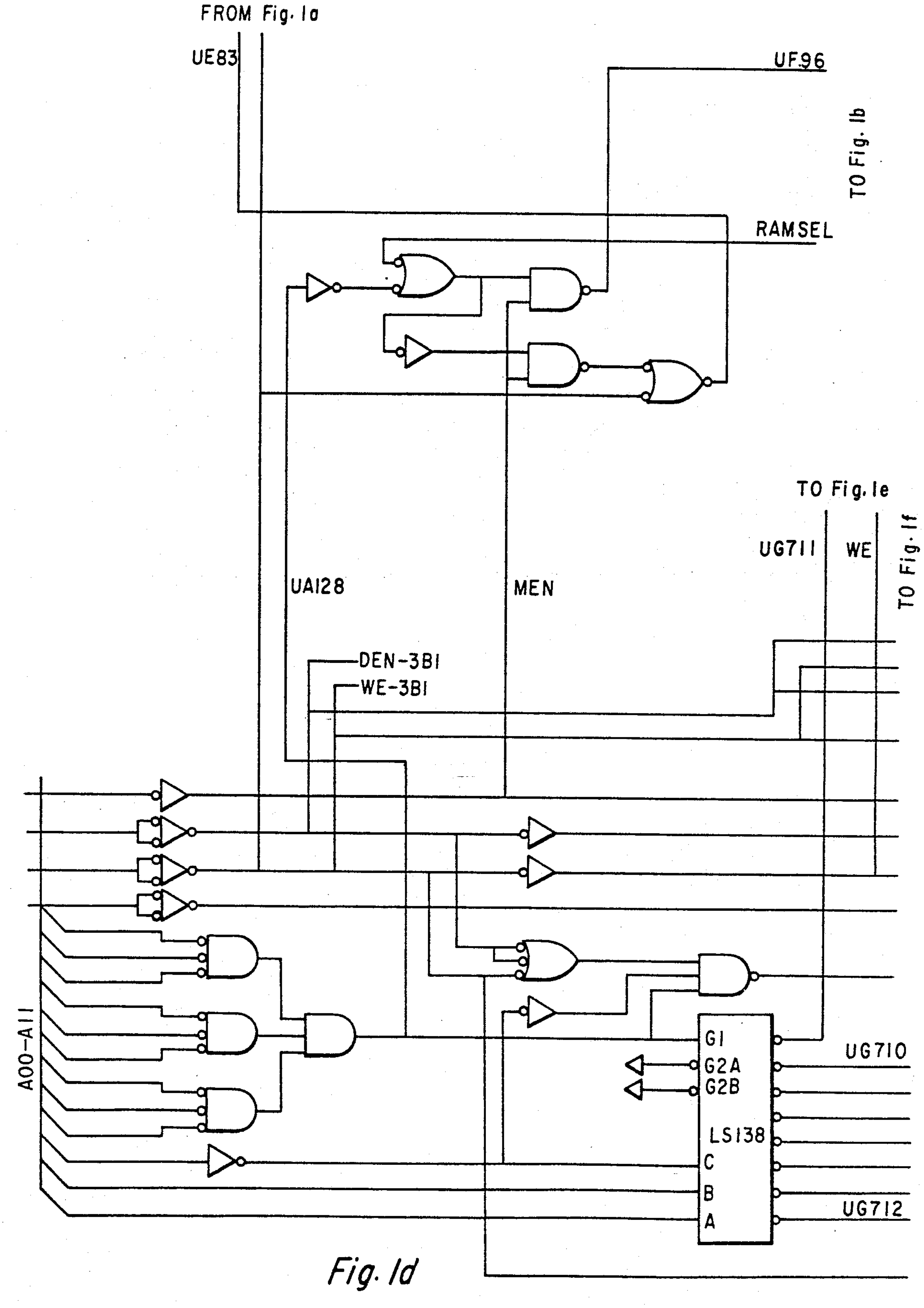
FROM Fig. 1a
UE83
UF96
TO Fig. 1b
RAMSEL
TO Fig. 1e
UG711
WE
TO Fig. 1f
UA128
MEN
DEN-3B1
WE-3B1
A00-A11
G1
G2A
G2B
LS138
C
B
A
UG710
UG712

Fig. 1d

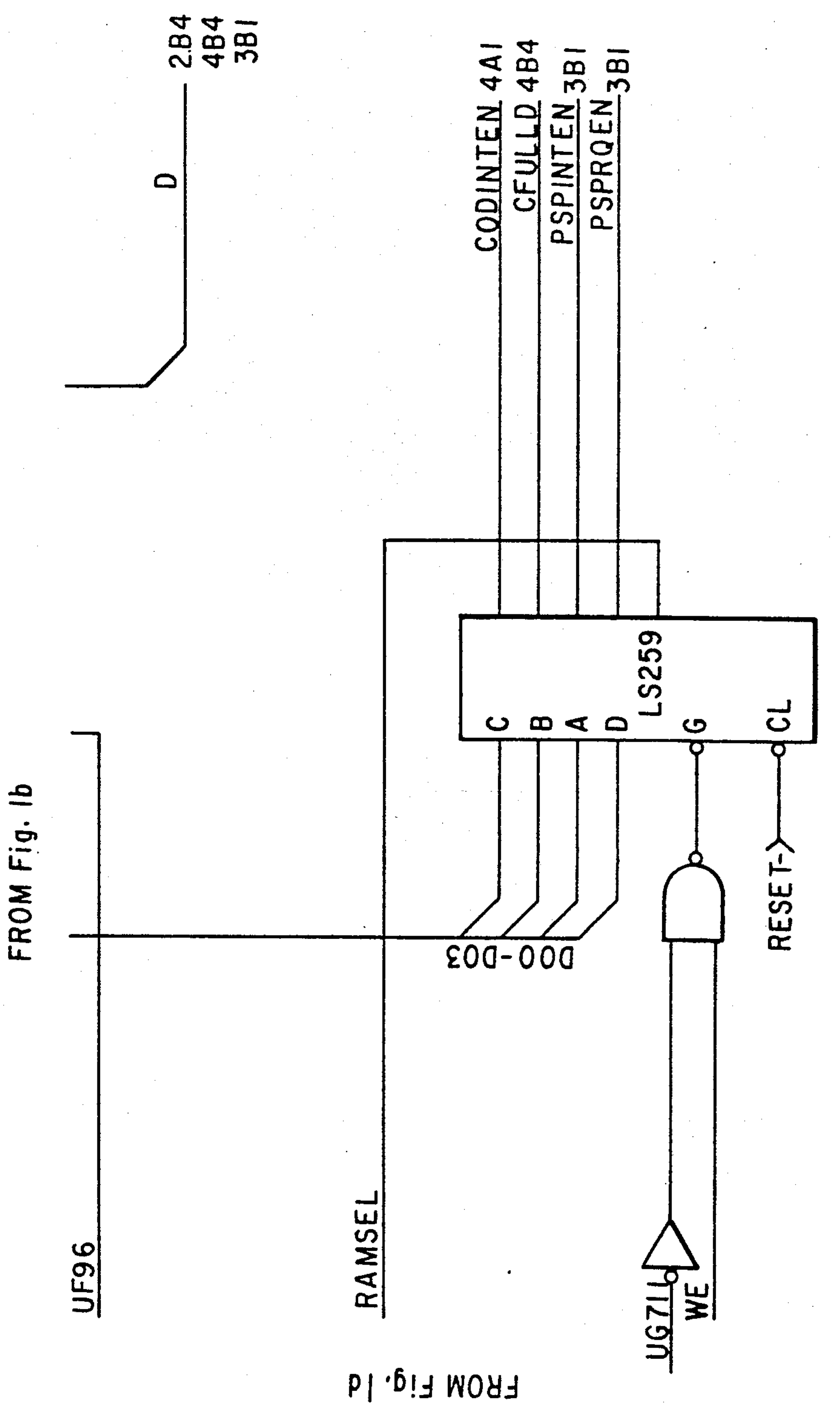
FROM Fig. 1b
UF96
RAMSEL
UG71L
WE
FROM Fig. 1d
D00-D03
C
B
A
D
LS259
G
CL
RESET-
CODINTEN 4A1
CFULLD 4B4
PSPINTEN 3B1
PSPRQEN 3B1
D
2B4
4B4
3B1

Fig. 1e

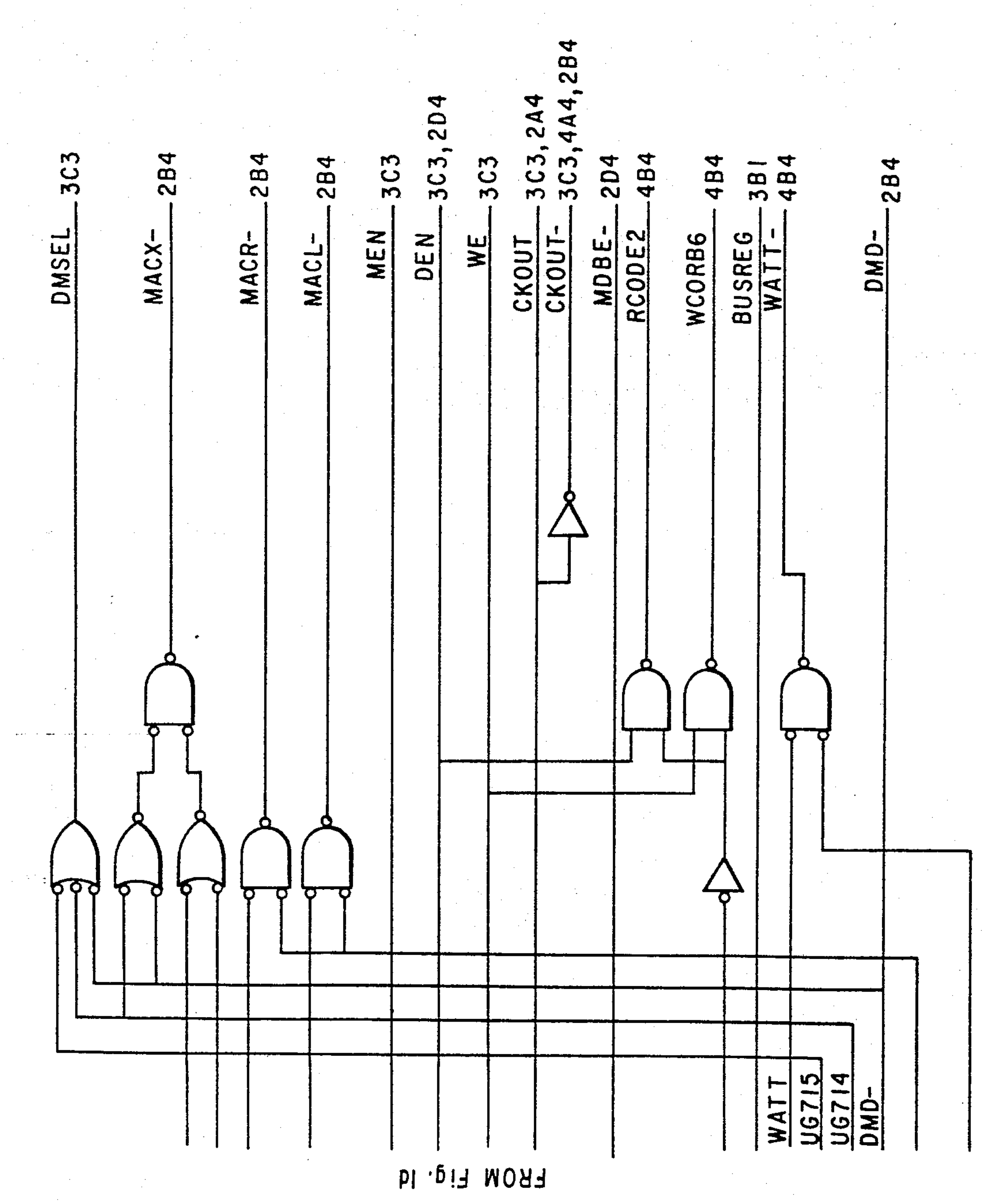
DMSEL 3C3
MACX- 2B4
MACR- 2B4
MACL- 2B4
MEN 3C3
DEN 3C3,2D4
WE 3C3
CKOUT 3C3,2A4
CKOUT- 3C3,4A4,2B4
MDBE- 2D4
RCODE2 4B4
WCORB6 4B4
BUSREG 3B1
WATT- 4B4
DMD- 2B4
WATT
UG715
UG714
DMD-
FROM Fig. 1d

Fig. 1f

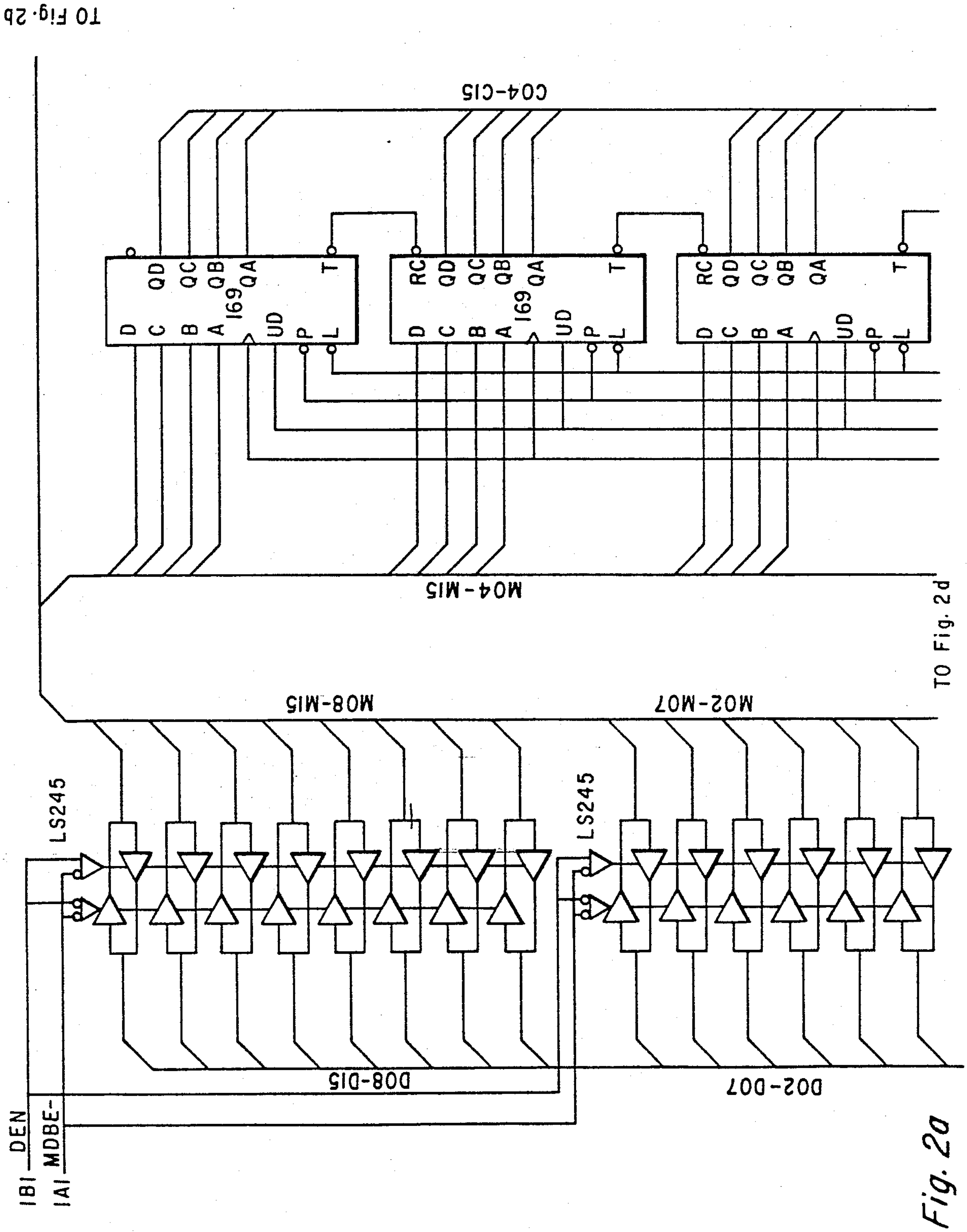
TO Fig. 2b
C04-C15
QD QC QB QA T
RC QD QC QB QA T
D C B A UD P L
169
M04-M15
TO Fig. 2d
M08-M15
M02-M07
LS245
D08-D15
D02-D07
IBI DEN
IAI MDBE-

Fig. 2a

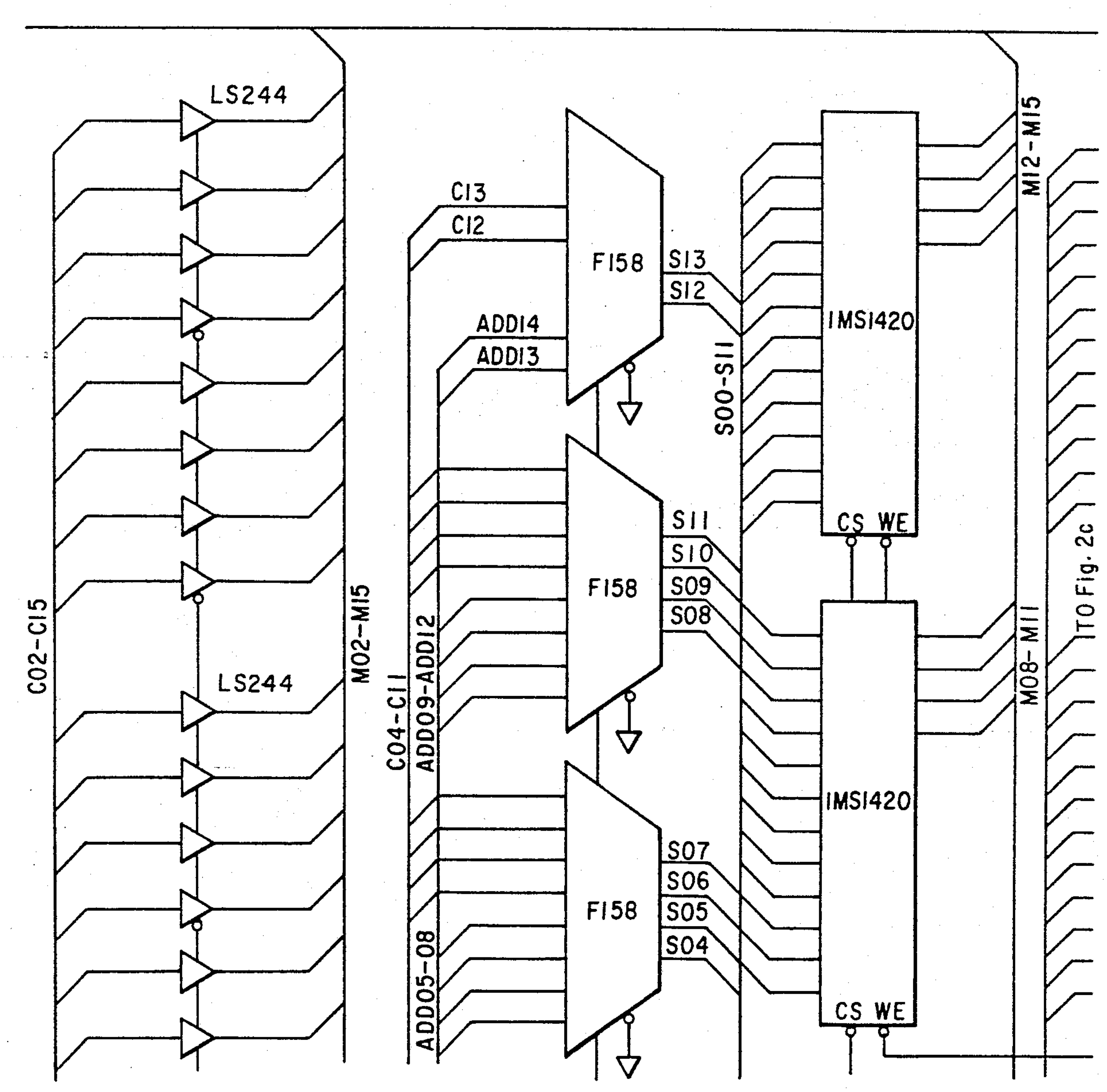


TO Fig. 2e

*Fig. 2b*

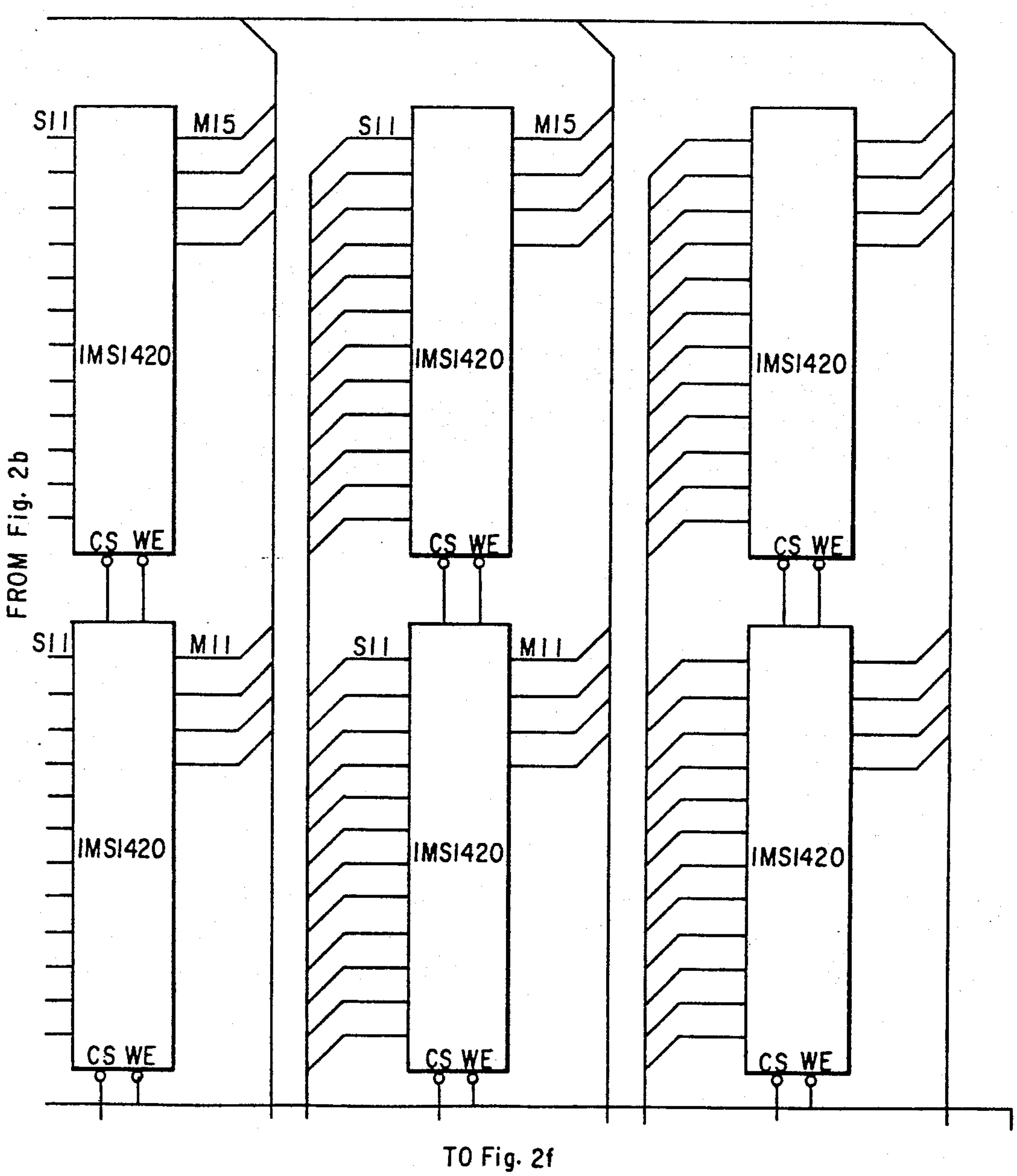
S11
M15
IMS1420
CS WE
S11
M11
IMS1420
CS WE
S11
M15
IMS1420
CS WE
S11
M11
IMS1420
CS WE
IMS1420
CS WE
IMS1420
CS WE
FROM Fig. 2b
TO Fig. 2f

*Fig.2c*

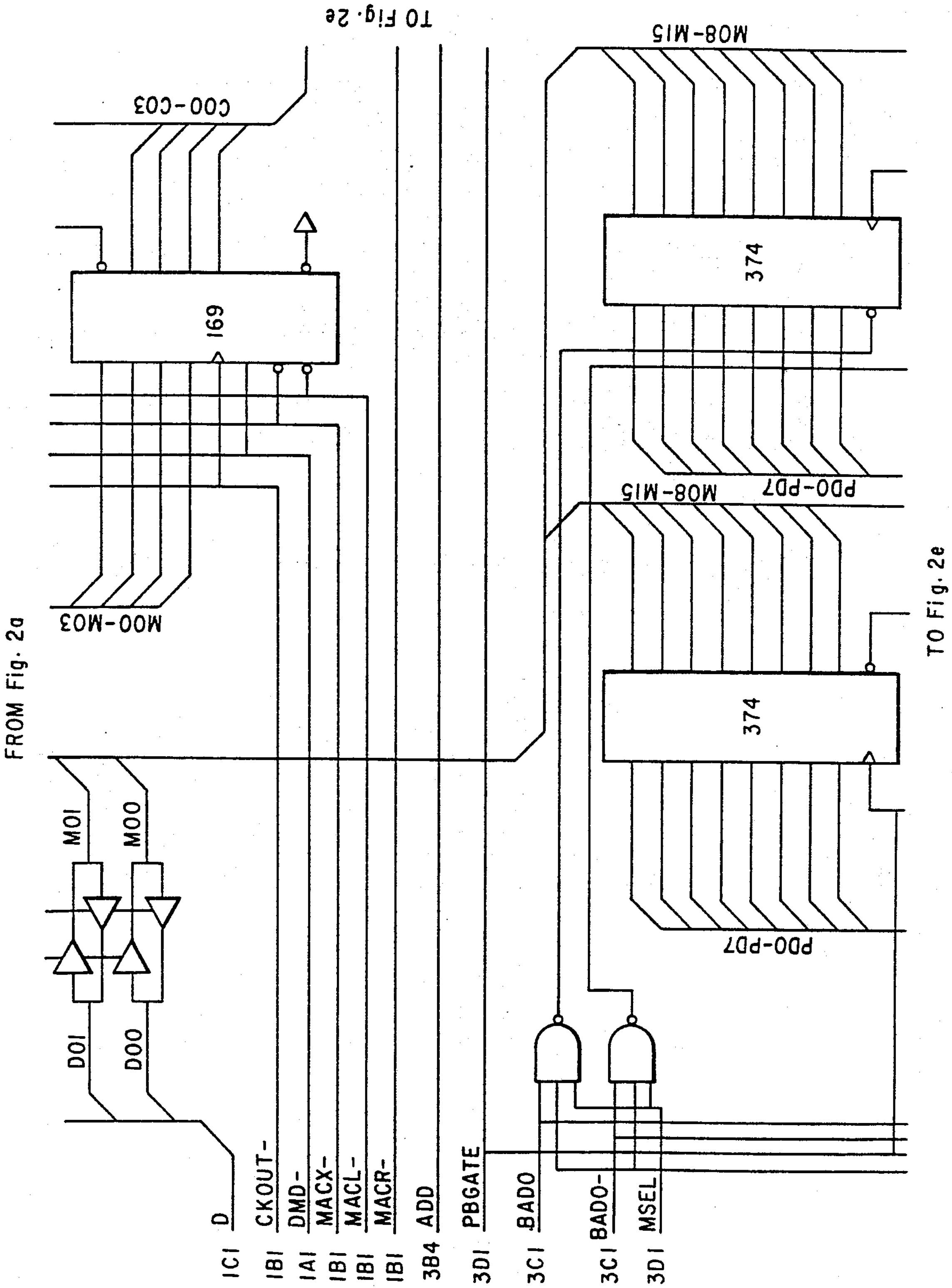

FROM Fig. 2a
TO Fig. 2e
TO Fig. 2e
C00-C03
169
M00-M03
M08-M15
374
PD0-PD7
M08-M15
374
PD0-PD7
MOI
MOO
DOI
DOO
1C1 D
1B1 CKOUT-
1A1 DMD-
1B1 MACX-
1B1 MACL-
1B1 MACR-
3B4 ADD
3D1 PBGATE
3C1 BADO
3C1 BADO-
3D1 MSEL


Fig.2d

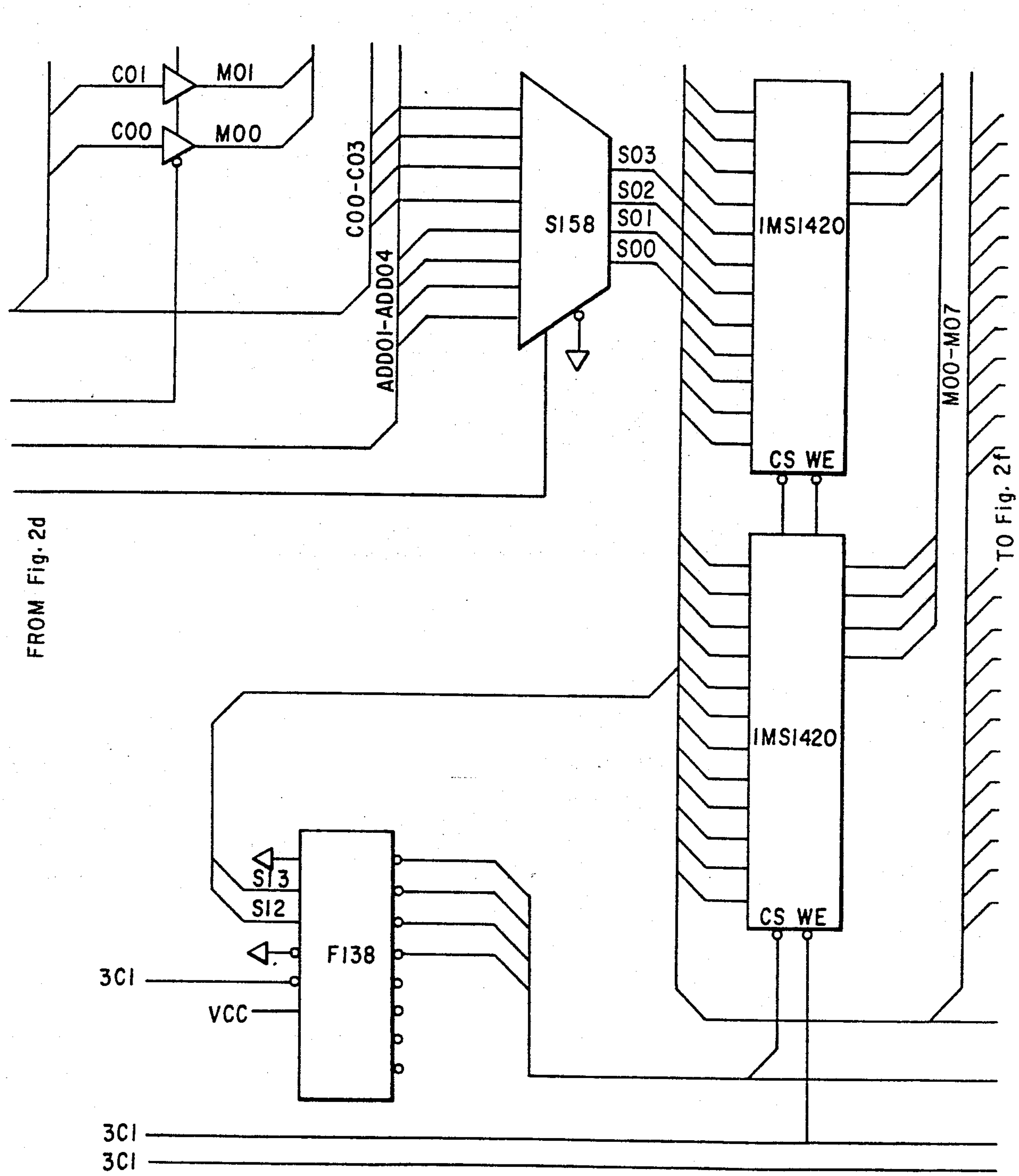
C01
M01
C00
M00
C00-C03
ADD01-ADD04
S158
S03
S02
S01
S00
IMS1420
CS WE
IMS1420
CS WE
M00-M07
TO Fig. 2f
FROM Fig. 2d
S13
S12
F138
3C1
VCC
3C1
3C1

Fig.2e

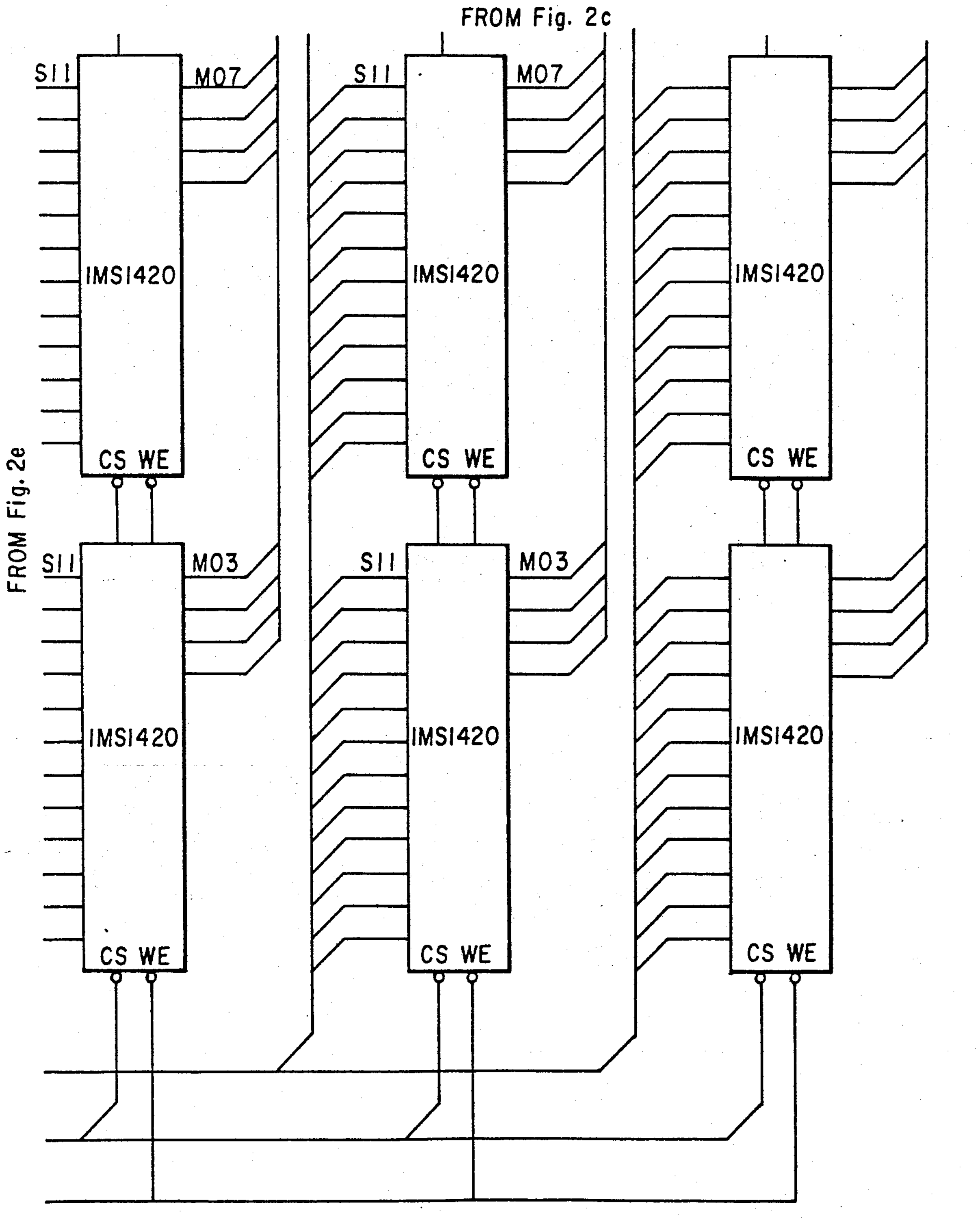
FROM Fig. 2c
FROM Fig. 2e
S11
M07
S11
M07
IMS1420
IMS1420
IMS1420
CS WE
CS WE
CS WE
S11
M03
S11
M03
IMS1420
IMS1420
IMS1420
CS WE
CS WE
CS WE

*Fig. 2f*

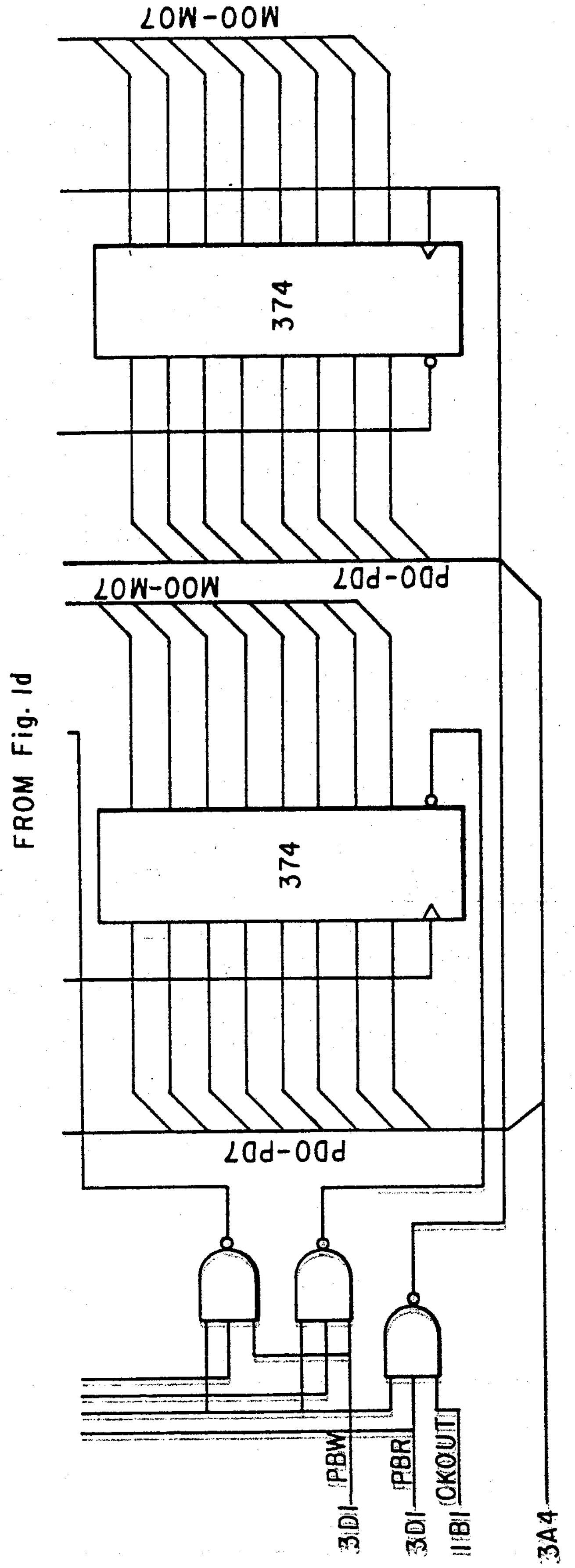
M00-M07
374
PD0-PD7
M00-M07
FROM Fig. Id
374
PD0-PD7
3DI PBW
3DI PBR
11BI QKOUT
3A4

Fig. 2g

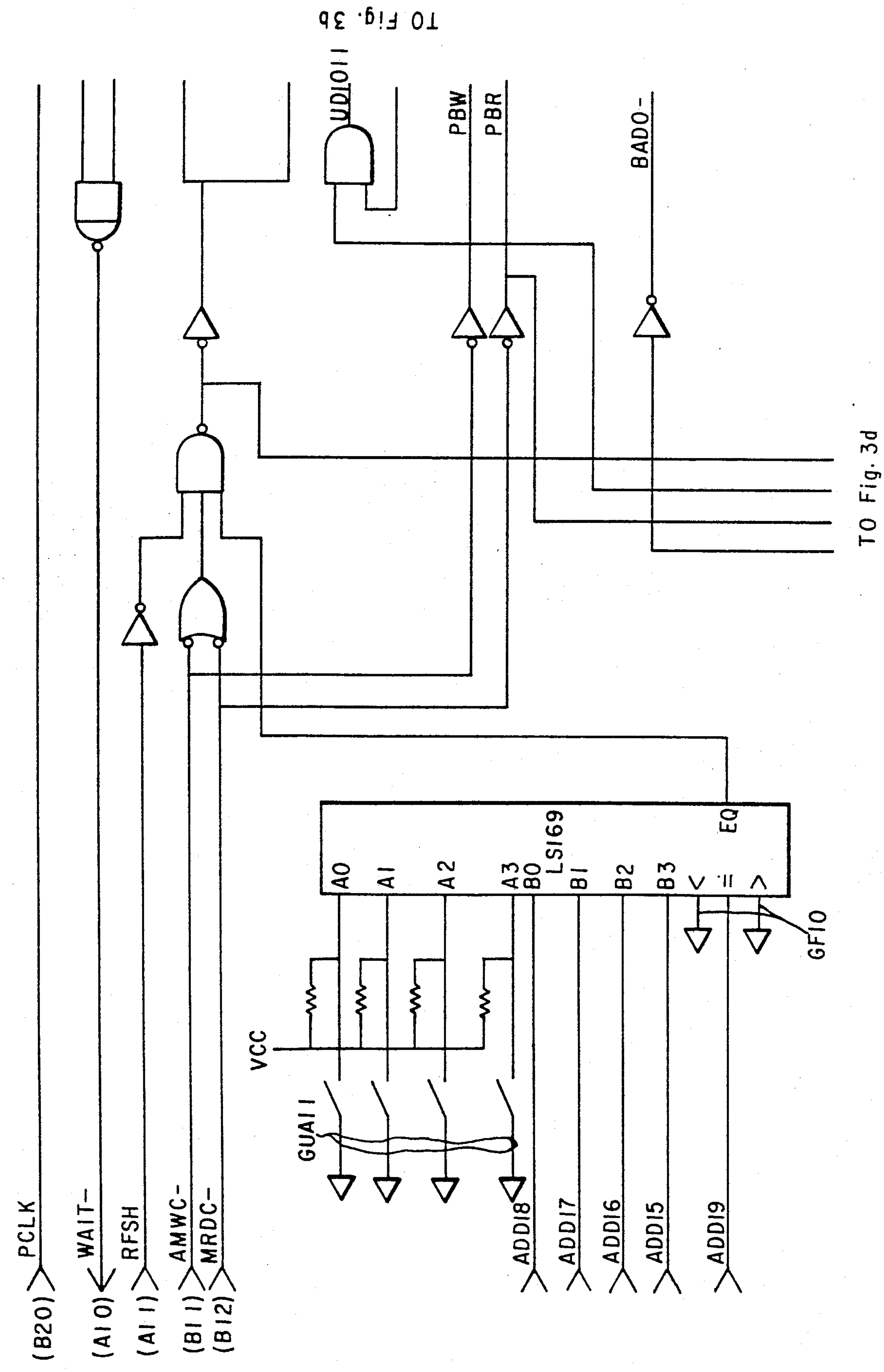
TO Fig. 3b
UDIO11
PBW
PBR
BADO-
TO Fig. 3d
LS169
A0
A1
A2
A3
B0
B1
B2
B3
<
=
>
EQ
GF10
VCC
GUA11
PCLK
(B20)
WAIT-
(A10)
RFSH
(A11)
AMWC-
(B11)
MRDC-
(B12)
ADDI8
ADDI7
ADDI6
ADDI5
ADDI9

Fig. 3a

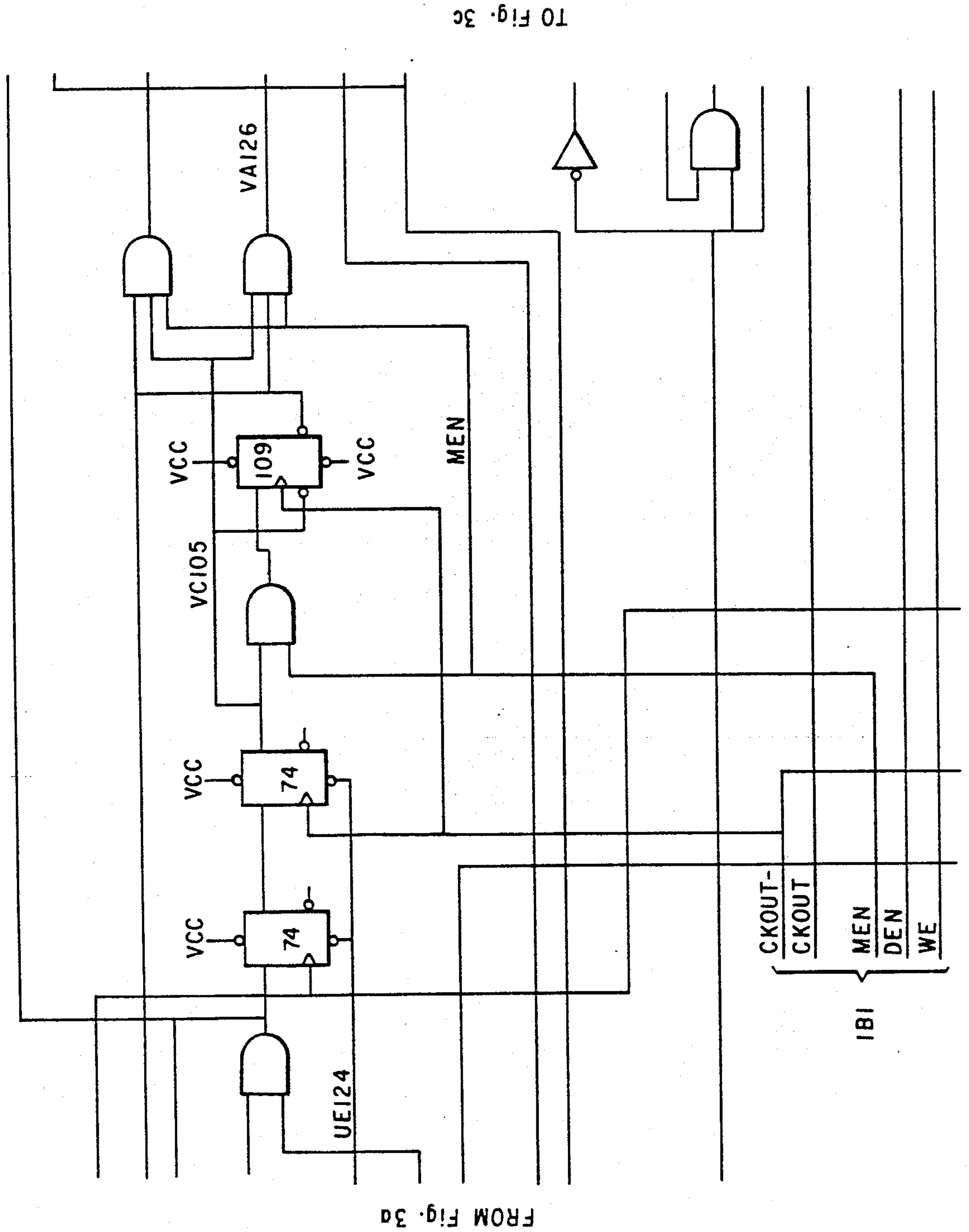
TO Fig. 3c
VA126
VCC
109
VCC
MEN
VC105
VCC
74
VCC
74
UE124
CKOUT-
CKOUT
MEN
DEN
WE
IBI
TO Fig. 3e
FROM Fig. 3a

Fig. 3b

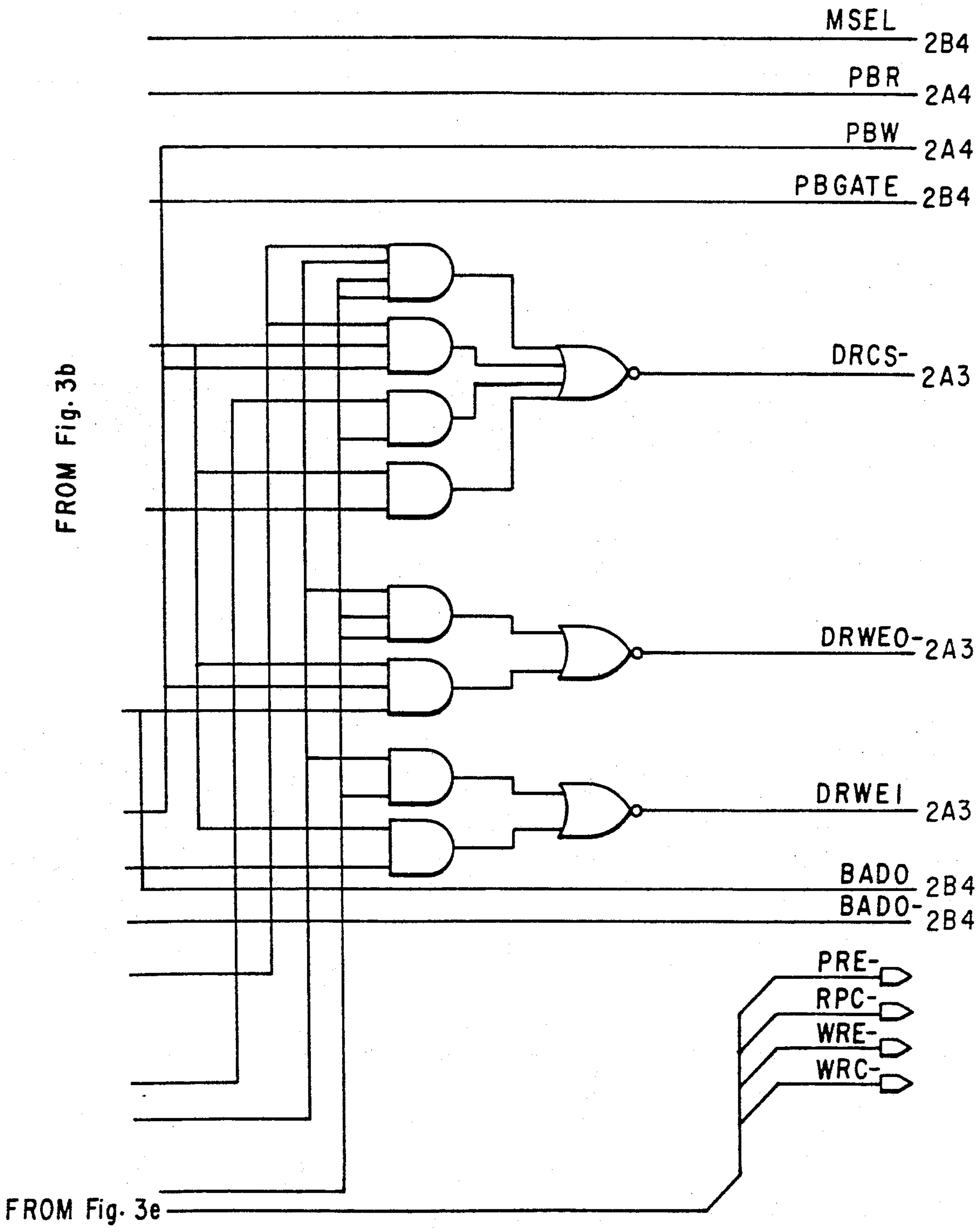
MSEL
2B4
PBR
2A4
PBW
2A4
PBGATE
2B4
FROM Fig. 3b
DRCS-
2A3
DRWEO-
2A3
DRWEI
2A3
BADO
2B4
BADO-
2B4
PRE-
RPC-
WRE-
WRC-
FROM Fig. 3e

*Fig. 3c*

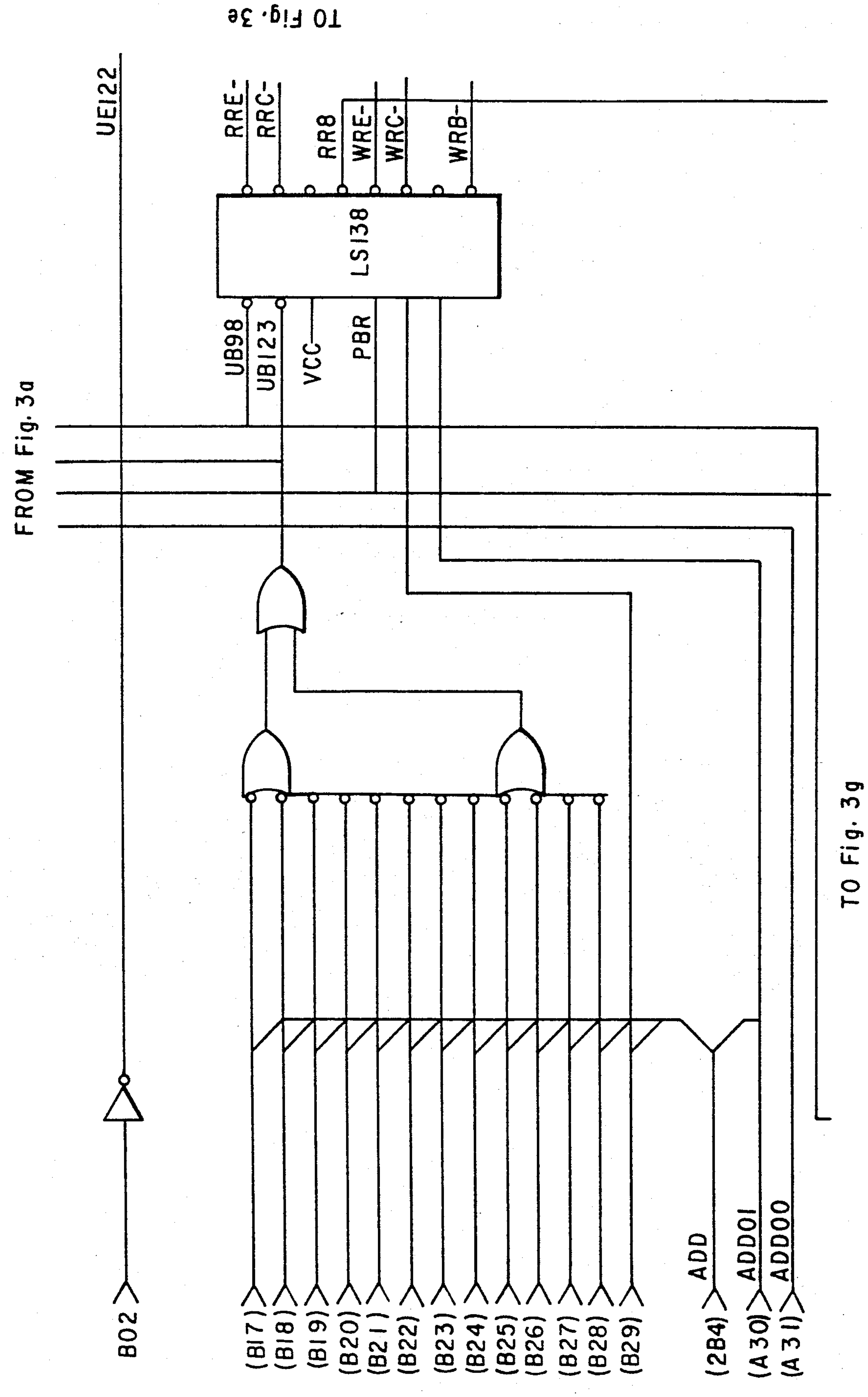
TO Fig. 3e
UE122
RRE-
RRC-
RR8
WRE-
WRC-
WRB-
LS138
UB98
UB123
VCC
PBR
FROM Fig. 3a
TO Fig. 3g
B02
(B17)
(B18)
(B19)
(B20)
(B21)
(B22)
(B23)
(B24)
(B25)
(B26)
(B27)
(B28)
(B29)
ADD
ADD01
ADD00
(2B4)
(A30)
(A31)

Fig. 3d

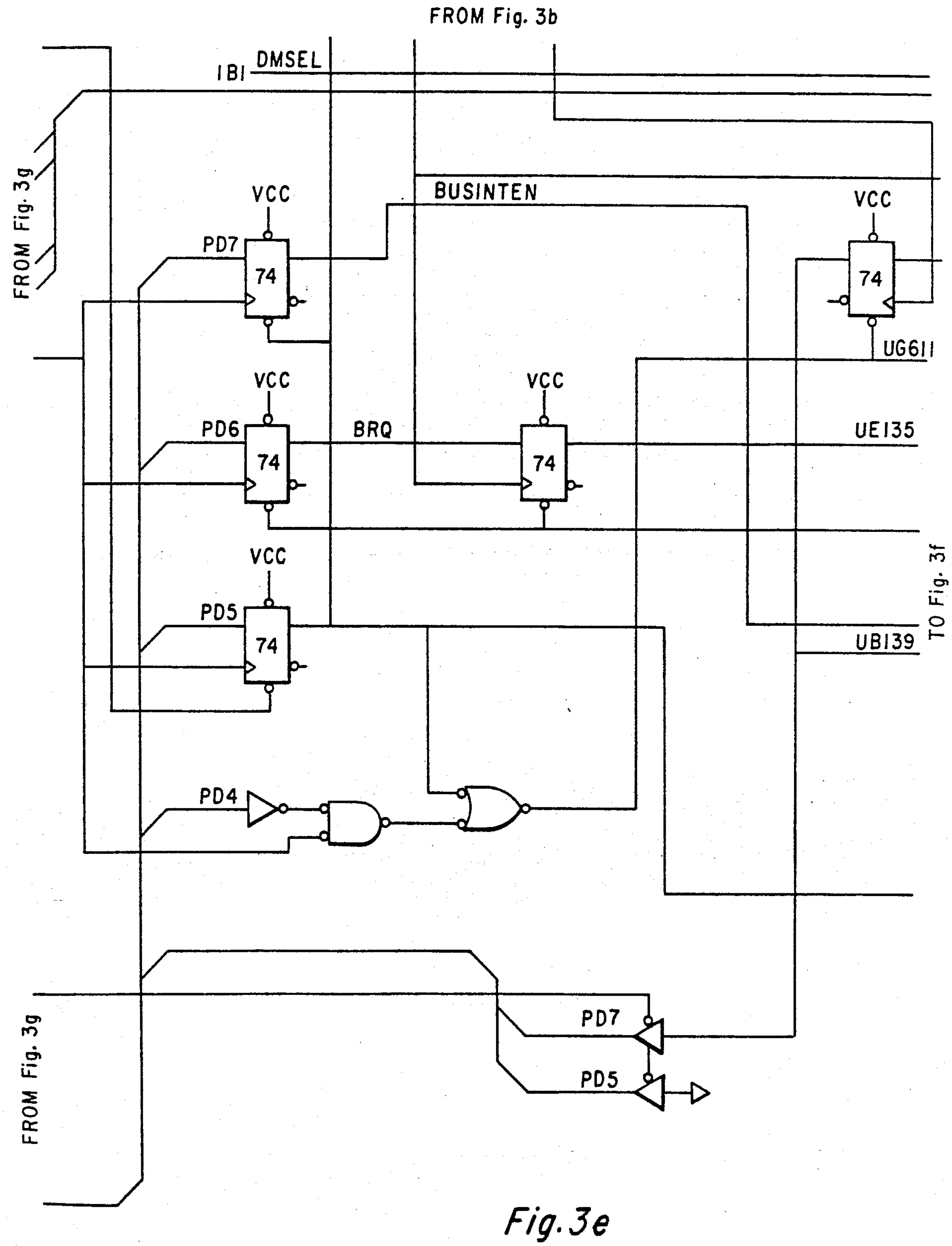
FROM Fig. 3b
DMSEL
IBI
FROM Fig. 3g
BUSINTEN
VCC
PD7
74
VCC
74
UG611
VCC
PD6
74
BRQ
VCC
74
UE135
VCC
PD5
74
TO Fig. 3f
UB139
PD4
FROM Fig. 3g
PD7
PD5

Fig.3e

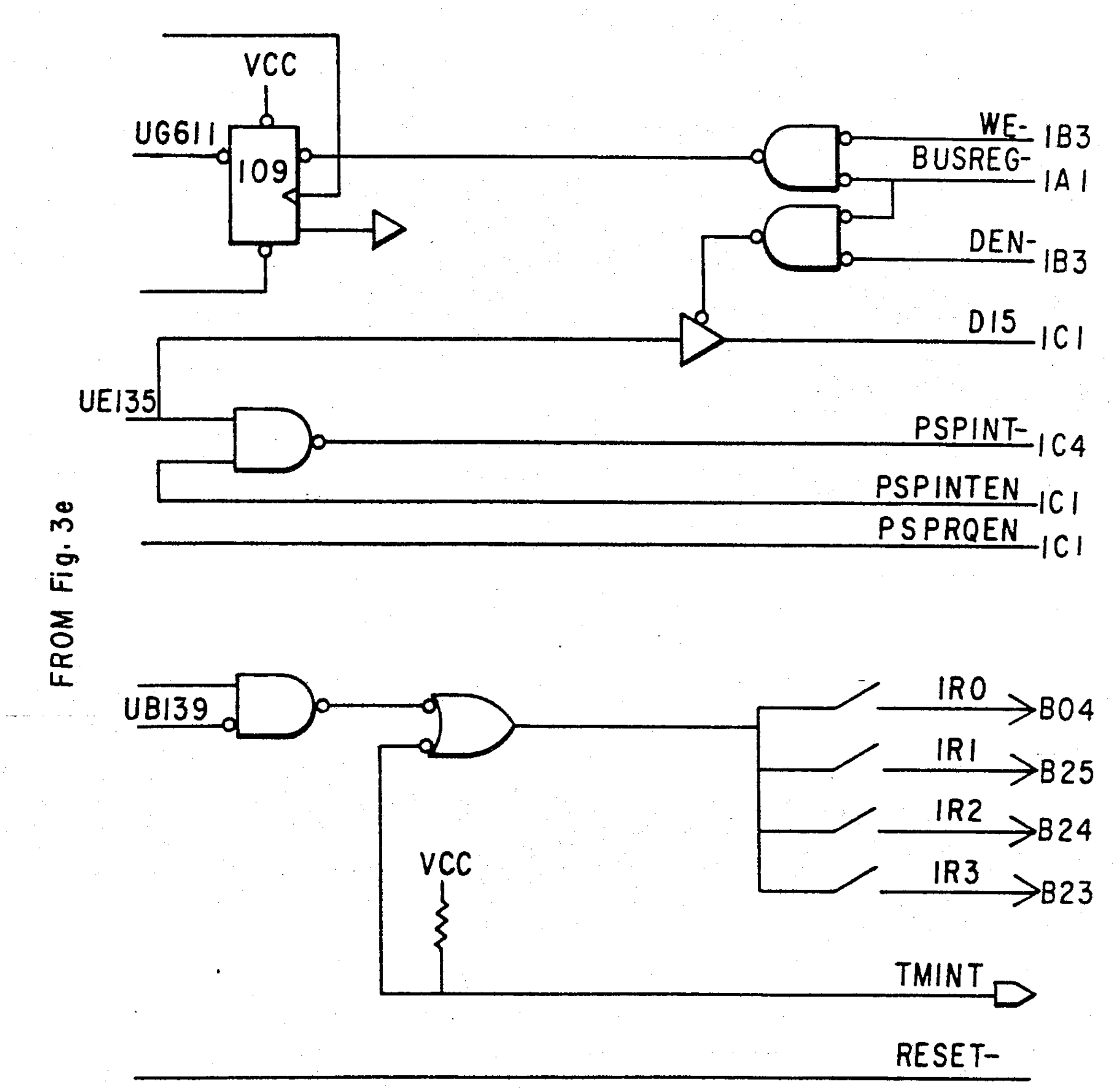
VCC
UG611
109
WE-
1B3
BUSREG-
1A1
DEN-
1B3
D15
1C1
UE135
PSPINT-
1C4
PSPINTEN
1C1
PSPRQEN
1C1
FROM Fig. 3e
UB139
IR0
B04
IR1
B25
IR2
B24
IR3
B23
VCC
TMINT
RESET-

Fig. 3f

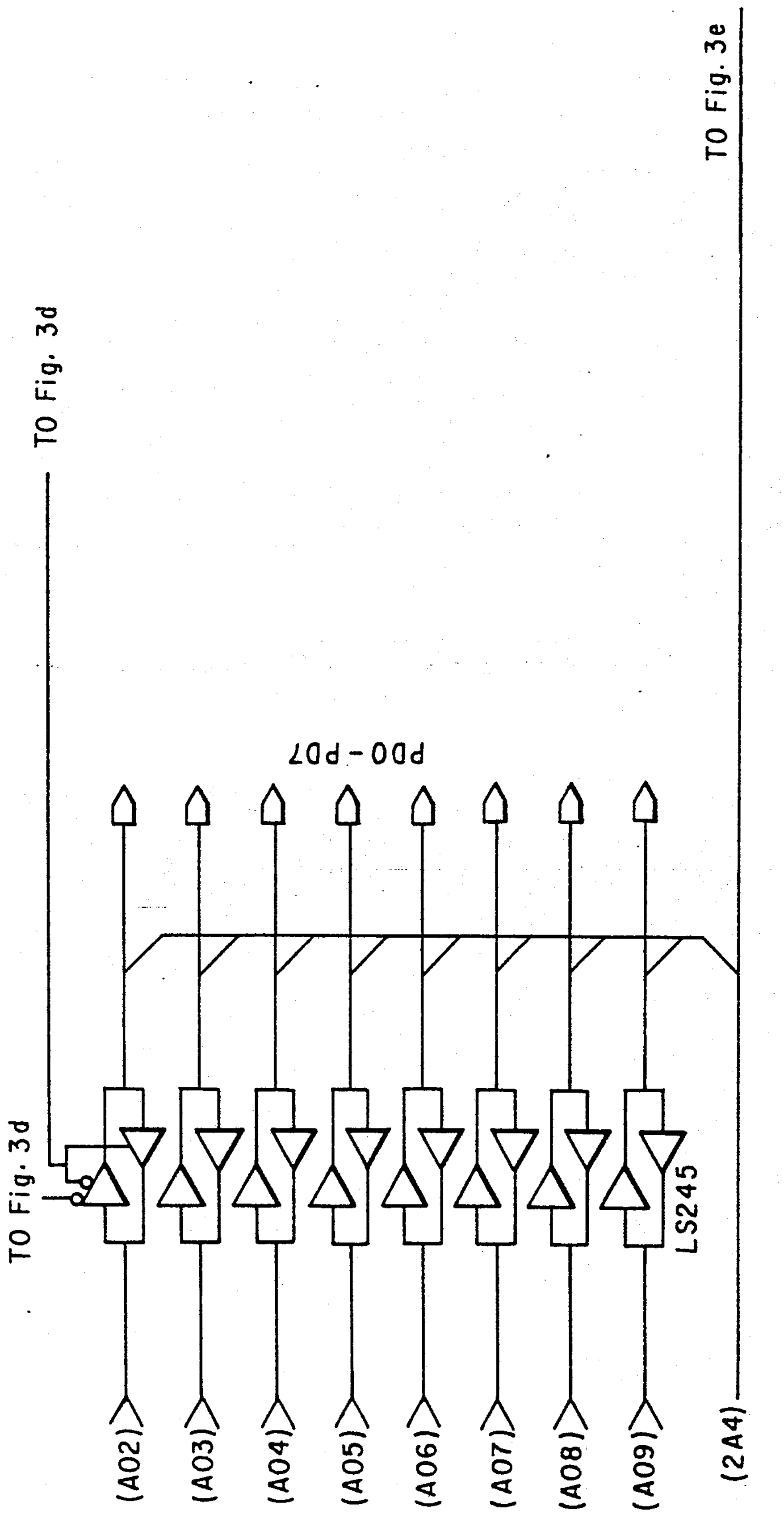
TO Fig. 3e
TO Fig. 3d
PD0 - PD7
TO Fig. 3d
LS245
(A02)
(A03)
(A04)
(A05)
(A06)
(A07)
(A08)
(A09)
(2A4)

Fig. 3g

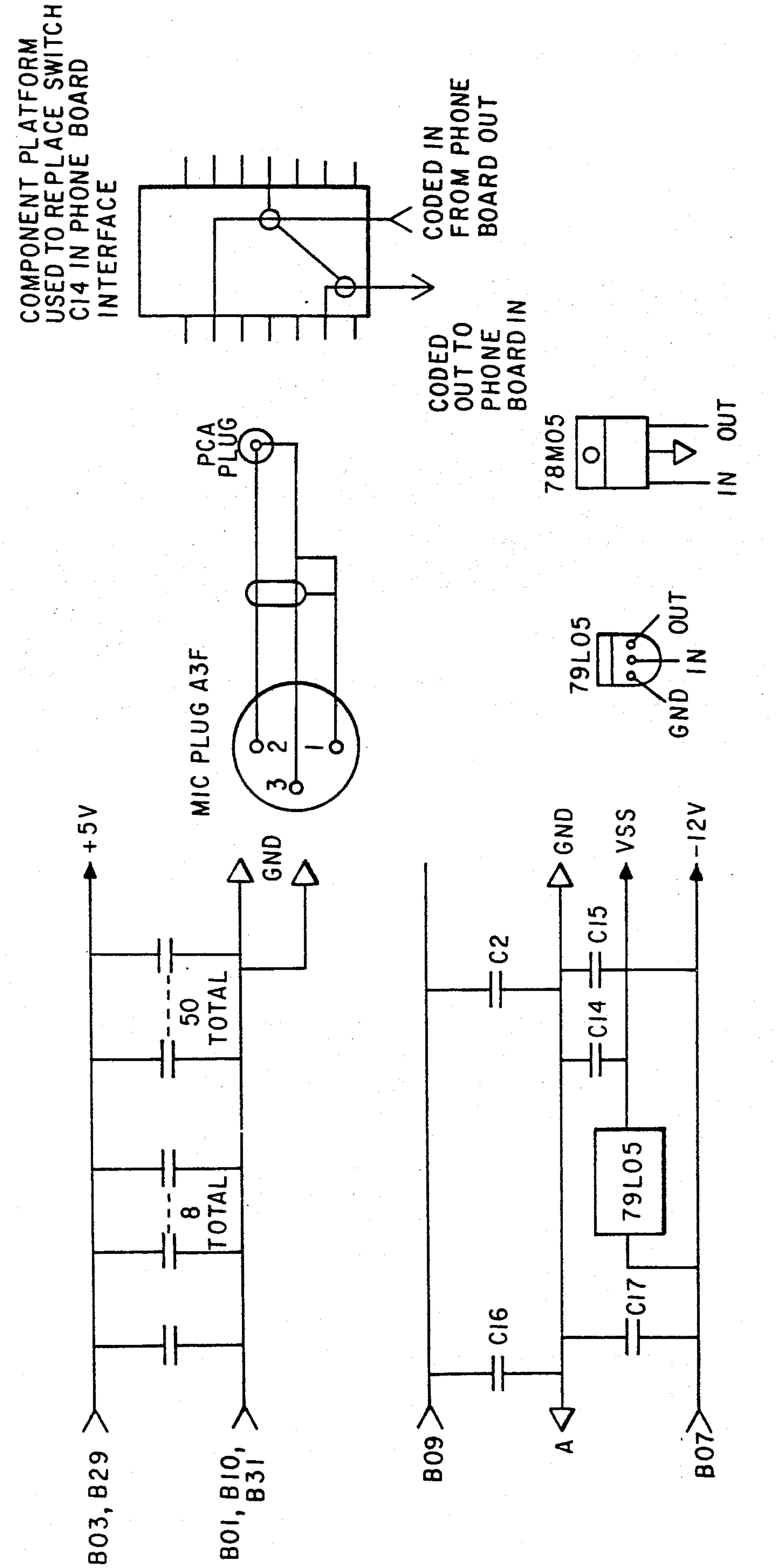
COMPONENT PLATFORM USED TO REPLACE SWITCH C14 IN PHONE BOARD INTERFACE
CODED IN FROM PHONE BOARD OUT
CODED OUT TO PHONE BOARD IN
PCA PLUG
MIC PLUG A3F
3
2
1
78M05
IN
OUT
79L05
GND
IN
OUT
+5V
GND
50 TOTAL
8 TOTAL
B03, B29
B01, B10, B31
GND
VSS
-12V
C2
C15
C14
79L05
C16
C17
B09
A
B07

Fig. 4a

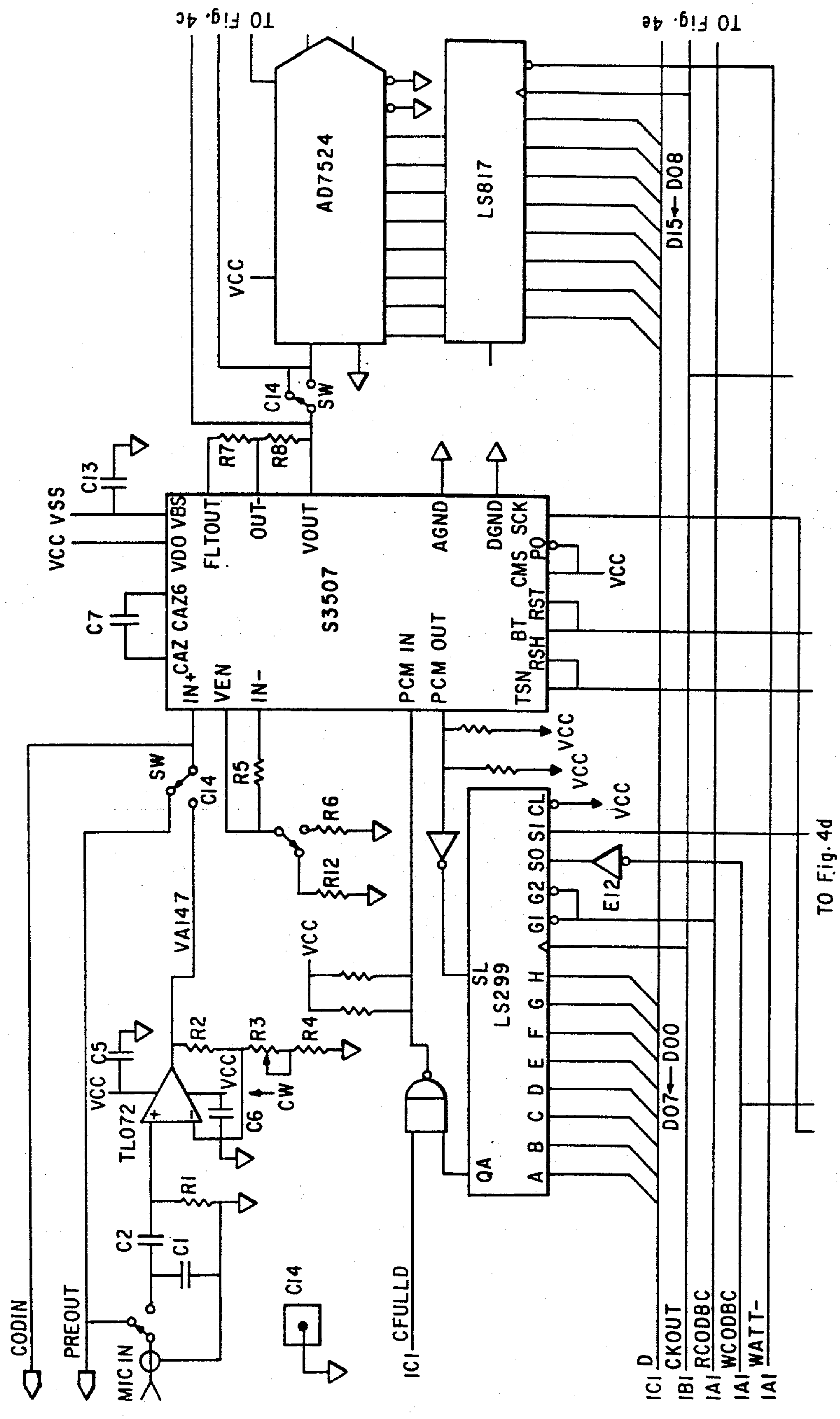
TO Fig. 4c
TO Fig. 4e
AD7524
LS817
VCC
D15←D08
C14
SW
R7
R8
C13
VCC VSS
C7
IN+ CAZ CAZ6 VDO VBS
FLTOUT
OUT-
VOUT
AGND
DGND SCK
CMS PO
BT RST
RSH
TSN
VEN
IN-
S3507
PCM IN
PCM OUT
VCC
R5
R6
R12
VA147
CL
SI
SO
G2
G1
E12
TO Fig. 4d
SL
LS299
QA
A B C D E F G H
D07←D00
C5
C6
R1
R2
R3
R4
CW
TL072
C1
C2
CODIN
PREOUT
MIC IN
C14
CFULLD
IC1
IC1 D
IB1 CKOUT
IA1 RCODBC
IA1 WCODBC
IA1 WATT-

Fig.4b

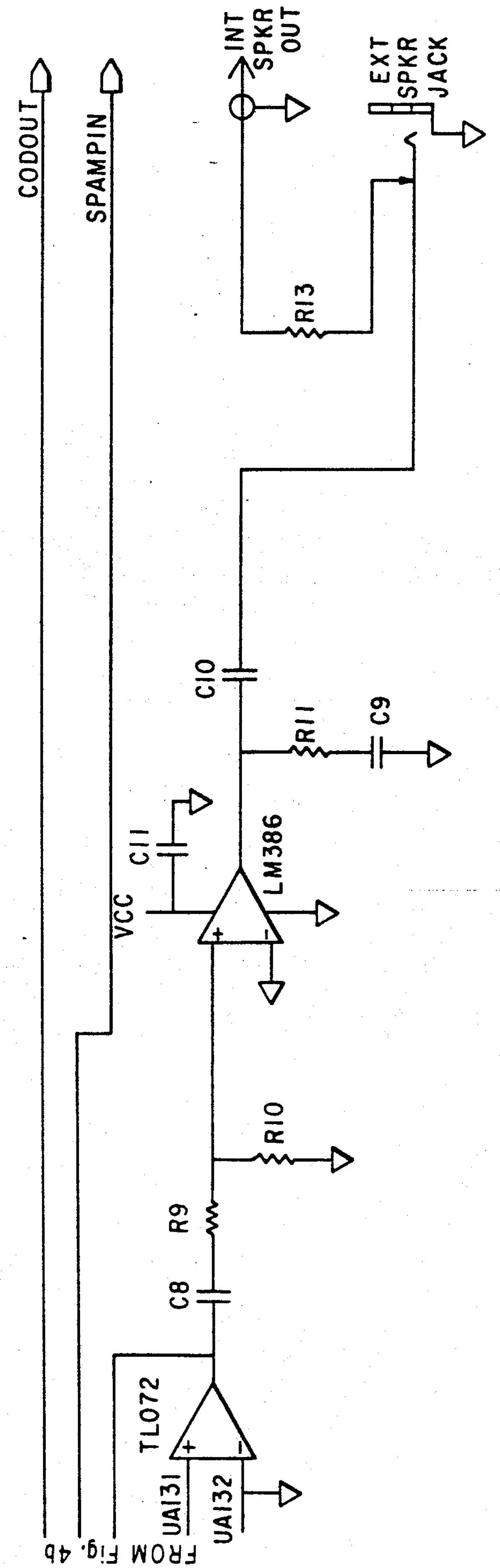
CODOUT
SPAMPIN
INT SPKR OUT
EXT SPKR JACK
R13
C10
R11
C9
C11
VCC
LM386
R10
R9
C8
TL072
UA131
UA132
FROM Fig. 4b

Fig. 4c

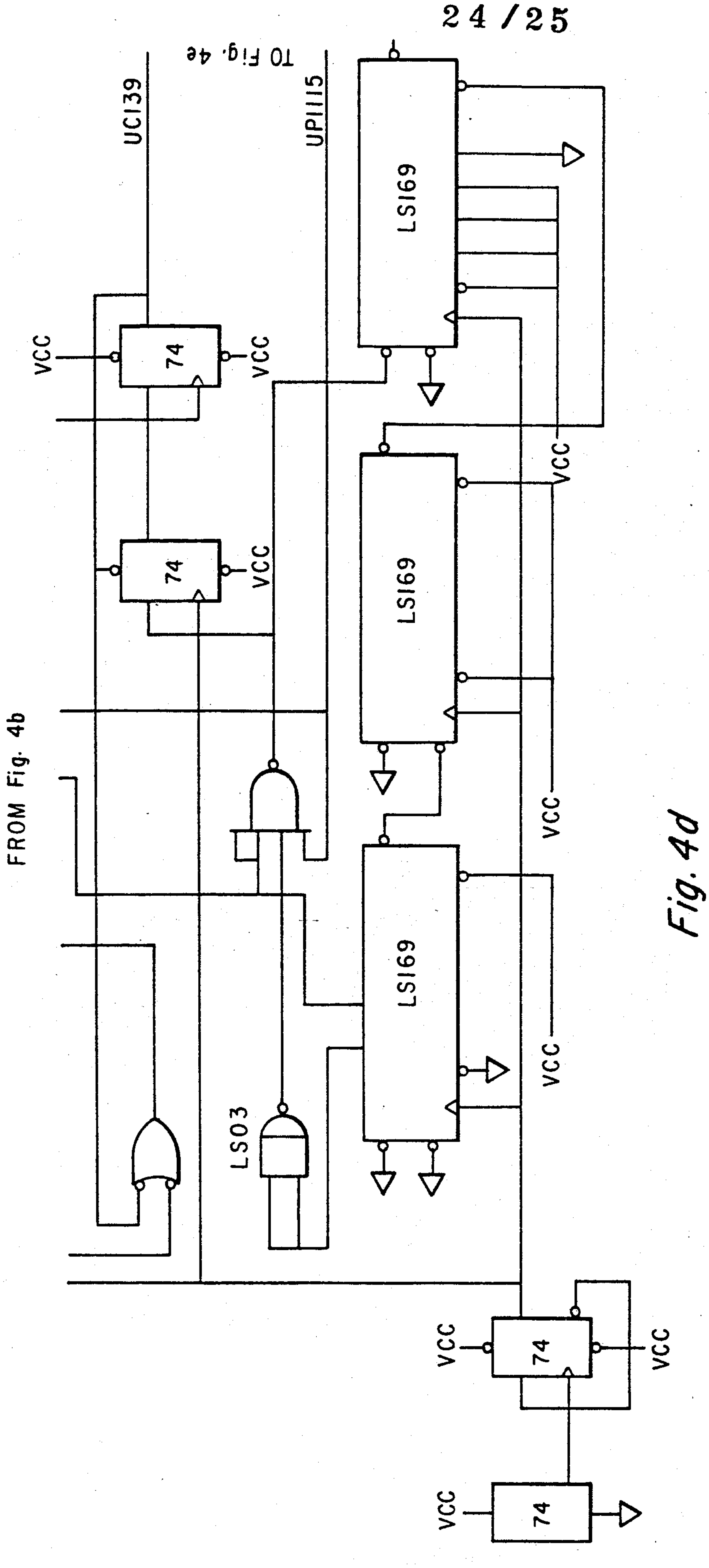
UC139
TO Fig. 4e
UP1115
LS169
LS169
LS169
74
74
74
74
VCC
FROM Fig. 4b
LS03

Fig. 4d

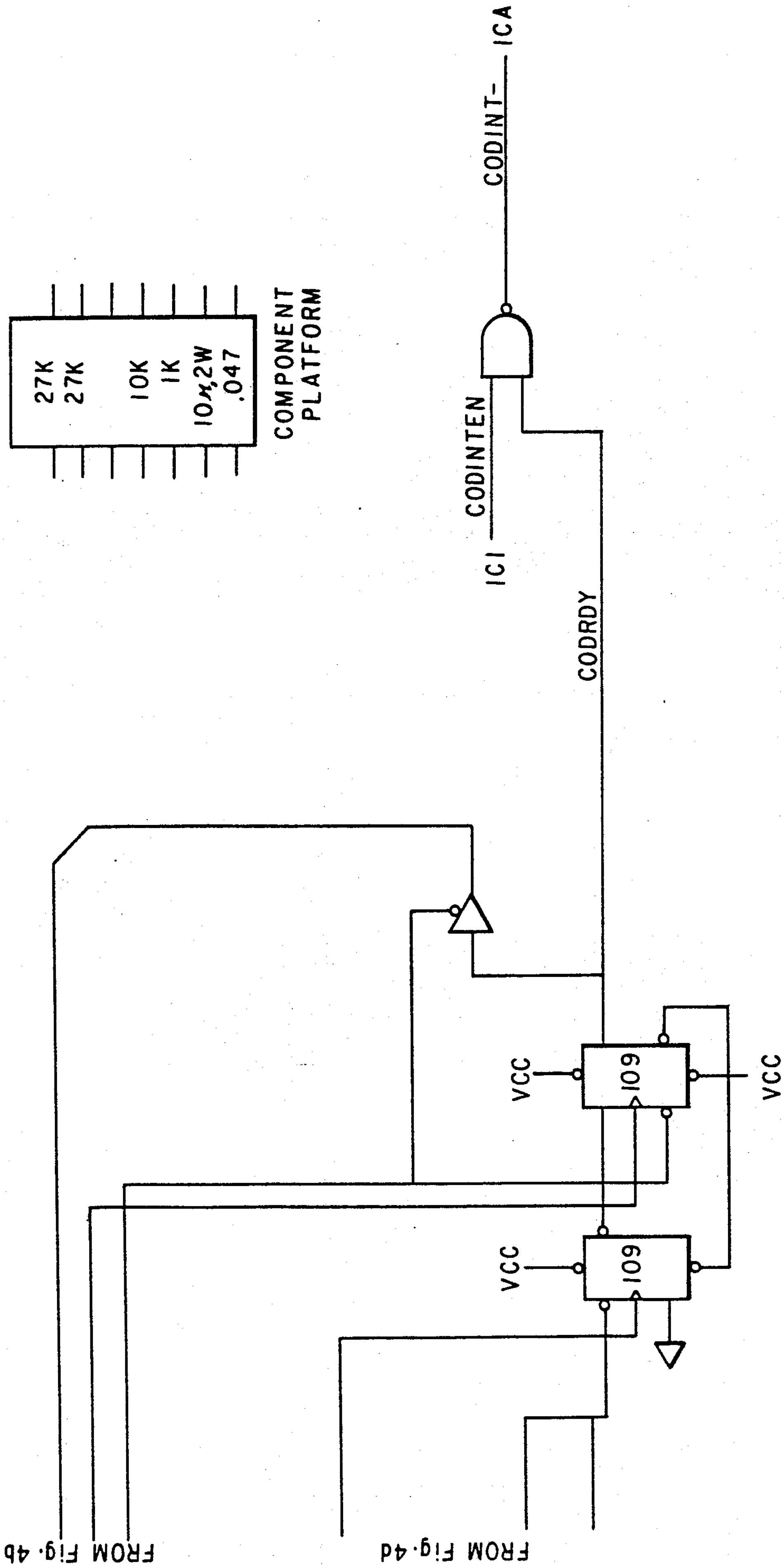
CODINT-
ICA
27K
27K
10K
1K
10Ω,2W
.047
COMPONENT
PLATFORM
CODINTEN
ICI
CODRDY
VCC
109
VCC
VCC
109
FROM Fig. 4b
FROM Fig. 4d

Fig. 4e

European Patent Office

**EUROPEAN SEARCH REPORT**

0116324

Application number

EP 84 10 0820

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | NAECON 1982 (PROCEEDINGS OF THE IEEE NATIONAL AEROSPACE AND ELECTRONICS CONFERENCE), 18th-20th May 1982, vol. 3, pages 1095-1101, IEEE, New York, USA T. SCHALK et al.: "Low cost word recognition using programmable VLSI" * Paragraph 2.3: "Similarity measure"; page 1097, right-hand column, lines 20-36; paragraph 2.5: "Decision strategy"; page 1099, left-hand column, lines 1-10 * --- | 1,2,4, 5,8,9 | G 10 L 1/04 |
| X | ICASSP 81 (IEEE INTERNATIONAL CONFERENCE ON ACOUSTICS, SPEECH AND SIGNAL PROCESSING), Atlanta, USA, 30th March - 1st April 1981, vol. 2, pages 733-735, IEEE, New York, USA D.P. McCULLOUGH: "Variations on Itakura's spectral match score" * Page 734: "Average LPC" * --- -/- | 1 | TECHNICAL FIELDS SEARCHED (Int. Cl. 3) G 10 L 1/04 |

The present search report has been drawn up for all claims

| Place of search | Date of completion of the search | Examiner |
|---|---|---|
| THE HAGUE | 09-05-1984 | ARMSPACH J.F.A.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent Office

# EUROPEAN SEARCH REPORT

0116324
Application number

EP 84 10 0820

Page 2

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl. 3) |
| A | ICASSP 82 (IEEE INTERNATIONAL CONFERENCE ON ACOUSTICS, SPEECH AND SIGNAL PROCESSING), Paris, FR., 3rd-5th May 1982, vol. 2, pages 899-902, IEEE, New York, USA<br>J.S. BRIDLE et al.: "An algorithm for connected word recognition" * Paragraph 2: "Scoring the best template sequence"<br>--- | 3-5 | |
| A | THE BELL SYSTEM TECHNICAL JOURNAL, vol. 61, no. 10, part 1, December 1982, pages 2971-2987, Murray Hill, New Jersey, USA<br>M.K. BROWN et al.: "On the use of energy in LPC-based recognition of isolated words" * Paragraph II: "Addition of features to the LPC space" *<br>----- | 1,9 | TECHNICAL FIELDS SEARCHED (Int. Cl. 3) |

The present search report has been drawn up for all claims

| Place of search | Date of completion of the search | Examiner |
|---|---|---|
| THE HAGUE | 09-05-1984 | ARMSPACH J.F.A.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82